(19) Europäisches Patentamt / European Patent Office / Office européen des brevets

(11) **EP 4 240 080 A1**

(12) **EUROPEAN PATENT APPLICATION**
published in accordance with Art. 153(4) EPC

(43) Date of publication:
**06.09.2023 Bulletin 2023/36**

(21) Application number: **21885061.8**

(22) Date of filing: **22.10.2021**

(51) International Patent Classification (IPC):
**H04W 72/04** $^{(2023.01)}$

(52) Cooperative Patent Classification (CPC):
**H04W 72/04; H04W 74/08**

(86) International application number:
**PCT/CN2021/125881**

(87) International publication number:
**WO 2022/089334 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.11.2020 CN 202011204991**

(71) Applicant: **Datang Mobile Communications Equipment Co., Ltd.**
**Beijing 100085 (CN)**

(72) Inventors:
• **FEI, Yongqiang**
  **Beijing 100085 (CN)**
• **XING, Yanping**
  **Beijing 100085 (CN)**
• **GAO, Xuejuan**
  **Beijing 100085 (CN)**

(74) Representative: **Studio Torta S.p.A.**
**Via Viotti, 9**
**10121 Torino (IT)**

(54) **CHANNEL TRANSMISSION METHOD AND APPARATUS, TERMINAL DEVICE, NETWORK DEVICE, AND STORAGE MEDIUM**

(57) Embodiments of the present application provide a channel transmission method and apparatus, a terminal device, a network device, and a storage medium. The method comprises: determining, when sending a physical uplink control channel (PUCCH) in an uplink initial bandwidth part (BWP), a first resource used for sending the PUCCH, and sending the PUCCH on the first resource, wherein the bandwidth range of the first resource does not exceed a maximum bandwidth supported by a first type of terminal device, and the maximum bandwidth supported by the first type of terminal device is less than or equal to a first preset value. The present application enables the bandwidth used by the first type of terminal device when sending the PUCCH in the uplink initial BWP to be within a bandwidth range supported by the first type of terminal device, so that the first type of terminal device can send the PUCCH correctly.

Determining a first resource for a physical uplink control channel (PUCCH) transmission in case that the PUCCH is transmitted in an uplink (UL) initial bandwidth part (BWP), where a bandwidth range of the first resource is less than or equal to a maximum bandwidth supported by a first type of terminal, and the maximum bandwidth supported by the first type of terminal is less than or equal to a first preset value — 101

Transmitting the PUCCH on the first resource — 102

**FIG. 2**

EP 4 240 080 A1

**Description**

**CROSS-REFERENCE TO RELATED APPLICATION**

The present application claims priority to Chinese patent application No. 2020112049917 filed on November 02, 2020, entitled "Channel Transmission Method and Apparatus, Terminal Device, Network Device, and Storage Medium", which is hereby incorporated by reference in its entirety.

**FIELD**

The present application relates to the field of communication technologies, and in particular, to methods and apparatuses for channel transmission, a terminal, a network side device, and a storage medium.

**BACKGROUND**

In a fifth generation mobile network (5G) new radio (NR) system, a user equipment (UE) may only receive downlink information in a downlink initial bandwidth part (DL initial BWP) and transmit uplink information in an uplink initial bandwidth part (UL initial BWP) before successfully accessing a network side device and obtaining a user-specific radio resource control (RRC) configuration configured by the network side device for it. For the case where a carrier frequency of the network side device is below 6GHz, which is also referred to as a frequency range 1 (FR1), the bandwidth of the DL initial BWP is generally less than or equal to 20MHz, and the bandwidth of the UL initial BWP is not limited and may be larger than 20MHz.

The NR system is about to provide a support to serve a reduced capability (RedCap) UE. In order to pursue lower complexity and cost, RedCap UE only supports a narrow bandwidth, for example, its bandwidth is less than or equal to 20MHz. As such, if the RedCap UE still uses the traditional UL initial BWP, it may fail to correctly transmit an uplink channel, such as a physical uplink control channel (PUCCH), since the bandwidth of the RedCap UE is smaller than traditional UL initial BWP.

**SUMMARY**

Embodiments of the present application provide methods and apparatuses for channel transmission, a terminal, a network side device, and a storage medium, which solve the problem that a reduced capability (RedCap) user equipment (UE) fails to correctly transmit an uplink channel, such as a physical uplink control channel (PUCCH), in an uplink initial bandwidth part (UL initial BWP) since a frequency interval between two hops for the PUCCH is larger than the maximum bandwidth of the RedCap UE.

Embodiments of the present application provide the following solutions.

An embodiment of the present application provides a method for channel transmission, implemented at a first type of terminal, including:

determining a first resource for physical uplink control channel (PUCCH) transmission in case that the PUCCH is transmitted in an uplink (UL) initial bandwidth part (BWP), where a bandwidth range of the first resource is less than or equal to a maximum bandwidth supported by the first type of terminal, and the maximum bandwidth supported by the first type of terminal is less than or equal to a first preset value; and
transmitting the PUCCH in the first resource.

In an embodiment, the first resource includes any one of the following items:

a resource for PUCCH transmission without frequency hopping; or
a resource for PUCCH transmission with frequency hopping, where a frequency interval between a first hop and a second hop is less than or equal to the maximum bandwidth supported by the first type of terminal.

In an embodiment, in case that the first resource is the resource for PUCCH transmission without frequency hopping, the determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;

determining the first resource for the first type of terminal to transmit the PUCCH based on a frequency location of a physical downlink shared channel (PDSCH) that is fed back by the first type of terminal in the PUCCH;

determining the first resource for the first type of terminal to transmit the PUCCH based on a frequency location of scheduling downlink control information (DCI) corresponding to a physical downlink shared channel (PDSCH) that is fed back by the first type of terminal in the PUCCH;

determining the first resource for the first type of terminal to transmit the PUCCH based on a frequency location of a given uplink channel transmitted by the first type of terminal; and

determining the first resource for the first type of terminal to transmit the PUCCH based on indication information carried in a contention resolution message transmitted by a network side device during a random access procedure of the first type of terminal.

In an embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In an embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a first physical resource block (PRB) for PUCCH transmission to be the same as a frequency domain starting location of a first control channel element (CCE) for the DCI;

enabling a frequency location of an L-th PRB for PUCCH transmission to be the same as a frequency domain starting location of a K-th CCE for the DCI, where L and K are integers larger than 0, the frequency location of the L-th PRB for PUCCH transmission is a location determined based on the frequency domain starting location of the K-th CCE for the DCI and a second frequency offset, and the second frequency offset is predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH-8}}{N_{CS}} \right\rfloor$;

where $RB_{BWP}^{offset}$ is the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in the random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ based on the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH} - 8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of an uplink initial BWP.

In an embodiment, in case that the first resource is the resource for PUCCH transmission with frequency hopping, the determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation on the initial frequency locations and the first bandwidth parameter $N_{RedCap}^{PUCCH}$, and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$ determining a frequency location corresponding to the second hop when the first type of terminal transmits PUCCH at $\left\lfloor \frac{r_{PUCCH}}{8} \right\rfloor = 0$ based on a first sub-a replaced relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH, where the fourth frequency offset is $N_{BWP}^{size} - N_{RedCap}^{PUCCH}$ ;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$ ;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$ .

In an embodiment, the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model includes:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model and a preset frequency offset.

In an embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining frequency locations corresponding to the first hop and the second hop when the first type of terminal transmits PUCCH based on the modulo operation results and a preset frequency offset.

In an embodiment, the preset frequency offset is any one or more of the following items:

$\left\lceil \dfrac{8}{N_{CS}} \right\rceil + 1$ , where $N_{CS}$ represents a total number of initial cyclic shift indices; and

a frequency location of a first physical resource block (PRB) or a central PRB of a resource occupied by a first message or a third message, where the first message is a random access request message or a random access pilot signal, and the third message is a connection establishment request message in a random access procedure.

In an embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

An embodiment of the present application provides a method for channel transmission, including:

transmitting first indication information to a first type of terminal, where the first indication information is used to indicate a first resource for physical uplink control channel (PUCCH) transmission in case that the first type of terminal transmits the PUCCH in an uplink (UL) initial bandwidth part (BWP); and
receiving the PUCCH transmitted by the first type of terminal on the first resource;
where a bandwidth range of the first resource is less than or equal to a maximum bandwidth supported by the first type of terminal, and the maximum bandwidth supported by the first type of terminal is less than or equal to a first preset value.

In an embodiment, the first indication information is used to indicate any one of the following resources:

a resource for PUCCH transmission without frequency hopping; or
a resource for PUCCH transmission with frequency hopping, where a frequency interval between a first hop and a second hop is less than or equal to the maximum bandwidth supported by the first type of terminal.

In an embodiment, in case that the first resource is the resource for PUCCH transmission without frequency hopping, determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;
determining the first resource for the first type of terminal to transmit the PUCCH based on a frequency location of a physical downlink shared channel (PDSCH) that is fed back by the first type of terminal in the PUCCH;
determining the first resource for the first type of terminal to transmit the PUCCH based on a frequency location of scheduling downlink control information (DCI) corresponding to a physical downlink shared channel (PDSCH) that is fed back by the first type of terminal in the PUCCH;
determining the first resource for the first type of terminal to transmit the PUCCH based on a frequency location of a given uplink channel transmitted by the first type of terminal; and
determining the first resource for the first type of terminal to transmit the PUCCH based on indication information carried in a contention resolution message transmitted by a network side device during a random access procedure of the first type of terminal.

In an embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;
determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In an embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a first physical resource block (PRB) for PUCCH transmission to be the same as a frequency domain starting location of a first control channel element (CCE) for the DCI;
enabling a frequency location of an L-th PRB for PUCCH transmission to be the same as a frequency domain starting location of a K-th CCE for the DCI, where L and K are integers larger than 0;

enabling the frequency location of the L-th PRB for PUCCH transmission to be a location determined based on the frequency domain starting location of the K-th CCE for the DCI and a second frequency offset, the second frequency offset being predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - \quad RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ through the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case that the first resource is the resource for PUCCH transmission with frequency hopping, determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to

$$\left\lceil \frac{r_{PUCCH}}{8} \right\rceil = 0$$
among relationship models used to determine a frequency location corresponding to the second hop when the second type of terminal transmits PUCCH with the first bandwidth parameter $N^{PUCCH}_{RedCap}$, determining a frequency location corresponding to the second hop when the first type of terminal transmits PUCCH at $\left\lceil \frac{r_{PUCCH}}{8} \right\rceil = 0$ based on a first sub-a replaced relationship model, and determining a frequency location corresponding to the second hop when the first type of terminal transmits PUCCH at $\left\lceil \frac{r_{PUCCH}}{8} \right\rceil = 1$ based on a fourth frequency offset and a second sub-relationship model corresponding to $\left\lceil \frac{r_{PUCCH}}{8} \right\rceil = 1$ among the relationship models used to determine the frequency location corresponding to the second hop when the second type of terminal transmits PUCCH, where the fourth frequency offset is $N^{size}_{BWP} - N^{PUCCH}_{RedCap}$ ;

determining a possible value of the first frequency offset $RB^{offset}_{BWP}$ in the relationship model used to determine frequency locations corresponding to the first hop and the second hop when the first type of terminal transmits PUCCH and a possible value of $RB^{offset}_{BWP}$ used by the second type of terminal to be different, where the possible value $RB^{offset}_{BWP}$ corresponding to the first type of terminal enables the frequency interval between the first hop and the second hop for PUCCH transmission to be less than or equal to $N^{size}_{RedCap}$ ; and

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N^{size}_{RedCap}$ .

In an embodiment, the replacing the bandwidth parameter $N^{size}_{BWP}$ of the UL initial BWP in the relationship model used to determine frequency locations corresponding to the first hop and the second hop when the second type of terminal transmits PUCCH with the first bandwidth parameter $N^{PUCCH}_{RedCap}$, and determining frequency locations corresponding to the first hop and the second hop when the first type of terminal transmits PUCCH based on the replaced relationship model includes:

replacing the bandwidth parameter $N^{size}_{BWP}$ of the UL initial BWP in the relationship model used to determine frequency locations corresponding to the first hop and the second hop when the second type of terminal transmits PUCCH with the first bandwidth parameter $N^{PUCCH}_{RedCap}$, and determining frequency locations corresponding to the first hop and the second hop when the first type of terminal transmits PUCCH based on the replaced relationship model and a preset frequency offset.

In an embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N^{PUCCH}_{RedCap}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining frequency locations corresponding to the first hop and the second hop when the first type of terminal transmits PUCCH based on modulo operation results and a preset frequency offset.

In an embodiment, the preset frequency offset is any one or more of the following items:

$\left\lceil \frac{8}{N_{CS}} \right\rceil + 1$, where $N_{cs}$ represents a total number of initial cyclic shift indices; and

a frequency location of a first physical resource block (PRB) or a central PRB of a resource occupied by a first message or a third message, where the first message is a random access request message or a random access pilot signal, and the third message is a connection establishment request message in the random access procedure.

In an embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

An embodiment of the present application provides an apparatus for channel transmission, which is applied to a first type of terminal, including:

a determining module, used to determine a first resource for physical uplink control channel (PUCCH) transmission in case that the PUCCH is transmitted in an uplink (UL) initial bandwidth part (BWP), where a bandwidth range of the first resource is less than or equal to a maximum bandwidth supported by the first type of terminal, and the maximum bandwidth supported by the first type of terminal is less than or equal to a first preset value; and
a first transmitting module, used to transmit the PUCCH on the first resource.

An embodiment of the present application provides an apparatus for channel transmission, including:

a second transmitting module, used to transmit first indication information to a first type of terminal, where the first indication information is used to indicate a first resource for physical uplink control channel (PUCCH) transmission in case that the first type of terminal transmits the PUCCH in an uplink (UL) initial bandwidth part (BWP); and
a receiving module, used to receive the PUCCH transmitted by the first type of terminal on the first resource;
where a bandwidth range of the first resource is less than or equal to a maximum bandwidth supported by the first type of terminal, and the maximum bandwidth supported by the first type of terminal is less than or equal to a first preset value.

An embodiment of the present application provides a terminal, including:

a processor,
a memory storing a computer program, where the computer program, when executed by the processor, causes the processor to perform the following operations:

determining a first resource for physical uplink control channel (PUCCH) transmission in case that the PUCCH is transmitted in an uplink (UL) initial bandwidth part (BWP), where a bandwidth range of the first resource is less than or equal to a maximum bandwidth supported by the first type of terminal, and the maximum bandwidth supported by the first type of terminal is less than or equal to a first preset value; and
transmitting the PUCCH on the first resource.

In an embodiment, the first resource includes any one of the following items:

a resource for PUCCH transmission without frequency hopping; or
a resource for PUCCH transmission with frequency hopping, where a frequency interval between a first hop and a second hop is less than or equal to the maximum bandwidth supported by the first type of terminal.

In an embodiment, in case that the first resource is the resource for PUCCH transmission without frequency hopping, the determining the first resource for PUCCH transmission includes any one or more of:

    determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;

    determining the first resource for the first type of terminal to transmit the PUCCH based on a frequency location of a physical downlink shared channel (PDSCH) that is fed back by the first type of terminal in the PUCCH;

    determining the first resource for the first type of terminal to transmit the PUCCH based on a frequency location of scheduling downlink control information (DCI) corresponding to a physical downlink shared channel (PDSCH) that is fed back by the first type of terminal in the PUCCH;

    determining the first resource for the first type of terminal to transmit the PUCCH based on a frequency location of a given uplink channel transmitted by the first type of terminal;

    determining the first resource for the first type of terminal to transmit the PUCCH based on indication information carried in a contention resolution message transmitted by a network side device during a random access procedure of the first type of terminal.

In an embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

    determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

    determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In an embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

    enabling a frequency location of a first physical resource block (PRB) for PUCCH transmission to be the same as a frequency domain starting location of a first control channel element (CCE) for the DCI;

    enabling a frequency location of an L-th PRB for PUCCH transmission to be the same as a frequency domain starting location of a K-th CCE for the DCI, where L and K are integers larger than 0;

    enabling the frequency location of the L-th PRB for PUCCH transmission to be a location determined based on the frequency domain starting location of the K-th CCE for the DCI and a second frequency offset, the second frequency offset being predefined and/or indicated by the network side device;

    determining the first frequency offset $RB_{BWP}^{offset}$ based on the frequency domain starting location of the K-th CCE for the DCI and determining the frequency location of the first PRB for PUCCH transmission based on a first relationship model

$$RB_{BWP}^{offset} + \left\lfloor \frac{r_{PUCCH}}{N_{CS}} \right\rfloor \quad \text{or} \quad N_{BWP}^{size} - 1 - RB_{BWP}^{offset} - \left\lfloor \frac{r_{PUCCH} - 8}{N_{CS}} \right\rfloor$$

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ based on the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH} - 8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case that the first resource is the resource for PUCCH transmission with frequency hopping, the determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$ , determining a frequency location corresponding to the second hop when the first type of terminal transmits PUCCH at $\left\lfloor \frac{r_{PUCCH}}{8} \right\rfloor = 0$ based on a first sub-a replaced relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lceil \frac{r_{PUCCH}}{8} \right\rceil = 1$ among the relationship models used to determine the frequency location corresponding to the second hop when the second type of terminal transmits PUCCH, where the fourth frequency offset is $N_{BWP}^{size} - N_{RedCap}^{PUCCH}$;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$.

In an embodiment, the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model includes:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model and a preset frequency offset.

In an embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining frequency locations corresponding to the first hop and the second hop when the first type of terminal transmits PUCCH based on the modulo operation results and a preset frequency offset.

In an embodiment, the preset frequency offset is any one or more of the following items:

$\left\lceil \frac{8}{N_{cs}} \right\rceil + 1$, where $N_{cs}$ represents a total number of initial cyclic shift indices; and

a frequency location of a first physical resource block (PRB) or a central PRB of a resource occupied by a first message or a third message, where the first message is a random access request message or a random access pilot signal, and the third message is a connection establishment request message in a random access procedure;

In an embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

An embodiment of the present application provides a network side device, including:

a processor,
a memory storing a computer program, where the computer program, when executed by the processor, causes the processor to perform the following steps:

transmitting first indication information to a first type of terminal, where the first indication information is used to indicate a first resource for physical uplink control channel (PUCCH) transmission in case that the first type of terminal transmits the PUCCH in an uplink (UL) initial bandwidth part (BWP); and
receiving the PUCCH transmitted by the first type of terminal on the first resource;
where a bandwidth range of the first resource is less than or equal to a maximum bandwidth supported by the first type of terminal, and the maximum bandwidth supported by the first type of terminal is less than or equal to a first preset value.

In an embodiment, the first indication information is used to indicate any one of the following resources:

a resource for PUCCH transmission without frequency hopping; or
a resource for PUCCH transmission with frequency hopping, where a frequency interval between a first hop and a second hop is less than or equal to the maximum bandwidth supported by the first type of terminal.

In an embodiment, in case that the first resource is the resource for PUCCH transmission without frequency hopping, determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;
determining the first resource for the first type of terminal to transmit the PUCCH based on a frequency location of a physical downlink shared channel (PDSCH) that is fed back by the first type of terminal in the PUCCH;
determining the first resource for the first type of terminal to transmit the PUCCH based on a frequency location of scheduling downlink control information (DCI) corresponding to a physical downlink shared channel (PDSCH) that is fed back by the first type of terminal in the PUCCH;
determining the first resource for the first type of terminal to transmit the PUCCH based on a frequency location of a given uplink channel transmitted by the first type of terminal; and
determining the first resource for the first type of terminal to transmit the PUCCH based on indication information carried in a contention resolution message transmitted by a network side device during a random access procedure of the first type of terminal.

In an embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;
determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In an embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a first physical resource block (PRB) for PUCCH transmission to be the same as a frequency domain starting location of a first control channel element (CCE) for the DCI;
enabling a frequency location of an L-th PRB for PUCCH transmission to be the same as a frequency domain starting location of a K-th CCE for the DCI where L and K are integers larger than 0;
enabling the frequency location of the L-th PRB for PUCCH transmission to be a location determined based on the frequency domain starting location of the K-th CCE for the DCI and a second frequency offset, the second frequency offset being predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 -$

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in a random access procedure;
enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is a predefined and/or indicated by a network side device;

determining the first frequency offset $RB_{BWP}^{offset}$ through the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In an embodiment, in case that the first resource is the resource for PUCCH transmission with frequency hopping, determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \dfrac{r_{PUCCH}}{8} \right\rfloor = 0$ among relationship models used to determine a frequency location corresponding to a second hop when the second type of terminal transmits PUCCH with the first bandwidth parameter $N_{RedCap}^{PUCCH}$, determining a frequency location corresponding to the second hop when the first type of terminal transmits PUCCH at $\left\lfloor \dfrac{r_{PUCCH}}{8} \right\rfloor = 0$ based on a first sub-a replaced relationship model, and determining a frequency location corresponding to the second hop when the first type of terminal transmits PUCCH at $\left\lfloor \dfrac{r_{PUCCH}}{8} \right\rfloor = 1$ based on a fourth frequency offset and a second sub-relationship model corresponding to $\left\lfloor \dfrac{r_{PUCCH}}{8} \right\rfloor = 1$ among the relationship models used to determine the frequency location corresponding to the second hop when the second type of terminal transmits PUCCH, where the fourth frequency offset is $N_{BWP}^{size} - N_{RedCap}^{PUCCH}$ ;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$ ; and

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$ .

In an embodiment, the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model includes:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model and a preset frequency offset.

In an embodiment, determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining frequency locations corresponding to the first hop and the second hop when the first type of terminal transmits PUCCH based on modulo operation results and a preset frequency offset.

In an embodiment, the preset frequency offset is any one or more of the following items:

$\left\lceil \frac{8}{N_{CS}} \right\rceil + 1$ , where $N_{cs}$ represents a total number of initial cyclic shift indices; and

a frequency location of a first physical resource block (PRB) or a central PRB of a resource occupied by a first message or a third message, where the first message is a random access request message or a random access pilot signal, and the third message is a connection establishment request message in the random access procedure;

In an embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

An embodiment of the present application provides a non-transitory computer-readable storage medium storing a computer program, where the computer program, when executed by a processor, causes the processor to perform the methods for channel transmission.

By the methods and apparatuses for channel transmission, the terminal, the network side device, and storage medium according to the embodiments of the present application, for a first type of terminal, a maximum bandwidth supported by the first type of terminal is less than or equal to the first preset value, in case that the first type of terminal transmits the PUCCH in the UL initial BWP, the bandwidth range of the first resource for PUCCH transmission is determined to be less than or equal to the maximum bandwidth supported by the first type of terminal, the bandwidth in which the first type of terminal transmits the PUCCH is within the bandwidth range supported by the first type of terminal, the first type of terminal can transmit the PUCCH correctly, and the problem that the first type of terminal fails to transmit the PUCCH correctly in the UL initial BWP since a frequency interval between two hops for the PUCCH transmission is larger than the maximum bandwidth of the first type of terminal is solved.

## BRIEF DESCRIPTION OF THE DRAWINGS

In order to clearly illustrate solutions of the present application or the related art, the drawings used in the descriptions of the embodiments or the related art are briefly described below. The drawings in the following description are only certain embodiments of the present application, and other drawings can be obtained according to these drawings without creative work for those skilled in the related art.

FIG. 1 is a schematic diagram of a common PUCCH resource predefined in the related art;

FIG. 2 is a schematic flow chart of a method for channel transmission implemented at a terminal according to an embodiment of the present application;

FIG. 3 is a schematic flow chart of a method for channel transmission implemented at a network side device according to an embodiment of the present application;

FIG. 4 is a schematic diagram of a use scenario for the present application according to an embodiment of the present application;

FIG. 5 is a schematic diagram of an example of PUCCH transmission without frequency hopping according to an embodiment of the present application;

FIG. 6 is a schematic diagram of another example of PUCCH transmission without frequency hopping according to an embodiment of the present application;

FIG. 7 is a schematic diagram of an example of PUCCH transmission with frequency hopping in a RedCap according to an embodiment of the present application;

FIG. 8 is a schematic diagram of a forced retuning between UL and UL on an uplink frequency band in a frequency division duplexing (FDD) system;

FIG. 9 is a schematic diagram of an example of PUCCH transmission with frequency hopping in a RedCap according to an embodiment of the present application;

FIG. 10 is a schematic diagram of another example of PUCCH transmission with frequency hopping in a RedCap according to an embodiment of the present application;

FIG. 11 is a schematic diagram of a forced retuning between DL and UL in a time division duplexing (TDD) system;

FIG. 12 is a schematic block diagram of an apparatus for channel transmission applied to a terminal according to an embodiment of the present application;

FIG. 13 is a schematic block diagram of an apparatus for channel transmission applied to a network side device according to an embodiment of the present application;

FIG. 14 is a schematic structural diagram of a terminal according to an embodiment of the present application;

FIG. 15 is a schematic structural diagram of a network side device according to an embodiment of the present application.

## DETAILED DESCRIPTION

The solutions according to the present application are clearly described below in combination with the accompanying drawings in the embodiments of the present application. The described embodiments are a part of the embodiments of the present application, rather than all of the embodiments. All other embodiments obtained by a person skilled in the art based on the embodiments in the present application without creative effort are within the protection scope of the present application.

In a 5G new radio (NR) system, a user equipment (UE) may only receive downlink information in a downlink initial bandwidth part (DL initial BWP) and transmit uplink information in an uplink initial bandwidth part (UL initial BWP) before successfully accessing a network side device and obtaining a user-specific radio resource control (RRC) configuration configured by the network side device for it. For the case where a carrier frequency of the network side device is sub 6GHz, which also referred to as a frequency range 1 (FR1), the bandwidth of the DL initial BWP is always less than or equal to 20MHz, and the bandwidth of the UL initial BWP is not limited and may be larger than 20MHz.

The NR system is about to provide a support to serve a reduced capability (RedCap) UE. In order to pursue lower complexity and cost, RedCap UE only supports a narrow bandwidth, for example, its bandwidth is less than or equal to 20MHz. As such, if the RedCap UE still uses the traditional UL initial BWP, it may fail to correctly transmit an uplink channel, such as a physical uplink control channel (PUCCH), since the bandwidth of the RedCap UE is smaller than traditional UL initial BWP.

User-specific RRC configuration may configure suitable PUCCH transmission resources for the RedCap UE. However, before obtaining the user-specific RRC configuration, the UE may only obtain a PUCCH resource set in a predefined mode. The predefined PUCCH resource set may be considered as a "common PUCCH" resource set since it is the same for all UEs. In the predefined PUCCH resource set, each PUCCH resource is "frequency hopping", and includes both a first hop and a second hop, and each PUCCH is transmitted in a "frequency hopping" mode.

For example, in case that the UE receives the downlink control information (DCI) carried in a physical downlink control channel (PDCCH) from the network side device, and receives a physical downlink shared channel (PDSCH) according to the DCI, the UE is required to feed back in PUCCH whether the PDSCH is successfully received. The UE determines    an    index    of    used    PUCCH    resource    in    the    PUCCH    resource    set    based    on    the    formula

$$r_{PUCCH} = \left\lceil \frac{2 * n_{CCE,0}}{N_{CCE}} \right\rceil + 2 \triangle_{PRI}$$ , where $r_{PUCCH}$ represents a PUCCH resource index and is determined based on a PUCCH resource indicator field in the DCI scheduling PDSCH, $N_{CCE}$ is a number of control channel elements (CCEs) in a control resource set (CORESET) of PDCCH reception, $n_{CCE,0}$ is an index of a first CCE for PDCCH reception, and $\triangle_{PRI}$ is a value of a PUCCH resource indicator field in the DCI. After determining the $r_{PUCCH}$, the UE determines the PUCCH resource carrying the feedback information according to the following rules:

in case of $\left\lfloor \frac{r_{PUCCH}}{8} \right\rfloor = 0$ , a first physical resource block (PRB) index of the PUCCH transmission in a first hop (hop1) is $RB_{BWP}^{offset} + \left\lfloor \frac{r_{PUCCH}}{N_{CS}} \right\rfloor$ , and a first PRB index of the PUCCH transmission in a second hop (hop2) is

$N_{BWP}^{size} - 1 - RB_{BWP}^{offset} - \left\lfloor \frac{r_{PUCCH}}{N_{CS}} \right\rfloor$ ; and

in case of $\left\lfloor \frac{r_{PUCCH}}{8} \right\rfloor = 1$ , a first PRB index in the hop1 is $N_{BWP}^{size} - 1 - RB_{BWP}^{offset} - \left\lfloor \frac{r_{PUCCH}-8}{N_{CS}} \right\rfloor$ , and a

first PRB index in the hop2 is $RB_{BWP}^{offset} + \left\lfloor \frac{r_{PUCCH}-8}{N_{CS}} \right\rfloor$ , where $N_{BWP}^{size}$ represents (the total number of PRBs included in) the bandwidth of an uplink initial BWP, $N_{cs}$ represents a total number of initial cyclic shift indices,

$RB_{BWP}^{offset}$ is a predefined offset. The definitions for the above-mentioned PUCCH resource set and the involved parameters in the NR protocol are shown in Table 1 below.

Table 1

| PUCCH Index | PUCCH Format | Index of Starting Symbol | Number of Symbols | $RB_{BWP}^{offset}$ PRB offset | Initial Cyclic Shift Index Set |
|---|---|---|---|---|---|
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\left\lfloor \frac{N_{BWP}^{size}}{4} \right\rfloor$ | {0, 3, 6, 9} |

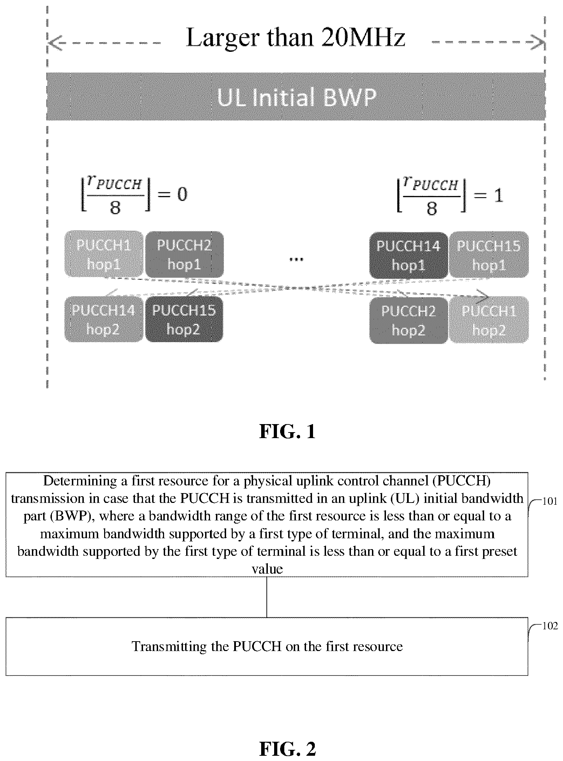

After receiving the PDSCH scheduled by the DCI, the UE determines the PUCCH resource for feeding back the PDSCH according to the above-mentioned predefined PUCCH resource set, frequency hopping rules, and indication information in the DCI. As shown an example in FIG. 1, it is assumed that the bandwidth of the UL initial BWP is larger than 20MHz, for the above-mentioned "common PUCCH", two hops for the PUCCH transmission are respectively distributed at the edge of the frequency band of the UL initial BWP instead of nearing the center frequency band due to its inherent frequency hopping property. In case that the bandwidth of the UL initial BWP is larger than 20MHz, the frequency interval between two hops of a PUCCH resource is likely to be larger than 20MHz. If the RedCap UE also transmits the PUCCH in the UL initial BWP, it is likely that the PUCCH cannot be transmitted correctly since the frequency interval between the two hops of the PUCCH resource is larger than the maximum bandwidth supported by the RedCap UE. For example, the RedCap UE may only transmit one of the two hops; or, the RedCap UE performs retuning after transmitting the first hop, and transmits the second hop after tuning the operating frequency to near the frequency for the second hop. However, in the procedure of tuning, the UE cannot perform any transmission, which results in the absence of some PUCCH symbols and the destruction of orthogonality. Embodiments of the present application provide methods and apparatuses for channel transmission, a terminal, a network side device, and a storage medium. In case that the RedCap UE transmits the PUCCH in the UL initial BWP, the bandwidth range of the first resource for PUCCH transmission is determined to be less than or equal to the maximum bandwidth supported by the RedCap UE, and then the bandwidth in which the RedCap UE transmits the PUCCH is within the bandwidth range supported by the RedCap UE, the RedCap UE can transmit the PUCCH correctly and the problem that the UE fails to transmit the PUCCH correctly in the UL initial BWP since a frequency interval between two hops for the PUCCH transmission is larger than the maximum bandwidth of the RedCap UE is solved. The methods and apparatuses for channel transmission, the terminal, the network side device, and the storage medium according to the present application are explained and described in detail below through specific embodiments.

The methods and the apparatuses are based on the same conception. Since the principles of the methods and the apparatuses to solve the problems are similar, the implementation of the apparatuses and methods can be referred to each other, and the similar part is not repeated.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. Each of these various systems includes a terminal and a network side device, and may further include a core network, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as user equipment (UE). A wireless terminal can communicate with one or more core networks (CN) via a radio access network (RAN), and the wireless terminal may be a mobile terminal, such as a mobile phone (or cellular phone) or a computer with mobile terminal, e.g., a portable mobile device, a pocket-sized mobile device, a hand-held mobile device, a computer-built mobile device or a vehicle-mounted mobile device, which exchanges language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal side device may also be called a system, a subscriber unit, a subscriber station, a mobile station, a mobile, a remote station, an access point, a remote terminal, an access terminal, a user terminal, a user agent, and a user device, which are not limited in the embodiments of the present application. Since the terminal and other network side devices (such as a core network side device, an access network side device (i.e. a base station)) together form a network being able to support communication, the terminal can be regarded as a network side device in the present application.

The network side device in the embodiments of the present application may be a base station which may include multiple cells providing services for the terminal, or the network side device may be a central unit (CU) or a distributed unit (DU). Depending on the specific application, the network side device may be called an access point, or may be a device in the access network that communicates with wireless terminal through one or more sectors on the air interface, or other names. Network side device may be used to exchange received air frames with internet protocol (IP) packets, and act as a router between wireless terminal and the rest of the access network, where the rest of the access network may include an IP communication network. The network side device may also coordinate attribute management for the air interface. For example, the network side device in the embodiments of the present application may be a base transceiver station (BTS) in a global system for mobile communications (GSM) system or a code division multiple access (CDMA), may be a node B in a wide-band code division multiple access (WCDMA), may be an evolutional node B (eNB or e-Node B) in a long term evolution (LTE) system, may be a 5G base station (gNB) in 5G network architecture (next generation system), may be a home evolved node B (HeNB), a relay node (relay node), a family base station (femto), a pico base station (pico), etc., which are not limited in the embodiments of the present application. In some network structures, a network side device may include a centralized unit (CU) node and a distributed unit (DU) node which may be geographically separated.

The term "and/or" in the embodiments of the present application describes the association relationship of associated objects, and indicates that there may be three kinds of relationships, for example, A and/or B, which may indicate that A exists alone, A and B exist simultaneously, and B exists alone. The character "j" generally indicates that the associated objects are an "or" relationship.

Reference throughout the specification to "one embodiment" or "an embodiment" means that a particular feature, structure, or property associated with the embodiment is included in at least one embodiment of the present application. Thus, "in one embodiment" or "in an embodiment" throughout the present application does not necessarily refer to the same embodiment. Furthermore, the particular feature, structure or property may be combined in any suitable manner in one or more embodiments.

The present application is described below in detail.

FIG. 2 is a schematic flow chart of a method for channel transmission implemented at a terminal according to an embodiment of the present application. As shown in FIG. 2, the method includes the following steps:

step 101, determining a first resource for a physical uplink control channel (PUCCH) transmission in case that the PUCCH is transmitted in an uplink (UL) initial bandwidth part (BWP), where a bandwidth range of the first resource is less than or equal to a maximum bandwidth supported by a first type of terminal, and the maximum bandwidth supported by the first type of terminal is less than or equal to a first preset value; and

step 102: transmitting the PUCCH on the first resource.

In the present embodiment, the first type of terminal may be a reduced capability (RedCap) UE. For example, the maximum bandwidth supported by the RedCap UE is less than or equal to the first preset value, and the first preset value may be a predefined value or a given value according to the actual situation. For example, the first preset value may be 20MHz or 40MHz, for example, the maximum bandwidth supported by the first type of terminal may be 20MHz or 40MHz.

In the present embodiment, in case that the first type of terminal transmits the PUCCH in the UL initial BWP, by defining the frequency range in which the PUCCH is transmitted, the frequency range in which the PUCCH is transmitted is less than or equal to the maximum bandwidth supported by the first type of terminal, and then the bandwidth in which the first type of terminal transmits the PUCCH is within the bandwidth supported by the first type of terminal and the first type of terminal can transmit the PUCCH correctly.

In the present embodiment, in case of determining that the bandwidth range of the first resource for PUCCH transmission is less than or equal to the maximum bandwidth supported by the first type of terminal, there are two implementations. In the two implementations, the first resource for PUCCH transmission includes any one of the following items: (1) a resource for PUCCH transmission without frequency hopping, which means that in case of transmitting PUCCH, the PUCCH is not transmitted in two hops; (2) a resource for PUCCH transmission with frequency hopping, and a frequency interval between a first hop and a second hop is less than or equal to the maximum bandwidth supported by the first type of terminal.

In actual use case, whether to perform PUCCH transmission with frequency hopping or PUCCH transmission without frequency hopping may be determined in a predefined mode, or a mode indicated by a network side device, or in a combination of both the predefined mode and the mode indicated by the network side device.

For the predefined mode, for example, it may be predefined directly through a protocol that the RedCap UE does not perform the PUCCH transmission with frequency hopping until obtaining user-specific RRC configuration; or that in case that the bandwidth of LTL BWP (such as UL initial BWP) of the RedCap UE is larger than a threshold value (such as a bandwidth supported by the RedCap UE), the PUCCH transmission with frequency hopping is not performed, otherwise, the PUCCH transmission with frequency hopping is performed. No any indication from the network side device is required in the predefined mode and the indication overhead can be saved.

For the mode indicated by the network side device, it can be determined whether to perform the PUCCH transmission with frequency hopping by receiving frequency hopping indication information transmitted by a gNB. For example, the frequency hopping indication information is used for indicating whether the RedCap UE transmits the PUCCH in frequency hopping manner and is carried in a system information block (SIB1) for being broadcasted and transmitted or may be carried in the downlink control information (DCI). Although the mode indicated by the network side device is more flexible, downlink indication overhead is required.

For the combination of both predefined mode and the mode indicated by the network side device, in case that the bandwidth of UL BWP (such as UL initial BWP) of the RedCap UE is larger than a threshold value (such as the maximum bandwidth supported by the RedCap UE), the PUCCH is not transmitted with frequency hopping; and in case that the bandwidth of UL BWP of the RedCap UE is less than or equal to the threshold value, it is determined whether to perform the PUCCH transmission with frequency hopping based on the frequency hopping indication information from the gNB. The combination of both predefined mode and the mode indicated by the network side device combines the advantages of indication overhead saving and flexibility, and is a relatively compromised solution.

After the first resource is determined in the manner as described above, that is, after the first resource is determined based on that a bandwidth range of the first resource for PUCCH transmission is less than or equal to the maximum bandwidth supported by the first type of terminal, the first type of terminal may transmit the PUCCH on the first resource, and then the network side device may receive the PUCCH on the first resource.

The method for channel transmission according to the embodiment of the present application is implemented at the first type of terminal, and the maximum bandwidth supported by the first type of terminal is less than or equal to the first preset value. In case that the first type of terminal transmits the PUCCH in the UL initial BWP, the bandwidth range of the first resource for PUCCH transmission is determined to be less than or equal to the maximum bandwidth supported by the first type of terminal, and then the bandwidth in which the first type of terminal transmits the PUCCH is within the bandwidth range supported by the first type of terminal, the first type of terminal can transmit the PUCCH correctly and the problem that the first type of terminal fails to transmit the PUCCH correctly in the UL initial BWP since a frequency interval between two hops for the PUCCH transmission is larger than the maximum bandwidth of the first type of terminal is solved.

Based on the foregoing embodiments, in the present embodiment, the first resource includes any one of the following items:

a resource for PUCCH transmission without frequency hopping;
a resource for PUCCH transmission with frequency hopping, where a frequency interval between a first hop and a second hop is less than or equal to the maximum bandwidth supported by the first type of terminal.

In the present embodiment, in case of determining the first resource for PUCCH transmission, the first resource for PUCCH transmission includes any one of the following items: (1) a resource for PUCCH transmission without frequency hopping, which means that in case of transmitting PUCCH, the PUCCH is transmitted without two hops; (2) a resource for PUCCH transmission with frequency hopping, where a frequency interval between a first hop and a second hop is less than or equal to the maximum bandwidth supported by the first type of terminal.

In actual use case, whether to perform PUCCH transmission with frequency hopping or PUCCH transmission without frequency hopping may be determined in a predefined mode, or a mode indicated by a network side device, or in a combination of both the predefined mode and the mode indicated by the network side device.

For the predefined mode, for example, it may be predefined directly through a protocol that the RedCap UE does not perform the PUCCH transmission with frequency hopping before obtaining user-specific RRC configuration; or that in case that the bandwidth of LTL BWP (such as UL initial BWP) of the RedCap UE is larger than a threshold value (such as the maximum bandwidth supported by the RedCap UE), the PUCCH transmission with frequency hopping is not performed, otherwise, the PUCCH transmission with frequency hopping is performed. No any indication from the network side device is required in the predefined mode and the indication overhead can be saved.

For the mode indicated by the network side device, it may be determined whether to perform the PUCCH transmission with frequency hopping by receiving frequency hopping indication information transmitted by a gNB. For example, the frequency hopping indication information is used for indicating whether the RedCap UE transmits the PUCCH with frequency hopping and is carried in a system information block (SIB 1) for being broadcasted and transmitted or may be carried in the downlink control information (DCI). Although the mode indicated by the network side device is more flexible, downlink indication overhead is required.

For the combination of both predefined mode and the mode indicated by the network side device, in case that the bandwidth of UL BWP (such as UL initial BWP) of the RedCap UE is larger than a threshold value (such as the maximum bandwidth supported by the RedCap UE), the PUCCH is not transmitted with frequency hopping; and in case that the bandwidth of LTL BWP of the RedCap UE is less than or equal to the threshold value, it is determined whether to perform the PUCCH transmission with frequency hopping based on the frequency hopping indication information from the gNB. The combination of both predefined mode and the mode indicated by the network side device combines the advantages of indication overhead saving and flexibility, and is a relatively compromised solution.

Based on the foregoing embodiments, in the present embodiment, in case that the first resource is the resource for PUCCH transmission without frequency hopping, the determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;

determining the first resource for the first type of terminal to transmit the PUCCH based on a frequency location of a physical downlink shared channel (PDSCH) that is fed back by the first type of terminal in the PUCCH;

determining the first resource for the first type of terminal to transmit the PUCCH based on a frequency location of scheduling downlink control information (DCI) corresponding to a physical downlink shared channel (PDSCH) that is fed back by the first type of terminal in the PUCCH;

determining the first resource for the first type of terminal to transmit the PUCCH based on a frequency location of a given uplink channel transmitted by the first type of terminal;

determining the first resource for the first type of terminal to transmit the PUCCH based on indication information carried in a contention resolution message transmitted by a network side device during a random access procedure of the first type of terminal.

In the present embodiment, in case that the first resource is the resource for PUCCH transmission without frequency hopping, the determining the first resource for PUCCH transmission includes any one or more of:

A, determining the first resource for the first type of terminal to transmit the PUCCH based on a frequency location corresponding to the first hop and/or the frequency location corresponding to the second hop when the second type of terminal transmits the PUCCH; where the maximum bandwidth supported by the second type of terminal is larger than the first preset value.

In the present embodiment, the second type of terminal and the first type of terminal are different terminals. For example, the first type of terminal may be a reduced capability terminal (such as RedCap UE), and the second type of terminal may a non-reduced capability terminal (such as non-RedCap UE) or a general terminal or a normal terminal or a traditional terminal.

In the present embodiment, in case that the first type of terminal transmits the PUCCH resource without frequency hopping, the first resource for PUCCH transmission may reuse a frequency location corresponding to the first hop (hop1) or the second hop (hop2) when the traditional normal terminal (the second type of terminal) transmits the PUCCH with frequency hopping. That is, the first resource for the first type of terminal to transmit the PUCCH can be determined based on the frequency location corresponding to the first hop and/or the frequency location corresponding to the second hop when the second type of terminal transmits the PUCCH.

For example, it is agreed to determine the frequency location for the PUCCH transmission without frequency hopping using the same method as a method for determining a frequency location corresponding to the hop1. For example, in case of $\left\lfloor\frac{r_{PUCCH}}{8}\right\rfloor = 0$, a first PRB index of the PUCCH transmission is $RB_{BWP}^{offset} + \left\lfloor\frac{r_{PUCCH}}{N_{CS}}\right\rfloor$; and in case of $\left\lfloor\frac{r_{PUCCH}}{8}\right\rfloor = 1$, a first PRB index of the PUCCH transmission is $N_{BWP}^{size} - 1 - RB_{BWP}^{offset} - \left\lfloor\frac{r_{PUCCH}-8}{N_{CS}}\right\rfloor$.

For example, it is agreed to determine the frequency location for the PUCCH transmission using the same method as a method for determining a frequency location corresponding to the hop2; or the first PRB index of the PUCCH transmission is determined using $RB_{BWP}^{offset} + \left\lfloor\frac{r_{PUCCH}}{N_{CS}}\right\rfloor$ (or $N_{BWP}^{size} - 1 - RB_{BWP}^{offset} - \left\lfloor\frac{r_{PUCCH}-8}{N_{CS}}\right\rfloor$) regardless of the value of $\left\lfloor\frac{r_{PUCCH}}{8}\right\rfloor$.

Through the above method, the location of the PUCCH resource can be directly determined, the implementation is simple, and the indication for the $r_{PUCCH}$ by the traditional DCI is reused, which simplifies the indication by the base station.

In case that the RedCap UE and the traditional UE completely share the above formulas and the parameter $RB_{BWP}^{offset}$, the PUCCH resources used by the RedCap UE and the traditional UE are likely to interlace. On the basis of the above methods, the PUCCH resources used by the RedCap UE and the traditional UE may be not interlaced by any of the following methods.

(1) An offset $RB_{Redcap}^{offset}$ is introduced for determining the frequency location for the PUCCH transmitted by the RedCap UE, for example:

in case of $\left\lfloor \frac{r_{PUCCH}}{8} \right\rfloor = 0$, a first PRB index of the PUCCH transmission is $RB_{Redcap}^{offset} + RB_{BWP}^{offset} + \left\lfloor \frac{r_{PUCCH}}{N_{CS}} \right\rfloor$; and

in case of $\left\lfloor \frac{r_{PUCCH}}{8} \right\rfloor = 1$, a first PRB index of the PUCCH transmission is $N_{BWP}^{size} - 1 - RB_{Redcap}^{offset} - RB_{BWP}^{offset} - \left\lfloor \frac{r_{PUCCH}-8}{N_{CS}} \right\rfloor$, one of the possible values of the $RB_{Redcap}^{offset}$ is $\left\lfloor \frac{8}{N_{CS}} \right\rfloor + 1$.

(2) A value of the $RB_{BWP}^{offset}$ used by the RedCap UE is enabled to be different from a value of the $RB_{BWP}^{offset}$ used by the traditional UE through a predefinition and/or indication method (although the same formula such as $RB_{BWP}^{offset} + \left\lfloor \frac{r_{PUCCH}}{N_{CS}} \right\rfloor$ is still used), for example, the value is 8;

it should be noted that this method makes the PUCCH resources used by the RedCap UE and the PUCCH resources used by the traditional UE not interlaced, which helps reduce the impact of the RedCap UE on the traditional UE and ensures that both the RedCap UE and the traditional UE have sufficient PUCCH capacity.

B, determining the first resource for the first type of terminal to transmit the PUCCH based on the frequency location of a physical downlink shared channel (PDSCH) that is fed back by the first type of terminal in the PUCCH;

in the present embodiment, the first resource for the first type of terminal to transmit the PUCCH is determined based on the frequency location of the PDSCH that is fed back by the first type of terminal in the PUCCH. For example, starting frequency locations of both the PDSCH and the PUCCH are the same, or a location of a central PRB of the PDSCH is the same as the starting frequency location of the PUCCH. The central PRB is the ((N+1)/2)-th PRB in N consecutive PRBs in case that N is an odd number; or the central PRB is the (N/2)-th or ((N/2)+1)-th PRB in the N consecutive PRBs in case that N is an even number.

C. determining the first resource for the first type of terminal to transmit the PUCCH based on the frequency location of scheduling DCI corresponding to the PDSCH that is fed back by the first type of terminal in the PUCCH;

in the present embodiment, the first resource for the first type of terminal to transmit the PUCCH is determined based on a frequency location of scheduling DCI corresponding to a PDSCH that is fed back by the first type of terminal in the PUCCH. After the UE is scheduled to receive PDSCH by a DCI, the UE feeds back whether the PDSCH reception is correct in the PUCCH, and the frequency location of the PUCCH may be determined based on the frequency location of the scheduling DCI corresponding to the PDSCH to be fed back. For example:

a frequency location of the first PRB for the PUCCH is the same as a frequency domain starting location of a first CCE for the DCI; or

a frequency location of the L-th PRB for the PUCCH is the same as a frequency domain start position of the K-th CCE for the DCI; or

a frequency location of the L-th PRB for the PUCCH is a location determined based on a frequency domain starting location of the K-th CCE for the DCI plus a frequency offset, where the frequency offset may be predefined or transmitted (such as in SIB 1 or DCI) and indicated by the network side device; or

$RB_{BWP}^{offset}$ is determined based on a frequency domain starting location of the K-th CCE for the DCI and a frequency location of the first PRB for the PUCCH is then determined based on the formula $RB_{BWP}^{offset} + \left\lfloor \frac{r_{PUCCH}}{N_{CS}} \right\rfloor$ or

$N_{BWP}^{size} - 1 - RB_{BWP}^{offset} - \left\lfloor \frac{r_{PUCCH}-8}{N_{CS}} \right\rfloor$.

D, determining the first resource for the first type of terminal to transmit the PUCCH based on a frequency location of a given uplink channel transmitted by the first type of terminal;

in the present embodiment, the frequency location of the PUCCH is determined based on a frequency location of a given uplink channel transmitted by the first type of terminal. For example, the given uplink channel may be Msg1 or Msg3. The frequency location of the PUCCH may be determined based on a frequency location of Msg1 or Msg3:

a frequency location of the first PRB for the PUCCH is the same as a frequency location of the first PRB for Msgl or Msg3; or

a frequency location of the L-th PRB for the PUCCH is the same as a frequency location of the K-th PRB for Msgl or Msg3; or

a frequency location of the L-th PRB for the PUCCH is a location determined based on a frequency location of the K-th PRB for Msgl or Msg3 plus a frequency offset, where the frequency offset may be predefined or transmitted (such as in SIB 1 or DCI) and indicated by the network side device; or

$RB_{BWP}^{offset}$ is determined based on a frequency location of the K-th PRB for Msg1 or Msg3 and a frequency location of the first PRB for the PUCCH is then determined based on the formula $RB_{BWP}^{offset} + \left\lfloor \frac{r_{PUCCH}}{N_{CS}} \right\rfloor$ or

$$N_{BWP}^{size} - 1 - RB_{BWP}^{offset} - \left\lfloor \frac{r_{PUCCH}-8}{N_{CS}} \right\rfloor ;$$

in the present embodiment, for example, Msgl is a first message and the first message is a random access request message or a random access pilot signal, and Msg3 is a third message and the third message is a connection establishment request message in a random access procedure.

E, determining the first resource for the first type of terminal to transmit the PUCCH based on indication information carried in a contention resolution message transmitted by a network side device during a random access procedure of the first type of terminal;

in the present embodiment, the first resource for the first type of terminal to transmit the PUCCH is determined based on indication information carried in a contention resolution message transmitted by a network side device during a random access procedure of the first type of terminal. For example, indication information for a frequency location of the PUCCH is transmitted by the gNB to the RedCap UE through Msg4 (also known as a contention resolution message) in the fourth step of the random access procedure and the RedCap UE can determine the frequency domain resource for the PUCCH based on the indication information carried in the Msg4. The indication information may directly indicate the frequency location where the first PRB for PUCCH is located.

By the method according to the present embodiment, it can be ensured that the RedCap UE can always correctly transmit the PUCCH before obtaining the user-specific RRC configuration. In the present embodiment, the PUCCH is transmitted without frequency hopping, and the UE only needs to determine one resource location associated with the PUCCH to transmit the PUCCH, which is simple to implement.

Based on the foregoing embodiments, in the present embodiment, in case of determining the first resource for PUCCH transmission based on a frequency location corresponding to a first hop and/or a frequency location corresponding to a second hop when a second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In the present embodiment, in case of determining the first resource for PUCCH transmission based on the frequency location corresponding to the first hop and/or the frequency location corresponding to the second hop when the second type of terminal transmits the PUCCH, the determining the first resource for PUCCH transmission includes any one or more of:

A, determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

B, determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In the present embodiment, it should be noted that in case that the RedCap UE (the first type of terminal) and the traditional UE (the second type of terminal) completely share the above formulas and the parameter $RB_{BWP}^{offset}$, the PUCCH resources used by the RedCap UE and the traditional UE are likely to interlace. In order to solve this problem, the following methods may be used to prevent the PUCCH resources used by the RedCap UE and the traditional UE from interlacing.

(1) An offset $RB_{Redcap}^{offset}$ is introduced for determining the frequency location for the PUCCH transmitted by the RedCap UE, for example:

in case of $\left\lfloor \frac{r_{PUCCH}}{8} \right\rfloor = 0$, a first PRB index of the PUCCH transmission is $RB_{Redcap}^{offset} + RB_{BWP}^{offset} + \left\lfloor \frac{r_{PUCCH}}{N_{CS}} \right\rfloor$ ; and

in case of $\left\lfloor \frac{r_{PUCCH}}{8} \right\rfloor = 1$, a first PRB index of the PUCCH transmission is $N_{BWP}^{size} - 1 - RB_{Redcap}^{offset} - RB_{BWP}^{offset} - \left\lfloor \frac{r_{PUCCH}-8}{N_{CS}} \right\rfloor$, one of the possible values of the $RB_{Redcap}^{offset}$ is $\left\lceil \frac{8}{N_{CS}} \right\rceil + 1$ .

(2) A value of the $RB_{BWP}^{offset}$ used by the RedCap UE is enabled to be different from a value of the $RB_{BWP}^{offset}$ used by the traditional UE through a predefinition and/or indication method (although the same formula such as $RB_{BWP}^{offset} + \left\lfloor \frac{r_{PUCCH}}{N_{CS}} \right\rfloor$ is still used), for example, the value is 8;

it should be noted that this method makes the PUCCH resources used by the RedCap UE and the PUCCH resources used by the traditional UE not interlaced, which helps reduce the impact of the RedCap UE on the traditional UE and ensures that both the RedCap UE and the traditional UE have sufficient PUCCH capacity.

Based on the above embodiments, in the present embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a starting PRB for PUCCH transmission to be the same as a frequency domain starting location of a first control channel element (CCE) for the DCI;

enabling a frequency location of an L-th PRB for PUCCH transmission to be the same as a frequency domain starting location of a K-th CCE for the DCI, where L and K are integers larger than 0;

enabling the frequency location of the L-th PRB for PUCCH transmission to be a location determined based on the frequency domain starting location of the K-th CCE for the DCI and a second frequency offset, and the second frequency offset is predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 -$

$$RB_{BWP}^{offset} - \left\lfloor \frac{r_{PUCCH}-8}{N_{CS}} \right\rfloor$$

;

where $RB_{BWP}^{offset}$ represents the first frequency offset, $r_{PUCCH}$ represents a PUCCH resource index and is determined based on a PUCCH resource indicator field in the DCI scheduling PDSCH, $N_{cs}$ represents a total number of initial cyclic shift indices, and $N_{BWP}^{size}$ represents the bandwidth of UL initial BWP.

In the present embodiment, the frequency location of the L-th PRB for PUCCH transmission is the same as the frequency domain starting location of the K-th CCE for the DCI, where the relationship between L and K is not limited here, which may be freely combined according to requirements. For example, in case that L=1 and K=1, it means that the frequency starting locations of the PRB for PUCCH transmission and the CCE for the DCI are aligned. For another example, L is 1/2 of the frequency width of the resource occupied by PUCCH and K is 1/2 of the frequency width of the resource occupied by DCI, which means that the center frequency locations of the resource occupied by PUCCH and the resource occupied by DCI are aligned.

Based on the foregoing embodiments, in the present embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of the starting PRB for PUCCH transmission to be the same as a frequency location of a first PRB for a first message or a third message, where the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ bases on the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{cs}$ represents a total number of initial cyclic shift indices, and $N_{BWP}^{size}$ represents the bandwidth of UL initial BWP.

In the present embodiment, the frequency location of PUCCH is determined based on a frequency location of a given uplink channel transmitted by the UE. For example, the given uplink channel may be Msgl or Msg3. The frequency location for the PUCCH transmission is determined based on a frequency location of Msgl or Msg3. For example, a frequency location of the first PRB for the PUCCH is the same as a frequency location of the first PRB for Msgl or Msg3; or a frequency location of the L-th PRB for the PUCCH is the same as a frequency location of the K-th PRB for Msgl or Msg3; or a frequency location of the L-th PRB for the PUCCH is a location determined based on a frequency location of the K-th PRB for Msgl or Msg3 plus a frequency offset, where the frequency offset may be predefined or transmitted (such as in SIB 1 or DCI) and indicated by the network side device; or $RB_{BWP}^{offset}$ is determined based on a frequency location of the K-th PRB for Msgl or Msg3 and a frequency location of the first PRB for the PUCCH is then determined based on the formula $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ .

Based on the foregoing embodiments, in the present embodiment, in case that the first resource is the resource for PUCCH transmission with frequency hopping, the determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$, determining a frequency location corresponding to the second hop when the first type of terminal transmits PUCCH at $\left\lfloor \frac{r_{PUCCH}}{8} \right\rfloor = 0$ based on a replaced first sub-relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH, where the fourth frequency offset is $N_{BWP}^{size} - N_{RedCap}^{PUCCH}$;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$.

In the present embodiment, after it is determined to transmit the PUCCH with frequency hopping in a predefined mode and/or a mode indicated by a network side device, the resources for PUCCH transmission with frequency hopping may be determined as below:

A, replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where $N_{RedCap}^{PUCCH}$ is less than or equal to the maximum bandwidth $N_{RedCap}^{size}$ supported by the first type of terminal, and the maximum bandwidth supported by the second type of terminal is larger than the first preset value.

In the present embodiment, in case that the first type of terminal transmits the PUCCH resource with frequency hopping, the first resource for PUCCH transmission may be determined by reusing a method for determining a frequency location corresponding to the first hop (hop1) or the second hop (hop2) during the traditional normal terminal (the second type of terminal) transmits the PUCCH with frequency hopping. However, a bandwidth parameter $N_{BWP}^{size}$ of BWP in the initial formula is replaced with a bandwidth parameter $N_{RedCap}^{PUCCH}$, where $N_{RedCap}^{PUCCH}$ is less than or equal to the maximum bandwidth $N_{RedCap}^{size}$ supported by the RedCap UE. For example, resources for hop1 and hop2 are determined based on new bandwidth parameter:

in case of $\left\lfloor \frac{r_{PUCCH}}{8} \right\rfloor = 0$, a first PRB index in the hop1 is $RB_{BWP}^{offset} + \left\lfloor \frac{r_{PUCCH}}{N_{CS}} \right\rfloor$, and a first PRB index in the hop2 is $N_{RedCap}^{PUCCH} - 1 - RB_{BWP}^{offset} - \left\lfloor \frac{r_{PUCCH}}{N_{CS}} \right\rfloor$; and

in case of $\left\lfloor \frac{r_{PUCCH}}{8} \right\rfloor = 1$, a first PRB index in the hop1 is $N_{RedCap}^{PUCCH} - 1 - RB_{BWP}^{offset} - \left\lfloor \frac{r_{PUCCH}-8}{N_{CS}} \right\rfloor$, and

a first PRB index in the hop2 is $RB_{BWP}^{offset} + \left\lfloor \frac{r_{PUCCH}-8}{N_{CS}} \right\rfloor$;

as such, the frequency interval between the first hop and the second hop when the RedCap UE transmits the PUCCH is within a bandwidth range of the RedCap UE and thus the RedCap UE can transmits the PUCCH normally.

In an embodiment, $N_{RedCap}^{PUCCH} = N_{RedCap}^{size}$, as such, the frequency interval for PUCCH transmission may be maximized while less than or equal to the bandwidth range of the RedCap UE, and then the frequency diversity gain can be obtained as much as possible. That is, in case that $N_{RedCap}^{PUCCH} = N_{RedCap}^{size}$, the frequency interval between the first hop and the second hop for PUCCH transmission becomes maximized within the bandwidth capability of the RedCap UE, and a better frequency diversity gain is obtained.

In an embodiment, an offset $RB_{Redcap}^{offset}$ may be introduced to shift the frequency location for the PUCCH resource set of the RedCap UE in frequency (the shift amount is $RB_{Redcap}^{offset}$), for example, both hop1 and hop2 are shifted by $RB_{Redcap}^{offset}$:

in case of $\left\lfloor \frac{r_{PUCCH}}{8} \right\rfloor = 0$, a first PRB index in the hop1 is $RB_{Redcap}^{offset} + RB_{BWP}^{offset} + \left\lfloor \frac{r_{PUCCH}}{N_{CS}} \right\rfloor$; and a first PRB index in the hop2 is $RB_{Redcap}^{offset} + N_{RedCap}^{PUCCH} - 1 - RB_{BWP}^{offset} - \left\lfloor \frac{r_{PUCCH}}{N_{CS}} \right\rfloor$; and

in case of $\left\lceil \frac{r_{PUCCH}}{8} \right\rceil = 1$, a first PRB index in the hop1 is $RB_{Redcap}^{offset} + N_{RedCap}^{PUCCH} - 1 - RB_{BWP}^{offset} - \left\lfloor \frac{r_{PUCCH}-8}{N_{CS}} \right\rfloor$, and a first PRB index in the hop2 is $RB_{Redcap}^{offset} + RB_{BWP}^{offset} + \left\lfloor \frac{r_{PUCCH}-8}{N_{CS}} \right\rfloor$.

In the present embodiment, a possible value of $RB_{Redcap}^{offset}$ may be $\left\lceil \frac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3. In the FDD systems, a possible value of $RB_{Redcap}^{offset}$ may be the frequency location of the first PRB or the frequency location of the center PRB of the resources occupied by Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station and reduces the impact of RedCap UEs on general NR UEs.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

B, determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH; in the present embodiment, after it is determined to transmit the PUCCH with frequency hopping in a predefined mode and/or a mode indicated by a network side device, the resources for PUCCH transmission with frequency hopping may be determined as below:

reusing the calculation method for the frequency locations corresponding to the hop1 and hop2 and performing modulo operations on the bandwidth parameter $N_{RedCap}^{PUCCH}$ during calculation of frequency locations by using the initial calculation formula for the hop1 and hop2, where $N_{RedCap}^{PUCCH}$ is less than or equal to the maximum bandwidth suported by RedCap UE; that is:

in case of $\left\lceil \frac{r_{PUCCH}}{8} \right\rceil = 0$, a first PRB index in the hop1 is $\left( RB_{BWP}^{offset} + \left\lfloor \frac{r_{PUCCH}}{N_{CS}} \right\rfloor \right) \bmod N_{RedCap}^{PUCCH}$; and a first PRB index in the hop2 is $\left( N_{BWP}^{size} - 1 - RB_{BWP}^{offset} - \left\lfloor \frac{r_{PUCCH}}{N_{CS}} \right\rfloor \right) \bmod N_{RedCap}^{PUCCH}$; and

in case of $\left\lceil \frac{r_{PUCCH}}{8} \right\rceil = 1$, a first PRB index in the hop1 is $\left( N_{BWP}^{size} - 1 - RB_{BWP}^{offset} - \left\lfloor \frac{r_{PUCCH}-8}{N_{CS}} \right\rfloor \right) \bmod N_{RedCap}^{PUCCH}$; and a first PRB index in the hop2 is $\left( RB_{BWP}^{offset} + \right.$

$$\left\lfloor\frac{r_{PUCCH}-8}{N_{CS}}\right\rfloor\Bigg)\bmod N_{RedCap}^{PUCCH}\ ;$$

A Mod B is called modulo operation, and obtains a value in the range of 0 to (B-1) after A Mod B is performed regardless of the value of A. As such, the frequency location corresponding to the two hops of the PUCCH resource can always be within the range of $N_{RedCap}^{PUCCH}$.

In an embodiment, $N_{RedCap}^{PUCCH} = N_{RedCap}^{size}$, as such, the frequency interval for PUCCH transmission may be maximized while less than or equal to the bandwidth range of the RedCap UE, and then the frequency diversity gain can be obtained as much as possible.

In an embodiment, an offset $RB_{Redcap}^{offset}$ may be introduced to shift the frequency location for the PUCCH resource set of the RedCap UE in frequency the shift amount is $RB_{Redcap}^{offset}$ ), for example, both hop1 and hop2 are shifted by $RB_{Redcap}^{offset}$ :

in case of $\left\lfloor\frac{r_{PUCCH}}{8}\right\rfloor = 0$, a first PRB index in the hop1 is $RB_{Redcap}^{offset} + \left[\left(RB_{BWP}^{offset} + \left\lfloor\frac{r_{PUCCH}}{N_{CS}}\right\rfloor\right)\bmod N_{RedCap}^{PUCCH}\right]$; and a first PRB index in the hop2 is $RB_{Redcap}^{offset} + \left[\left(N_{BWP}^{size} - 1 - RB_{BWP}^{offset} - \left\lfloor\frac{r_{PUCCH}}{N_{CS}}\right\rfloor\right)\bmod N_{RedCap}^{PUCCH}\right]$; and

in case of $\left\lfloor\frac{r_{PUCCH}}{8}\right\rfloor = 1$, a first PRB index in the hop1 is $RB_{Redcap}^{offset} + \left[\left(N_{BWP}^{size} - 1 - RB_{BWP}^{offset} - \left\lfloor\frac{r_{PUCCH}-8}{N_{CS}}\right\rfloor\right)\bmod N_{RedCap}^{PUCCH}\right]$; and a first PRB index in the hop2 is $RB_{Redcap}^{offset} + \left[\left(RB_{BWP}^{offset} + \left\lfloor\frac{r_{PUCCH}-8}{N_{CS}}\right\rfloor\right)\bmod N_{RedCap}^{PUCCH}\right]$.

In the present embodiment, a possible value of $RB_{Redcap}^{offset}$ may be $\left\lceil\frac{8}{N_{CS}}\right\rceil+1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3. In the FDD systems, a possible value of $RB_{Redcap}^{offset}$ may be the frequency location of the first PRB or the frequency location of the center PRB of the resources occupied by Msgl or Msg3.

By shifting the PUCCH resource set used by the RedCap UE in frequency, the PUCCH resource set used by the RedCap UE does not interlace with the PUCCH resource set used by the general NR UE, and the base station may can configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

C, replacing a bandwidth parameter $N_{BWP}^{size}$ of the UL initial BWP in a first sub-relationship model corresponding to $\left\lceil \frac{r_{PUCCH}}{8} \right\rceil = 0$ among relationship models used to determine a frequency location corresponding to the second hop when the second type of terminal transmits PUCCH with the first bandwidth parameter $N_{RedCap}^{PUCCH}$, determining a frequency location corresponding to the second hop when the first type of terminal transmits PUCCH at $\left\lceil \frac{r_{PUCCH}}{8} \right\rceil = 0$ based on the replaced first sub-relationship model, and determining a frequency location corresponding to the second hop when the first type of terminal transmits PUCCH at $\left\lceil \frac{r_{PUCCH}}{8} \right\rceil = 1$ based on a fourth frequency offset and a second sub-relationship model corresponding to $\left\lceil \frac{r_{PUCCH}}{8} \right\rceil = 1$ among the relationship models used to determine the frequency location corresponding to the second hop when the second type of terminal transmits PUCCH, where the fourth frequency offset is $N_{BWP}^{size} - N_{RedCap}^{PUCCH}$; where the first resource is centrally symmetric in the UL initial BWP, and then irregular segmentation of uplink transmission resources may be avoided, and resource allocation of the base station may be simplified.

In the present embodiment, after it is determined to transmit the PUCCH with frequency hopping in a predefined mode and/or a mode indicated by a network side device, the resources for PUCCH transmission with frequency hopping may be determined as below:

the calculation formulas for hop1 and hop2 for the second type of terminal are reused, the first bandwidth parameter is introduced, and the location of hop2 is adjusted based on the value of $\left\lfloor \frac{r_{PUCCH}}{8} \right\rfloor$,

in case of $\left\lceil \frac{r_{PUCCH}}{8} \right\rceil = 0$, for hop1, the initial formula is still reused, that is, $RB_{BWP}^{offset} + \left\lfloor \frac{r_{PUCCH}}{N_{CS}} \right\rfloor$; and for hop2, $N_{BWP}^{size}$ is replaced with $N_{RedCap}^{PUCCH}$ in the initial formula, that is, $N_{RedCap}^{PUCCH} - 1 - RB_{BWP}^{offset} - \left\lfloor \frac{r_{PUCCH}}{N_{CS}} \right\rfloor$; and

in case of $\left\lceil \frac{r_{PUCCH}}{8} \right\rceil = 1$, for hop1, the initial formula is still reused, that is, $N_{BWP}^{size} - 1 - RB_{BWP}^{offset} - \left\lfloor \frac{r_{PUCCH}-8}{N_{CS}} \right\rfloor$; and for hop2, a fourth frequency offset ($N_{BWP}^{size} - N_{RedCap}^{PUCCH}$) is added, that is, ($(N_{BWP}^{size} - N_{RedCap}^{PUCCH}) + RB_{BWP}^{offset} + \left\lfloor \frac{r_{PUCCH}-8}{N_{CS}} \right\rfloor$); where maybe $N_{RedCap}^{PUCCH} = N_{RedCap}^{size}$.

In the method of present embodiment, based on that a value of $\left\lceil \frac{r_{PUCCH}}{8} \right\rceil$ is 0 or 1, PUCCH may concentrate in the low frequency or high frequency of the UL BWP, respectively. Compared with the previous method, one of its advantages is that the base station may distribute RedCap UEs by indicating the value of $r_{PUCCH}$ through DCI and the PUCCH transmission for different RedCap UEs is unnecessarily concentrated in an area with a frequency bandwidth of $N_{RedCap}^{PUCCH}$.

In an embodiment, an offset $RB_{Redcap}^{offset}$ may be introduced to shift the frequency location for the PUCCH resource set of the RedCap UE in frequency (the shift amount is $RB_{Redcap}^{offset}$). The difference from the previous is that hop1 may be shifted by $RB_{Redcap}^{offset}$ and the hop2 may be shifted by $-RB_{Redcap}^{offset}$:

in case of $\left\lfloor \dfrac{r_{PUCCH}}{8} \right\rfloor = 0$, a first PRB index in the hop1 is $RB_{Redcap}^{offset} + RB_{BWP}^{offset} + \left\lfloor \dfrac{r_{PUCCH}}{N_{CS}} \right\rfloor$; and a first

PRB index in the hop2 is $RB_{Redcap}^{offset} + N_{RedCap}^{PUCCH} - 1 - RB_{BWP}^{offset} - \left\lfloor \dfrac{r_{PUCCH}}{N_{CS}} \right\rfloor$; and

in case of $\left\lfloor \dfrac{r_{PUCCH}}{8} \right\rfloor = 1$, a first PRB index in the hop1 is $N_{BWP}^{size} - RB_{Redcap}^{offset} - 1 -$

$RB_{BWP}^{offset} - \left\lfloor \dfrac{r_{PUCCH}-8}{N_{CS}} \right\rfloor$, and a first PRB index in the hop2 is $(N_{BWP}^{size} - N_{RedCap}^{PUCCH}) - RB_{Redcap}^{offset} +$

$RB_{BWP}^{offset} + \left\lfloor \dfrac{r_{PUCCH}-8}{N_{CS}} \right\rfloor$.

In the present embodiment, a possible value of $RB_{Redcap}^{offset}$ may be $\left\lceil \dfrac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3. In the FDD systems, a possible value of $RB_{Redcap}^{offset}$ may be the frequency location of the first PRB or the frequency location of the center PRB of the resources occupied by Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved. In addition, an effect of dividing the PUCCH of different RedCap UEs to different frequency ranges is achieved.

D, determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$; after it is determined to transmit the PUCCH with frequency hopping in a predefined mode and/or a mode indicated by a network side device, the resources for PUCCH transmission with frequency hopping may be determined as below:

the formulas for hop1 and hop2 for the traditional second type of terminal (normal UE) are reused, where for the first type of terminal (reduced capability UE, RedCap UE), by designing $RB_{BWP}^{offset}$ in the formulas, an interval of frequency locations corresponding to hop1 and hop2 calculated according to the formulas is less than or equal to the maximum bandwidth supported by the RedCap UE. For example, $RB_{BWP}^{offset}$ of the RedCap UE may meet the following conditions:

$$N_{BWP}^{size} - 2 * RB_{BWP}^{offset} \leq N_{RedCap}^{PUCCH}$$

that is: $RB_{BWP}^{offset} \geq \frac{N_{BWP}^{size} - N_{RedCap}^{PUCCH}}{2}$

in an embodiment, $RB_{BWP}^{offset} = \left\lceil \frac{N_{BWP}^{size} - N_{RedCap}^{PUCCH}}{2} \right\rceil$ ; and in another embodiment, $N_{RedCap}^{PUCCH} = N_{RedCap}^{size}$ .

By the present method, the hop1 and hop2 in which the RedCap UE transmits the PUCCH are constrained within the central $N_{RedCap}^{PUCCH}$ bandwidth range of the BWP, and the RedCap UE can transmit the PUCCH normally. This method is especially suitable for time division duplexing (TDD) systems since the center frequency at which the RedCap UE transmits the PUCCH may also be the center frequency of the uplink BWP (such as UL initial BWP), where the center frequencies of the downlink BWP and the uplink BWP in the TDD system are the same. In addition, in case that the uplink and downlink are switched in the TDD system, retuning can be avoided in the method according to the present application. In an embodiment, in the TDD system, the value of $RB_{BWP}^{offset}$ is $\left\lceil \frac{N_{BWP}^{size} - N_{RedCap}^{PUCCH}}{2} \right\rceil$ or $\left\lceil \frac{N_{BWP}^{size} - N_{RedCap}^{size}}{2} \right\rceil$ .

Although the above method is illustrated in case that a value of $RB_{BWP}^{offset}$ used by the RedCap UE is different from the value of $RB_{BWP}^{offset}$ used by the traditional UE, the method may further be equivalent to a method in which $RB_{BWP}^{offset}$ used by the RedCap UE is a sum of $RB_{BWP}^{offset}$ used the traditional UE and an offset $RB_{Redcap}^{offset}$ . The two methods are substantially the same.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

E, determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by the network side device; an absolute value of the fifth frequency offset is less than or equal to $N_{RedCap}^{size}$ .

In the present embodiment, after it is determined to transmit the PUCCH with frequency hopping in a predefined mode and/or a mode indicated by a network side device, the resources for PUCCH transmission with frequency hopping may be determined as below:

step 1, any of the methods in the above embodiments is used to determine a frequency and the frequency is regarded as the frequency in hop1, for example, a frequency location of the first PRB in the hop1 is determined to be

$$RB_{Redcap}^{offset} + RB_{BWP}^{offset} + \left\lfloor \frac{r_{PUCCH}}{N_{CS}} \right\rfloor$$ ; and

step 2, a frequency location corresponding to hop2 is determined based on the frequency location corresponding to the hop1 and a frequency offset $FH_{RedCap}^{PUCCH}$ , for example, the frequency location of the first PRB in hop2 is determined to be $RB_{Redcap}^{offset} + RB_{BWP}^{offset} + \left\lfloor \frac{r_{PUCCH}}{N_{CS}} \right\rfloor + FH_{RedCap}^{PUCCH}$ .

In an embodiment, the same $FH_{RedCap}^{PUCCH}$ may be used regardless of the value of $\left\lfloor \frac{r_{PUCCH}}{N_{CS}} \right\rfloor$ ; in another embodiment, $FH_{RedCap}^{PUCCH}$ may be different base on that $\left\lfloor \frac{r_{PUCCH}}{N_{CS}} \right\rfloor$ is 0 or 1. For example, $FH_{RedCap}^{PUCCH}$ may be a positive value in case that $\left\lfloor \frac{r_{PUCCH}}{N_{CS}} \right\rfloor$ is 0 while $FH_{RedCap}^{PUCCH}$ may be a negative value in case that $\left\lfloor \frac{r_{PUCCH}}{N_{CS}} \right\rfloor$ is 1. $FH_{RedCap}^{PUCCH}$ is a frequency offset, which represents the frequency difference between hop2 and hop1, and may be predefined, or indicated by the network side device. For example, it may be indicated through SIB 1 or DCI.

In the method according to the embodiment of the present application, there is no need to design frequency locations for hop1 and hop2 respectively, and the frequency location corresponding to hop2 may always be determined based on the frequency location corresponding to hop1 and a frequency offset, which is simpler and more flexible. In an embodiment, $\left| FH_{RedCap}^{PUCCH} \right| \leq N_{RedCap}^{size}$ , and thus the frequency difference between hop1 and hop2 is less than or equal to the maximum bandwidth supported by the RedCap UE.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

Based on the above embodiments, in the present embodiment, the replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model includes:

replacing a bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model and a preset frequency offset.

In the present embodiment, the determining frequency locations corresponding to the first hop and the second hop when the first type of terminal transmits PUCCH based on the replaced relationship model and the preset frequency offset includes directly adding the preset frequency offset to the replaced relationship model and determining frequency locations corresponding to the first hop and the second hop when the first type of terminal transmits PUCCH. In another embodiment, the determining frequency locations corresponding to the first hop and the second hop when the first type of terminal transmits PUCCH based on the replaced relationship model and the preset frequency offset includes performing other operations on the replaced relationship model and the preset frequency offset and then determining frequency locations corresponding to the first hop and the second hop when the first type of terminal transmits PUCCH, which is not limited in the present embodiment.

In the present embodiment, the introduced preset frequency offset may be $RB_{Redcap}^{offset}$ and the preset frequency offset may be used for shifting the frequency location for the PUCCH resource set of the RedCap UE (the shift amount is $RB_{Redcap}^{offset}$ ), for example, both hop1 and hop2 are shifted by $RB_{Redcap}^{offset}$ :

in case of $\left\lfloor \frac{r_{PUCCH}}{8} \right\rfloor = 0$ , a first PRB index in the hop1 is $RB_{Redcap}^{offset} + RB_{BWP}^{offset} + \left\lfloor \frac{r_{PUCCH}}{N_{CS}} \right\rfloor$ ; and a first

PRB index in the hop2 is $RB_{Redcap}^{offset} + N_{RedCap}^{PUCCH} - 1 - RB_{BWP}^{offset} - \left\lfloor \frac{r_{PUCCH}}{N_{CS}} \right\rfloor$ ; and

in case of $\left\lceil \frac{r_{PUCCH}}{8} \right\rceil = 1$ , a first PRB index in the hop1 is $RB_{Redcap}^{offset} + N_{RedCap}^{PUCCH} - 1 - RB_{BWP}^{offset} - \left\lfloor \frac{r_{PUCCH}-8}{N_{CS}} \right\rfloor$ , and a first PRB index in the hop2 is $RB_{Redcap}^{offset} + RB_{BWP}^{offset} + \left\lfloor \frac{r_{PUCCH}-8}{N_{CS}} \right\rfloor$ .

In the present embodiment, a possible value of $RB_{Redcap}^{offset}$ may be $\left\lceil \frac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

Based on the foregoing embodiments, in the present embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations for the first bandwidth parameter $N_{RedCap}^{PUCCH}$ on the initial frequency locations and determining frequency locations corresponding to the first hop and the second hop when the first type of terminal transmits PUCCH based on a modulo operation result and a preset frequency offset.

In the present embodiment, the determining frequency locations corresponding to the first hop and the second hop when the first type of terminal transmits PUCCH based on the modulo operation result and the preset frequency offset includes directly adding the preset frequency offset to the modulo operation result and then determining frequency locations corresponding to the first hop and the second hop when the first type of terminal transmits PUCCH. In another embodiment, the determining frequency locations corresponding to the first hop and the second hop when the first type of terminal transmits PUCCH based on the modulo operation result and the preset frequency offset includes performing other operations on the modulo operation result and the preset frequency offset and then determining frequency locations corresponding to the first hop and the second hop when the first type of terminal transmits PUCCH, which is not limited in the present embodiment.

In the present embodiment, a preset frequency offset $RB_{Redcap}^{offset}$ may be introduced to shift the frequency location for the PUCCH resource set of the RedCap UE (the shift amount is $RB_{Redcap}^{offset}$ ), for example, both hop1 and hop2 are shifted by $RB_{Redcap}^{offset}$ :

in case of $\left\lceil \frac{r_{PUCCH}}{8} \right\rceil = 0$ , a first PRB index in the hop1 is $RB_{Redcap}^{offset} + \left[ \left( RB_{BWP}^{offset} + \left\lfloor \frac{r_{PUCCH}}{N_{CS}} \right\rfloor \right) \mod N_{RedCap}^{PUCCH} \right]$ ; and a first PRB index in the hop2 is $RB_{Redcap}^{offset} + \left[ \left( N_{BWP}^{size} - 1 - \right. \right.$

$$RB_{BWP}^{offset} - \left\lceil \frac{r_{PUCCH}}{N_{CS}} \right\rceil \bigg) \bmod N_{RedCap}^{PUCCH} \right\rceil_{;}$$

in case of $\left\lceil \frac{r_{PUCCH}}{8} \right\rceil = 1$ , a first PRB index in the hop1 is $RB_{Redcap}^{offset} + \left\lceil \left( N_{BWP}^{size} - 1 - RB_{BWP}^{offset} - \left\lceil \frac{r_{PUCCH}-8}{N_{CS}} \right\rceil \right) \bmod N_{RedCap}^{PUCCH} \right\rceil$ , and a first PRB index in the hop2 is $RB_{Redcap}^{offset} + \left\lceil \left( RB_{BWP}^{offset} + \left\lceil \frac{r_{PUCCH}-8}{N_{CS}} \right\rceil \right) \bmod N_{RedCap}^{PUCCH} \right\rceil$ .

In the present embodiment, a possible value of $RB_{Redcap}^{offset}$ may be $\left\lceil \frac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

Based on the foregoing embodiments, in the present embodiment, the preset frequency offset is any one or more of the following items:

$\left\lceil \frac{8}{N_{CS}} \right\rceil + 1$ , where $N_{CS}$ represents a total number of initial cyclic shift indices;

a frequency location of the first PRB or the central PRB of a resource occupied by a first message or a third message, where the first message is a random access request message or a random access pilot signal, and the third message is a connection establishment request message in a random access procedure.

In the present embodiment, a possible value of $RB_{Redcap}^{offset}$ may be $\left\lceil \frac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

Based on the foregoing embodiments, in the present embodiment, the possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

In the present embodiment, the formulas for hop1 and hop2 for the traditional second type of terminal (normal UE) are reused, where for the first type of terminal (reduced capability UE, RedCap UE), by designing $RB_{BWP}^{offset}$ in the formulas, an interval of frequency locations corresponding to hop1 and hop2 calculated according to the formula is less than or equal to the maximum bandwidth supported by the RedCap UE. For example, $RB_{BWP}^{offset}$ of the RedCap UE may meet the following conditions:

$$N_{BWP}^{size} - 2 * RB_{BWP}^{offset} \leq N_{RedCap}^{PUCCH}$$

that is: $RB_{BWP}^{offset} \geq \frac{N_{BWP}^{size} - N_{RedCap}^{PUCCH}}{2}$

in an embodiment, $RB_{BWP}^{offset} = \left\lceil \frac{N_{BWP}^{size} - N_{RedCap}^{PUCCH}}{2} \right\rceil$ ; and in another embodiment, $N_{RedCap}^{PUCCH} = N_{RedCap}^{size}$ .

By the present method, the hop1 and hop2 in which the RedCap UE transmits the PUCCH are constrained within the central $N_{RedCap}^{PUCCH}$ bandwidth range of the BWP, and the RedCap UE can transmit the PUCCH normally. This method is especially suitable for time division duplexing (TDD) systems since the center frequency at which the RedCap UE transmits the PUCCH may also be the center frequency of the uplink BWP (such as UL initial BWP), where the center frequencies of the downlink BWP and the uplink BWP in the TDD system are the same. In addition, in case that the uplink and downlink are switched in the TDD system, retuning can be avoided in the method.

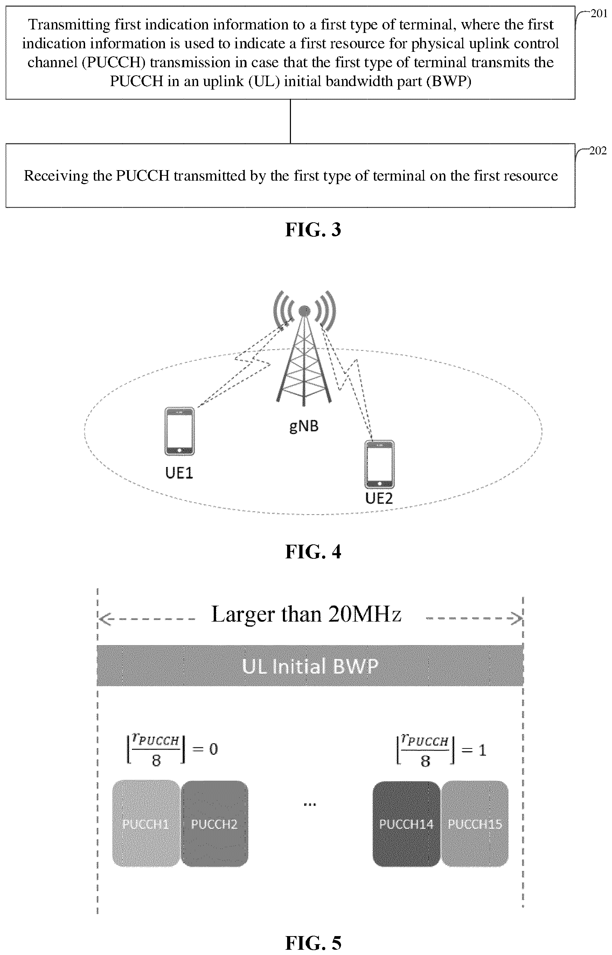

FIG. 3 is a schematic flow chart of a method for channel transmission implemented at a network side device according to an embodiment of the present application. As shown in FIG. 3, the method includes the following steps:

step 201: transmitting first indication information to a first type of terminal, where the first indication information is used to indicate a first resource for physical uplink control channel (PUCCH) transmission in case that the first type of terminal transmits the PUCCH in an uplink (UL) initial bandwidth part (BWP); and

step 202: receiving the PUCCH transmitted by the first type of terminal on the first resource;

where a bandwidth range of the first resource is less than or equal to a maximum bandwidth supported by the first type of terminal, and the maximum bandwidth supported by the first type of terminal is less than or equal to a first preset value.

The method for channel transmission according to the embodiment of the present application is applied to a network side device. The maximum bandwidth supported by the first type of terminal is less than or equal to the first preset value. In case that the first type of terminal transmits the PUCCH in the UE initial BWP, the network side device transmits first indication information to the first type of terminal, where the first indication information is used to indicate the first resource for PUCCH transmission in case that the first type of terminal transmits the PUCCH in the UL initial BWP; a bandwidth range of the first resource is less than or equal to a maximum bandwidth supported by the first type of terminal. The bandwidth in which the first type of terminal transmits the PUCCH is within the bandwidth range supported by the first type of terminal, the first type of terminal can transmit the PUCCH correctly, and the problem that the first type of terminal fails to transmit the PUCCH correctly in the UL initial BWP since a frequency interval between two hops for the PUCCH transmission is larger than the maximum bandwidth of the first type of terminal is solved.

Based on the foregoing embodiments, in the present embodiment, the first indication information is used to indicate any one of the following resources:

a resource for PUCCH transmission without frequency hopping; or
a resource for PUCCH transmission with frequency hopping, where a frequency interval between a first hop and a second hop is less than or equal to the maximum bandwidth supported by the first type of terminal.

Exemplarily, the first indication information may be carried by system information, or may be carried by DCI; the first indication information may indicate the PUCCH resource in at least one of the following modes:

mode A, indicating whether to use frequency hopping, and indicating to determine a parameter of the first resource carrying the PUCCH;
mode B, indicating whether to use frequency hopping, while the first resource carrying PUCCH is determined in a predefined mode; and
mode C, indicating a parameter of the first resource carrying the PUCCH, while whether to use frequency hopping is determined in a predefined mode.

In the present embodiment, in case of determining the first resource for PUCCH transmission, there are at least two implementations. For example, the first resource for PUCCH transmission includes any one of the following items: (1) a resource for PUCCH transmission without frequency hopping , which means that in case of transmitting PUCCH, the PUCCH is transmitted without two hops; (2) a resource for PUCCH transmission with frequency hopping; where a frequency interval between a first hop and a second hop is less than or equal to the maximum bandwidth supported by the first type of terminal.

In actual use case, whether to perform PUCCH transmission with frequency hopping or PUCCH transmission without frequency hopping may be determined in a predefined mode, or a mode indicated by a network side device, or in a combination of both the predefined mode and the mode indicated by the network side device.

For the predefined mode, for example, it may be predefined directly through a protocol that the RedCap UE does not perform the PUCCH transmission with frequency hopping until obtaining user-specific RRC configuration; or that in case that the bandwidth of LTL BWP (such as UL initial BWP) of the RedCap UE is larger than a threshold value (such as the maximum bandwidth supported by the RedCap UE), the PUCCH transmission with frequency hopping is not performed, otherwise, the PUCCH transmission with frequency hopping is performed. No any indication from the network side device is required in the predefined mode and the indication overhead can be saved.

For the mode indicated by the network side device, it can be determined whether to perform the PUCCH transmission with frequency hopping by receiving frequency hopping indication information transmitted by a gNB. For example, the frequency hopping indication information is used for indicating whether the RedCap UE transmits the PUCCH in frequency hopping manner and is carried in a system information block (SIB1) for being broadcasted and transmitted or may be carried in the downlink control information (DCI). Although the mode indicated by the network side device is more flexible, downlink indication overhead is required.

In an embodiment, the first indication information includes the frequency hopping indication information.

For the combination of both predefined mode and the mode indicated by the network side device, in case that the bandwidth of UL BWP (such as UL initial BWP) of the RedCap UE is larger than a threshold value (such as the maximum bandwidth supported by the RedCap UE), the PUCCH is not transmitted with frequency hopping; and in case that the bandwidth of LTL BWP of the RedCap UE is less than or equal to the threshold value, it is determined whether to perform the PUCCH transmission with frequency hopping based on the frequency hopping indication information from the gNB. The combination of both predefined mode and the mode indicated by the network side device combines the advantages of indication overhead saving and flexibility, and is a relatively compromised solution.

Based on the foregoing embodiments, in the present embodiment, in case that the first resource is the resource for PUCCH transmission without frequency hopping, the determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;

determining the first resource for the first type of terminal to transmit the PUCCH based on a frequency location of a physical downlink shared channel (PDSCH) that is fed back by the first type of terminal in the PUCCH;

determining the first resource for the first type of terminal to transmit the PUCCH based on a frequency location of scheduling downlink control information (DCI) corresponding to a physical downlink shared channel (PDSCH) that is fed back by the first type of terminal in the PUCCH;

determining the first resource for the first type of terminal to transmit the PUCCH based on a frequency location of a given uplink channel transmitted by the first type of terminal;

determining the first resource for the first type of terminal to transmit the PUCCH based on indication information carried in a contention resolution message transmitted by a network side device during a random access procedure of the first type of terminal.

In the present embodiment, in case that the first resource is the resource for PUCCH transmission without frequency hopping, the determining the first resource for PUCCH transmission includes any one or more of:

A, determining the first resource for the first type of terminal to transmit the PUCCH based on a frequency location corresponding to the first hop and/or the frequency location corresponding to the second hop when the second type of terminal transmits the PUCCH; where the maximum bandwidth supported by the second type of terminal is larger than the first preset value.

In the present embodiment, the second type of terminal and the first type of terminal are different terminals. For example, the first type of terminal may be a reduced capability terminal (such as RedCap UE), and the second type of terminal may a non-reduced capability terminal (such as non-RedCap UE) or a general terminal or a normal terminal or a traditional terminal.

In the present embodiment, in case that the first type of terminal transmits the PUCCH resource without frequency hopping, the first resource for PUCCH transmission may reuse a frequency location corresponding to the first hop (hop1) or the second hop (hop2) when the traditional normal terminal (the second type of terminal) transmits the PUCCH with frequency hopping. That is, the first resource for the first type of terminal to transmit the PUCCH can be determined based on the frequency location corresponding to the first hop and/or the frequency location corresponding to the second hop when the second type of terminal transmits the PUCCH.

For example, it is agreed to determine the frequency location for the PUCCH transmission without frequency hopping using the same method as a method for determining a frequency location corresponding to the hop1. For example, in case of $\left\lfloor \frac{r_{PUCCH}}{8} \right\rfloor = 0$, a first PRB index of the PUCCH transmission is $RB_{BWP}^{offset} + \left\lfloor \frac{r_{PUCCH}}{N_{CS}} \right\rfloor$; and in case of $\left\lfloor \frac{r_{PUCCH}}{8} \right\rfloor = 1$, a first PRB index for PUCCH transmission is $N_{BWP}^{size} - 1 - RB_{BWP}^{offset} - \left\lfloor \frac{r_{PUCCH}-8}{N_{CS}} \right\rfloor$.

For example, it is agreed to determine the frequency location for the PUCCH transmission using the same method as a method for determining a frequency location corresponding to the hop2; or the first PRB index of the PUCCH transmission is determined using $RB_{BWP}^{offset} + \left\lfloor \frac{r_{PUCCH}}{N_{CS}} \right\rfloor$ (or $N_{BWP}^{size} - 1 - RB_{BWP}^{offset} - \left\lfloor \frac{r_{PUCCH}-8}{N_{CS}} \right\rfloor$) regardless of the value of $\left\lfloor \frac{r_{PUCCH}}{8} \right\rfloor$.

Through the above methods, the location of the PUCCH resource can be directly determined, the implementation is simple, and the indication for the $r_{PUCCH}$ by the traditional DCI is reused, which simplifies the indication by the base station.

In case that the RedCap UE and the traditional UE completely share the above formulas and the parameter $RB_{BWP}^{offset}$, the PUCCH resources used by the RedCap UE and the traditional UE are likely to interlace. On the basis of the above methods, the PUCCH resources used by the RedCap UE and the traditional UE may be not interlaced by any of the following methods.

(1) An offset $RB_{Redcap}^{offset}$ is introduced for determining the frequency location for the PUCCH transmitted by the RedCap UE, for example: in case of $\left\lfloor \frac{r_{PUCCH}}{8} \right\rfloor = 0$, a first PRB index of the PUCCH transmission is $RB_{Redcap}^{offset} + RB_{BWP}^{offset} + \left\lfloor \frac{r_{PUCCH}}{N_{CS}} \right\rfloor$; and in case of $\left\lfloor \frac{r_{PUCCH}}{8} \right\rfloor = 1$, a first PRB index of the PUCCH transmission is $N_{BWP}^{size} - 1 - RB_{Redcap}^{offset} - RB_{BWP}^{offset} - \left\lfloor \frac{r_{PUCCH}-8}{N_{CS}} \right\rfloor$, one of the possible values of the $RB_{Redcap}^{offset}$ is $\left\lceil \frac{8}{N_{CS}} \right\rceil + 1$.

(2) A value of the $RB_{BWP}^{offset}$ used by the RedCap UE is enabled to be different from a value of the $RB_{BWP}^{offset}$ used by the traditional UE through a predefinition and/or indication method (although the same formula such as $RB_{BWP}^{offset} + \left\lfloor \frac{r_{PUCCH}}{N_{CS}} \right\rfloor$ is still used), for example, the value is 8.

It should be noted that this method makes the PUCCH resources used by the RedCap UE and the PUCCH resources used by the traditional UE not interlaced, which helps reduce the impact of the RedCap UE on the traditional UE and ensures that both the RedCap UE and the traditional UE have sufficient PUCCH capacity.

B, determining the first resource for the first type of terminal to transmit the PUCCH based on the frequency location of a physical downlink shared channel (PDSCH) that is fed back by the first type of terminal in the PUCCH;

in the present embodiment, the first resource for the first type of terminal to transmit the PUCCH is determined based on the frequency location of the PDSCH that is fed back by the first type of terminal in the PUCCH. For example, starting frequency locations of both the PDSCH and the PUCCH are the same.

C. determining the first resource for the first type of terminal to transmit the PUCCH based on the frequency location of scheduling DCI corresponding to the PDSCH that is fed back by the first type of terminal in the PUCCH;

in the present embodiment, the first resource for the first type of terminal to transmit the PUCCH is determined based on a frequency location of scheduling DCI corresponding to a PDSCH that is fed back by the first type of terminal in the PUCCH. After a DCI schedules a PDSCH reception for UE, the UE feeds back whether the PDSCH reception is correct in the PUCCH, and the frequency location of the PUCCH may be determined based on the frequency location of the scheduling DCI corresponding to the PDSCH to be fed back. For example:

a frequency location of the first PRB for the PUCCH is the same as a frequency domain starting location of a first CCE for the DCI; or

a frequency location of the L-th PRB for the PUCCH is the same as a frequency domain start position of the K-th CCE for the DCI; or

a frequency location of the L-th PRB for the PUCCH is a location determined based on a frequency domain starting location of the K-th CCE for the DCI plus a frequency offset, where the frequency offset may be predefined or transmitted (such as in SIB 1 or DCI) and indicated by the network side device; or

$RB_{BWP}^{offset}$ is determined based on a frequency domain starting location of the K-th CCE for the DCI and a frequency location of the first PRB for the PUCCH is then determined based on the formula $RB_{BWP}^{offset} + \left\lfloor \frac{r_{PUCCH}}{N_{CS}} \right\rfloor$

or $N_{BWP}^{size} - 1 - RB_{BWP}^{offset} - \left\lfloor \frac{r_{PUCCH-8}}{N_{CS}} \right\rfloor$.

D, determining the first resource for the first type of terminal to transmit the PUCCH based on a frequency location of a given uplink channel transmitted by the first type of terminal;

in the present embodiment, the frequency location of the PUCCH is determined based on a frequency location of a given uplink channel transmitted by the first type of terminal. For example, the given uplink channel may be Msgl or Msg3. The frequency location of the PUCCH may be determined based on a frequency location of Msgl or Msg3:

a frequency location of the first PRB for the PUCCH is the same as a frequency location of the first PRB for Msgl or Msg3; or

a frequency location of the L-th PRB for the PUCCH is the same as a frequency location of the K-th PRB for Msgl or Msg3; or

a frequency location of the L-th PRB for the PUCCH is a location determined based on a frequency location of the K-th PRB for Msgl or Msg3 plus a frequency offset, where the frequency offset may be predefined or transmitted (such as in SIB 1 or DCI) and indicated by the network side device; or

$RB_{BWP}^{offset}$ is determined based on a frequency location of the K-th PRB for Msg1 or Msg3 and a frequency location of the first PRB for the PUCCH is then determined based on the formula $RB_{BWP}^{offset} + \left\lfloor \frac{r_{PUCCH}}{N_{CS}} \right\rfloor$ or

$N_{BWP}^{size} - 1 - RB_{BWP}^{offset} - \left\lfloor \frac{r_{PUCCH-8}}{N_{CS}} \right\rfloor$;

in the present embodiment, for example, Msgl is a first message and the first message is a random access request message or a random access pilot signal, and Msg3 is a third message, and the third message is a connection establishment request message in a random access procedure.

E, determining the first resource for the first type of terminal to transmit the PUCCH based on indication information carried in a contention resolution message transmitted by a network side device during a random access procedure of the first type of terminal.

in the present embodiment, the first resource for the first type of terminal to transmit the PUCCH is determined based on indication information carried in a contention resolution message transmitted by a network side device during a random access procedure of the first type of terminal. For example, indication information for a frequency location of the PUCCH is transmitted by the gNB to the RedCap UE through Msg4 (also known as a contention resolution message) in the fourth step of the random access procedure and the RedCap UE can determine the frequency domain resource for the PUCCH based on the indication information carried in the Msg4. The indication information may directly indicate the frequency location where the first PRB for PUCCH is located.

By the method according to the present embodiment, it can be ensured that the RedCap UE can always correctly transmit the PUCCH before obtaining the user-specific RRC configuration. In the present embodiment, the PUCCH is transmitted without frequency hopping, and the UE only needs to determine one resource location associated with the PUCCH to transmit the PUCCH, which is simple to implement.

Based on the foregoing embodiments, in the present embodiment, in case of determining the first resource for PUCCH transmission based on a frequency location corresponding to a first hop and/or a frequency location corresponding to a second hop when a second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In the present embodiment, in case of determining the first resource for PUCCH transmission based on the frequency location corresponding to the first hop and/or the frequency location corresponding to the second hop when the second type of terminal transmits the PUCCH, the determining the first resource for PUCCH transmission includes any one or more of:

A, determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

B, determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In the present embodiment, it should be noted that in case that the RedCap UE (the first type of terminal) and the traditional UE (the second type of terminal) completely share the above formulas and the parameter $RB_{BWP}^{offset}$, the PUCCH resources used by the RedCap UE and the traditional UE are likely to interlace. In order to solve this problem, the following methods may be used to prevent the PUCCH resources used by the RedCap UE and the traditional UE from interlacing.

(1) An offset $RB_{Redcap}^{offset}$ is introduced for determining the frequency location for the PUCCH transmitted by the RedCap UE, for example:

in case of $\left\lfloor \frac{r_{PUCCH}}{8} \right\rfloor = 0$, a first PRB index of the PUCCH transmission is $RB_{Redcap}^{offset} + RB_{BWP}^{offset} + \left\lfloor \frac{r_{PUCCH}}{N_{CS}} \right\rfloor$; and

in case of $\left\lfloor \frac{r_{PUCCH}}{8} \right\rfloor = 1$, a first PRB index of the PUCCH transmission is $N_{BWP}^{size} - 1 - RB_{Redcap}^{offset} - RB_{BWP}^{offset} - \left\lfloor \frac{r_{PUCCH}-8}{N_{CS}} \right\rfloor$, one of the possible values of the $RB_{Redcap}^{offset}$ is $\left\lceil \frac{8}{N_{CS}} \right\rceil + 1$.

(2) A value of the $RB_{BWP}^{offset}$ used by the RedCap UE is enabled to be different from a value of the $RB_{BWP}^{offset}$ used by the traditional UE through a predefinition and/or indication method (although the same formula such as $RB_{BWP}^{offset} + \left\lfloor \frac{r_{PUCCH}}{N_{CS}} \right\rfloor$ is still used), for example, the value is 8.

It should be noted that this method makes the PUCCH resources used by the RedCap UE and the PUCCH resources used by the traditional UE not interlaced, which helps reduce the impact of the RedCap UE on the traditional UE and ensures that both the RedCap UE and the traditional UE have sufficient PUCCH capacity.

Based on the above embodiments, in the present embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a starting PRB for PUCCH transmission to be the same as a frequency domain starting location of a first control channel element (CCE) for the DCI;

enabling a frequency location of an L-th PRB for PUCCH transmission to be the same as a frequency domain starting location of a K-th CCE for the DCI, where L and K are integers larger than 0;

enabling the frequency location of the L-th PRB for PUCCH transmission to be a location determined based on the frequency domain starting location of the K-th CCE for the DCI and a second frequency offset, the second frequency offset being predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$;

where $RB_{BWP}^{offset}$ represents the first frequency offset, $r_{PUCCH}$ represents a PUCCH resource index and is determined based on a PUCCH resource indicator field in the DCI scheduling PDSCH, $N_{CS}$ represents a total number of initial cyclic shift indices, and $N_{BWP}^{size}$ represents the bandwidth of UL initial BWP.

In the present embodiment, the frequency location of the L-th PRB for PUCCH transmission is the same as the frequency domain starting location of the K-th CCE for the DCI, where the relationship between L and K is not limited here, which may be freely combined according to requirements. For example, in case that L=1 and K=1, it means that the frequency starting locations of the PRB for PUCCH transmission and the CCE for the DCI are aligned. For another example, L is 1/2 of the frequency width of the resource occupied by PUCCH and K is 1/2 of the frequency width of the resource occupied by DCI, which means that the center frequency locations of the resource occupied by PUCCH and the resource occupied by DCI are aligned.

Based on the foregoing embodiments, in the present embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of the starting PRB for PUCCH transmission to be the same as a frequency location of a first PRB for a first message or a third message, where the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ bases on the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$;

where $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

In the present embodiment, the frequency location of PUCCH is determined based on a frequency location of a given uplink channel transmitted by the UE. For example, the given uplink channel may be Msgl or Msg3. The frequency location for the PUCCH transmission is determined based on a frequency location of Msgl or Msg3. For example, a frequency location of the first PRB for the PUCCH is the same as a frequency location of the first PRB for Msgl or Msg3; or a frequency location of the L-th PRB for the PUCCH is the same as a frequency location of the K-th PRB for Msgl or Msg3; or a frequency location of the L-th PRB for the PUCCH is a location determined based on a frequency location of the K-th PRB for Msgl or Msg3 plus a frequency offset, where the frequency offset may be predefined or transmitted (such as in SIB 1 or DCI) and indicated by the network side device; or $RB_{BWP}^{offset}$ is determined based on a frequency location of the K-th PRB for Msgl or Msg3 and a frequency location of the first PRB for the PUCCH is then determined based on the formula $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$. Msg1 is a first message and the first message is a random access request message or a random access pilot signal, and Msg3 is a third message and the third message is a connection establishment request message in a random access procedure.

Based on the foregoing embodiments, in the present embodiment, in case that the first resource is the resource for PUCCH transmission with frequency hopping, the determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$, determining a frequency location corresponding to the second hop when the first type of terminal transmits PUCCH at $\left\lfloor \frac{r_{PUCCH}}{8} \right\rfloor = 0$ based on a replaced first sub-relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH, where the fourth frequency offset is $N_{BWP}^{size} - N_{RedCap}^{PUCCH}$;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$.

In the present embodiment, after it is determined to transmit the PUCCH with frequency hopping in a predefined mode and/or a mode indicated by a network side device, the resources for PUCCH transmission with frequency hopping may be determined as below:

A, replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model, where $N_{RedCap}^{PUCCH}$ is less than or equal to the maximum bandwidth $N_{RedCap}^{size}$ supported by the first type of terminal, and the maximum bandwidth supported by the second type of terminal is larger than the first preset value.

In the present embodiment, in case that the first type of terminal transmits the PUCCH resource with frequency hopping, the first resource for PUCCH transmission may be determined by reusing a method for determining a frequency location corresponding to the first hop (hop1) or the second hop (hop2) when the traditional normal terminal (the second type of terminal) transmits the PUCCH with frequency hopping. However, a bandwidth parameter $N_{BWP}^{size}$ of BWP in the initial formula is replaced with a bandwidth parameter $N_{RedCap}^{PUCCH}$, where $N_{RedCap}^{PUCCH}$ is less than or equal to the maximum bandwidth $N_{RedCap}^{size}$ supported by the RedCap UE. For example, resources for hop1 and hop2 are determined based on new bandwidth parameter:

in case of $\left\lfloor \frac{r_{PUCCH}}{8} \right\rfloor = 0$, a first PRB index in the hop1 is $RB_{BWP}^{offset} + \left\lfloor \frac{r_{PUCCH}}{N_{CS}} \right\rfloor$, and a first PRB index in the hop2 is $N_{RedCap}^{PUCCH} - 1 - RB_{BWP}^{offset} - \left\lfloor \frac{r_{PUCCH}}{N_{CS}} \right\rfloor$; and

in case of $\left\lfloor \frac{r_{PUCCH}}{8} \right\rfloor = 1$, a first PRB index in the hop1 is $N_{RedCap}^{PUCCH} - 1 - RB_{BWP}^{offset} - \left\lfloor \frac{r_{PUCCH}-8}{N_{CS}} \right\rfloor$, and a first PRB index in the hop2 is $RB_{BWP}^{offset} + \left\lfloor \frac{r_{PUCCH}-8}{N_{CS}} \right\rfloor$;

as such, the frequency interval between the first hop and the second hop when the RedCap UE transmits the PUCCH is within a bandwidth range of the RedCap UE and thus the RedCap UE can transmits the PUCCH normally.

In an embodiment, $N_{RedCap}^{PUCCH} = N_{RedCap}^{size}$, as such, the frequency interval for PUCCH transmission may be maximized while less than or equal to the bandwidth range of the RedCap UE, and then the frequency diversity gain can be obtained as much as possible.

In an embodiment, an offset $RB_{Redcap}^{offset}$ may be introduced to shift the frequency location for the PUCCH resource set of the RedCap UE in frequency (the shift amount is $RB_{Redcap}^{offset}$ ), for example, both hop1 and hop2 are shifted by $RB_{Redcap}^{offset}$:

in case of $\left\lfloor \frac{r_{PUCCH}}{8} \right\rfloor = 0$, a first PRB index in the hop1 is $RB_{Redcap}^{offset} + RB_{BWP}^{offset} + \left\lfloor \frac{r_{PUCCH}}{N_{CS}} \right\rfloor$; and a first PRB index in the hop2 is $RB_{Redcap}^{offset} + N_{RedCap}^{PUCCH} - 1 - RB_{BWP}^{offset} - \left\lfloor \frac{r_{PUCCH}}{N_{CS}} \right\rfloor$; and

in case of $\left\lfloor \frac{r_{PUCCH}}{8} \right\rfloor = 1$, a first PRB index in the hop1 is $RB_{Redcap}^{offset} + N_{RedCap}^{PUCCH} - 1 - RB_{BWP}^{offset} - \left\lfloor \frac{r_{PUCCH}-8}{N_{CS}} \right\rfloor$, and a first PRB index in the hop2 is $RB_{Redcap}^{offset} + RB_{BWP}^{offset} + \left\lfloor \frac{r_{PUCCH}-8}{N_{CS}} \right\rfloor$.

In the present embodiment, a possible value of $RB_{Redcap}^{offset}$ may be $\left\lceil \frac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. Msgl is a first message and the first message is a random access request message or a random access pilot signal, and Msg3 is a third message and the third message is a connection establishment request message in a random access procedure. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

B, determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH; in the present embodiment, after it is determined to transmit the PUCCH with frequency hopping in a predefined mode and/or a mode indicated by a network side device, the resources for PUCCH transmission with frequency hopping may be determined as below:

reusing the calculation method for the frequency locations corresponding to the hop1 and hop2 and performing modulo operation for the bandwidth parameter $N_{RedCap}^{PUCCH}$ during calculation of frequency locations by using the initial calculation formula for the hop1 and hop2, where $N_{RedCap}^{PUCCH}$ is less than or equal to the maximum bandwidth supported by RedCap UE; that is:

in case of $\left\lfloor \frac{r_{PUCCH}}{8} \right\rfloor = 0$, a first PRB index in the hop1 is $\left( RB_{BWP}^{offset} + \left\lfloor \frac{r_{PUCCH}}{N_{CS}} \right\rfloor \right) mod \ N_{RedCap}^{PUCCH}$; and a first PRB index in the hop2 is $\left(N_{BWP}^{size} - 1 - RB_{BWP}^{offset} - \left\lfloor \frac{r_{PUCCH}}{N_{CS}} \right\rfloor\right) \mod N_{RedCap}^{PUCCH}$ ; and

in case of $\left\lfloor \frac{r_{PUCCH}}{8} \right\rfloor = 1$ , a first PRB index in the hop1 is $\left(N_{BWP}^{size} - 1 - RB_{BWP}^{offset} - \left\lfloor \frac{r_{PUCCH}-8}{N_{CS}} \right\rfloor\right) \mod N_{RedCap}^{PUCCH}$ ; and a first PRB index in the hop2 is $\left(RB_{BWP}^{offset} + \left\lfloor \frac{r_{PUCCH}-8}{N_{CS}} \right\rfloor\right) \mod N_{RedCap}^{PUCCH}$ ;

A Mod B is called modulo operation, and obtains a value in the range of 0 to (B-1) after A Mod B is performed regardless of the value of A. As such, the frequency location corresponding to the two hops of the PUCCH resource can always be within the range of $N_{RedCap}^{PUCCH}$ .

In an embodiment, $N_{RedCap}^{PUCCH} = N_{RedCap}^{size}$ , as such, the frequency interval for PUCCH transmission may be maximized while less than or equal to the bandwidth range of the RedCap UE, and then the frequency diversity gain can be obtained as much as possible.

In an embodiment, an offset $RB_{Redcap}^{offset}$ may be introduced to shift the frequency location for the PUCCH resource set of the RedCap UE in frequency (the shift amount is $RB_{Redcap}^{offset}$ ), for example, both hop1 and hop2 are shifted by $RB_{Redcap}^{offset}$ :

in case of $\left\lfloor \frac{r_{PUCCH}}{8} \right\rfloor = 0$ , a first PRB index in the hop1 is $RB_{Redcap}^{offset} + \left[\left(RB_{BWP}^{offset} + \left\lfloor \frac{r_{PUCCH}}{N_{CS}} \right\rfloor\right) \mod N_{RedCap}^{PUCCH}\right]$ ; and a first PRB index in the hop2 is $RB_{Redcap}^{offset} + \left[\left(N_{BWP}^{size} - 1 - RB_{BWP}^{offset} - \left\lfloor \frac{r_{PUCCH}}{N_{CS}} \right\rfloor\right) \mod N_{RedCap}^{PUCCH}\right]$ ; and

in case of $\left\lfloor \frac{r_{PUCCH}}{8} \right\rfloor = 1$ , a first PRB index in the hop1 is $RB_{Redcap}^{offset} + \left[\left(N_{BWP}^{size} - 1 - RB_{BWP}^{offset} - \left\lfloor \frac{r_{PUCCH}-8}{N_{CS}} \right\rfloor\right) \mod N_{RedCap}^{PUCCH}\right]$ ; and a first PRB index in the hop2 is $RB_{Redcap}^{offset} + \left[\left(RB_{BWP}^{offset} + \left\lfloor \frac{r_{PUCCH}-8}{N_{CS}} \right\rfloor\right) \mod N_{RedCap}^{PUCCH}\right]$ .

In the present embodiment, a possible value of $RB_{Redcap}^{offset}$ may be $\left\lceil \frac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. Msgl is a first message and the first message is a random access request message or a random access pilot signal, and Msg3 is a third message and the third message is a connection establishment request message in a random access procedure. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

By shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

C, replacing a bandwidth parameter $N_{BWP}^{size}$ of the UL initial BWP in a first sub-relationship model corresponding to $\left\lfloor \dfrac{r_{PUCCH}}{8} \right\rfloor = 0$ among relationship models used to determine a frequency location corresponding to a second hop when the second type of terminal transmits PUCCH with a first bandwidth parameter $N_{RedCap}^{PUCCH}$, determining a frequency location corresponding to the second hop when the first type of terminal transmits PUCCH at $\left\lfloor \dfrac{r_{PUCCH}}{8} \right\rfloor = 0$ based on the first sub-a replaced relationship model, and determining a frequency location corresponding to the second hop when the first type of terminal transmits PUCCH at $\left\lfloor \dfrac{r_{PUCCH}}{8} \right\rfloor = 1$ based on a fourth frequency offset and a second sub-relationship model corresponding to $\left\lfloor \dfrac{r_{PUCCH}}{8} \right\rfloor = 1$ among the relationship models used to determine the frequency location corresponding to the second hop when the second type of terminal transmits PUCCH, where the fourth frequency offset is $N_{BWP}^{size} - N_{RedCap}^{PUCCH}$.

In the present embodiment, after it is determined to transmit the PUCCH with frequency hopping in a predefined mode and/or a mode indicated by a network side device, the resources for PUCCH transmission with frequency hopping may be determined as below:

the calculation formulas for hop1 and hop2 for the second type of terminal are reused, the first bandwidth parameter is introduced, and the location of hop2 is adjusted based on the value of $\left\lfloor \dfrac{r_{PUCCH}}{8} \right\rfloor$,

in case of $\left\lfloor \dfrac{r_{PUCCH}}{8} \right\rfloor = 0$, for hop1, the initial formula is still reused, that is, $RB_{BWP}^{offset} + \left\lfloor \dfrac{r_{PUCCH}}{N_{CS}} \right\rfloor$; and for

hop2, $N_{BWP}^{size}$ is replaced with $N_{RedCap}^{PUCCH}$ in the initial formula, that is, $N_{RedCap}^{PUCCH} - 1 - RB_{BWP}^{offset} - \left\lfloor \dfrac{r_{PUCCH}}{N_{CS}} \right\rfloor$; and

in case of $\left\lfloor \dfrac{r_{PUCCH}}{8} \right\rfloor = 1$, for hop1, the initial formula is still reused, that is, $N_{BWP}^{size} - 1 - RB_{BWP}^{offset} - \left\lfloor \dfrac{r_{PUCCH}-8}{N_{CS}} \right\rfloor$; and for hop2, a fourth frequency offset ($N_{BWP}^{size} - N_{RedCap}^{PUCCH}$) is added, that is, $(N_{BWP}^{size} - N_{RedCap}^{PUCCH}) + RB_{BWP}^{offset} + \left\lfloor \dfrac{r_{PUCCH}-8}{N_{CS}} \right\rfloor$; where maybe $N_{RedCap}^{PUCCH} = N_{RedCap}^{size}$.

In the method of present embodiment, based on that a value of $\left\lfloor \dfrac{r_{PUCCH}}{8} \right\rfloor$ is 0 or 1, PUCCH may concentrate in the low frequency or high frequency of the UL BWP, respectively. Compared with the previous method, one of its advantages is that the base station may distribute RedCap UEs by indicating the value of $r_{PUCCH}$ through DCI and the PUCCH transmission for different RedCap UEs is unnecessarily concentrated in an area with a frequency bandwidth of $N_{RedCap}^{PUCCH}$.

In an embodiment, an offset $RB_{Redcap}^{offset}$ may be introduced to shift the frequency location for the PUCCH resource set of the RedCap UE in frequency (the shift amount is $RB_{Redcap}^{offset}$ ). The difference from the previous is that hop1 may be shifted by $RB_{Redcap}^{offset}$ and the hop2 may be shifted by $-RB_{Redcap}^{offset}$ :

in case of $\left\lfloor \dfrac{r_{PUCCH}}{8} \right\rfloor = 0$ , a first PRB index in the hop1 is $RB_{Redcap}^{offset} + RB_{BWP}^{offset} + \left\lfloor \dfrac{r_{PUCCH}}{N_{CS}} \right\rfloor$ ; and a first PRB index in the hop2 is $RB_{Redcap}^{offset} + N_{RedCap}^{PUCCH} - 1 - RB_{BWP}^{offset} - \left\lfloor \dfrac{r_{PUCCH}}{N_{CS}} \right\rfloor$ ; and

in case of $\left\lfloor \dfrac{r_{PUCCH}}{8} \right\rfloor = 1$ , a first PRB index in the hop1 is $N_{BWP}^{size} - RB_{Redcap}^{offset} - 1 - RB_{BWP}^{offset} - \left\lfloor \dfrac{r_{PUCCH}-8}{N_{CS}} \right\rfloor$ , and a first PRB index in the hop2 is $(N_{BWP}^{size} - N_{RedCap}^{PUCCH}) - RB_{Redcap}^{offset} + RB_{BWP}^{offset} + \left\lfloor \dfrac{r_{PUCCH}-8}{N_{CS}} \right\rfloor$ .

In the present embodiment, a possible value of $RB_{Redcap}^{offset}$ may be $\left\lceil \dfrac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msg1 or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msg1 or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved. In addition, an effect of dividing the PUCCH of different RedCap UEs to different frequency ranges is achieved.

D, determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$ ;
after it is determined to transmit the PUCCH with frequency hopping in a predefined mode and/or a mode indicated by a network side device, the resources for PUCCH transmission with frequency hopping may be determined as below:

the formulas for hop1 and hop2 for the traditional second type of terminal (normal UE) are totally reused, where for the first type of terminal (reduced capability UE, RedCap UE), by designing $RB_{BWP}^{offset}$ in the formulas, an interval of frequency locations corresponding to hop1 and hop2 calculated according to the formulas is less than or equal to the maximum bandwidth supported by the RedCap UE. For example, $RB_{BWP}^{offset}$ of the RedCap UE may meet the following conditions:

$$N_{BWP}^{size} - 2 * RB_{BWP}^{offset} \leq N_{RedCap}^{PUCCH}$$

that is: $RB_{BWP}^{offset} \geq \dfrac{N_{BWP}^{size} - N_{RedCap}^{PUCCH}}{2}$

in an embodiment, $RB_{BWP}^{offset} = \left\lceil \dfrac{N_{BWP}^{size} - N_{RedCap}^{PUCCH}}{2} \right\rceil$ ; and in another embodiment, $N_{RedCap}^{PUCCH} = N_{RedCap}^{size}$ .

By the present method, the hop1 and hop2 in which the RedCap UE transmits the PUCCH are constrained within the central $N_{RedCap}^{PUCCH}$ bandwidth range of the BWP, and the RedCap UE can transmit the PUCCH normally. This method is especially suitable for time division duplexing (TDD) systems since the center frequency at which the RedCap UE transmits the PUCCH may also be the center frequency of the uplink BWP (such as UL initial BWP), where the center frequencies of the downlink BWP and the uplink BWP in the TDD system are the same. In addition, in case that the uplink and downlink are switched in the TDD system, retuning can be avoided in the method according to the present application.

Although the above method is illustrated in case that a value of $RB_{BWP}^{offset}$ used by the RedCap UE is different from the value of $RB_{BWP}^{offset}$ used by the traditional UE, the method may further be equivalent to a method in which $RB_{BWP}^{offset}$ used by the RedCap UE is a sum of $RB_{BWP}^{offset}$ used by the traditional UE and an offset $RB_{Redcap}^{offset}$ . The two methods are substantially the same.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

E, determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by the network side device; an absolute value of the fifth frequency offset is less than or equal to $N_{RedCap}^{size}$ .

In the present embodiment, after it is determined to transmit the PUCCH with frequency hopping in a predefined mode and/or a mode indicated by a network side device, the resources for PUCCH transmission with frequency hopping may be determined as below:

step 1, any of the methods in the above embodiments is used to determine a frequency and the frequency is regarded as the frequency in hop1, for example, a frequency location of the first PRB in the hop1 is determined to be

$RB_{Redcap}^{offset} + RB_{BWP}^{offset} + \left\lfloor \dfrac{r_{PUCCH}}{N_{CS}} \right\rfloor$ ; and

step 2, a frequency location corresponding to hop2 is determined based on the frequency location corresponding to the hop1 and a frequency offset $FH_{RedCap}^{PUCCH}$ , for example, the frequency location of the first PRB in hop2 is determined to be $RB_{Redcap}^{offset} + RB_{BWP}^{offset} + \left\lfloor \dfrac{r_{PUCCH}}{N_{CS}} \right\rfloor + FH_{RedCap}^{PUCCH}$ .

In an embodiment, the same $FH_{RedCap}^{PUCCH}$ may be used regardless of the value of $\left\lfloor \dfrac{r_{PUCCH}}{N_{CS}} \right\rfloor$ ;

in another embodiment, $FH_{RedCap}^{PUCCH}$ may be different base on that $\left\lfloor \dfrac{r_{PUCCH}}{N_{CS}} \right\rfloor$ is 0 or 1. For example, $FH_{RedCap}^{PUCCH}$ may be a positive value in case that $\left\lfloor \dfrac{r_{PUCCH}}{N_{CS}} \right\rfloor$ is 0 while $FH_{RedCap}^{PUCCH}$ may be a negative value in case that $\left\lfloor \dfrac{r_{PUCCH}}{N_{CS}} \right\rfloor$ is

1. $FH_{RedCap}^{PUCCH}$ is a frequency offset, which represents the frequency difference between hop2 and hop1, and may be predefined, or indicated by the network side device. For example, it may be indicated through SIB 1 or DCI.

In the method according to the embodiment of the present application, there is no need to design frequency locations for hop1 and hop2 respectively, and the frequency location corresponding to hop2 may always be determined based on the frequency location corresponding to hop1 and a frequency offset, which is simpler and more flexible. In an embodiment, $\left|FH_{RedCap}^{PUCCH}\right| \le N_{RedCap}^{size}$, and thus the frequency difference between hop1 and hop2 is less than or equal to the maximum bandwidth supported by the RedCap UE.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

Based on the above embodiment, in the present embodiment, the replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$, and determining frequency locations corresponding to a first hop and a second hop when the first type of terminal transmits PUCCH based on a replaced relationship model includes:

replacing a bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model and a preset frequency offset.

In the present embodiment, the determining frequency locations corresponding to the first hop and the second hop when the first type of terminal transmits PUCCH based on the replaced relationship model and the preset frequency offset includes directly adding the preset frequency offset to the replaced relationship model and determining frequency locations corresponding to the first hop and the second hop when the first type of terminal transmits PUCCH. In another embodiment, the determining frequency locations corresponding to the first hop and the second hop when the first type of terminal transmits PUCCH based on the replaced relationship model and the preset frequency offset includes performing other operations on the replaced relationship model and the preset frequency offset and then determining frequency locations corresponding to the first hop and the second hop when the first type of terminal transmits PUCCH, which is not limited in the present embodiment.

In the present embodiment, the introduced preset frequency offset may be $RB_{Redcap}^{offset}$ and the preset frequency offset may be used for shifting the frequency location for the PUCCH resource set of the RedCap UE (the shift amount is $RB_{Redcap}^{offset}$), for example, both hop1 and hop2 are shifted by $RB_{Redcap}^{offset}$:

in case of $\left\lfloor \dfrac{r_{PUCCH}}{8} \right\rfloor = 0$, a first PRB index in the hop1 is $RB_{Redcap}^{offset} + RB_{BWP}^{offset} + \left\lfloor \dfrac{r_{PUCCH}}{N_{CS}} \right\rfloor$; and a first PRB index in the hop2 is $RB_{Redcap}^{offset} + N_{RedCap}^{PUCCH} - 1 - RB_{BWP}^{offset} - \left\lfloor \dfrac{r_{PUCCH}}{N_{CS}} \right\rfloor$; and

in case of $\left\lfloor \dfrac{r_{PUCCH}}{8} \right\rfloor = 1$, a first PRB index in the hop1 is $RB_{Redcap}^{offset} + N_{RedCap}^{PUCCH} - 1 - RB_{BWP}^{offset} - \left\lfloor \dfrac{r_{PUCCH}-8}{N_{CS}} \right\rfloor$, and a first PRB index in the hop2 is $RB_{Redcap}^{offset} + RB_{BWP}^{offset} + \left\lfloor \dfrac{r_{PUCCH}-8}{N_{CS}} \right\rfloor$.

In the present embodiment, a possible value of $RB_{Redcap}^{offset}$ may be $\left\lceil \dfrac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msgl or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msgl or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

Based on the foregoing embodiments, in the present embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation for the first bandwidth parameter $N_{RedCap}^{PUCCH}$ on the initial frequency locations and determining frequency locations corresponding to the first hop and the second hop when the first type of terminal transmits PUCCH based on a modulo operation result and a preset frequency offset.

In the present embodiment, the determining frequency locations corresponding to the first hop and the second hop when the first type of terminal transmits PUCCH based on the modulo operation result and the preset frequency offset includes directly adding the preset frequency offset to the modulo operation result and then determining frequency locations corresponding to the first hop and the second hop when the first type of terminal transmits PUCCH. In another embodiment, the determining frequency locations corresponding to the first hop and the second hop when the first type of terminal transmits PUCCH based on the modulo operation result and the preset frequency offset includes performing other operations on the modulo operation result and the preset frequency offset and then determining frequency locations corresponding to the first hop and the second hop when the first type of terminal transmits PUCCH, which is not limited in the present embodiment.

In the present embodiment, a preset frequency offset $RB_{Redcap}^{offset}$ may be introduced to shift the frequency location for the PUCCH resource set of the RedCap UE (the shift amount is $RB_{Redcap}^{offset}$), for example, both hop1 and hop2 are shifted by $RB_{Redcap}^{offset}$:

in case of $\left\lfloor \frac{r_{PUCCH}}{8} \right\rfloor = 0$, a first PRB index in the hop1 is $RB_{Redcap}^{offset} + \left[ \left( RB_{BWP}^{offset} + \left\lfloor \frac{r_{PUCCH}}{N_{CS}} \right\rfloor \right) \mod N_{RedCap}^{PUCCH} \right]$; and a first PRB index in the hop2 is $RB_{Redcap}^{offset} + \left[ \left( N_{BWP}^{size} - 1 - RB_{BWP}^{offset} - \left\lfloor \frac{r_{PUCCH}}{N_{CS}} \right\rfloor \right) \mod N_{RedCap}^{PUCCH} \right]$;

in case of $\left\lfloor \frac{r_{PUCCH}}{8} \right\rfloor = 1$, a first PRB index in the hop1 is $RB_{Redcap}^{offset} + \left[ \left( N_{BWP}^{size} - 1 - RB_{BWP}^{offset} - \left\lfloor \frac{r_{PUCCH}-8}{N_{CS}} \right\rfloor \right) \mod N_{RedCap}^{PUCCH} \right]$, and a first PRB index in the hop2 is $RB_{Redcap}^{offset} + \left[ \left( RB_{BWP}^{offset} + \left\lfloor \frac{r_{PUCCH}-8}{N_{CS}} \right\rfloor \right) \mod N_{RedCap}^{PUCCH} \right]$.

In the present embodiment, a possible value of $RB_{Redcap}^{offset}$ may be $\left\lceil \frac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msg1 or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msg1 or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

Based on the foregoing embodiments, in the present embodiment, the preset frequency offset is any one or more of the following items:

$\left\lceil \frac{8}{N_{CS}} \right\rceil + 1$, where $N_{CS}$ represents a total number of initial cyclic shift indices;

a frequency location of the starting PRB or the central PRB of a resource occupied by a first message or a third message, where the first message is a random access request message or a random access pilot signal, and the third message is a connection establishment request message in a random access procedure.

In the present embodiment, a possible value of $RB_{Redcap}^{offset}$ may be $\left\lceil \frac{8}{N_{CS}} \right\rceil + 1$, which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msg1 or Msg3. This design is especially suitable for FDD systems, and no retuning is required when the PUCCH is transmitted over the uplink frequency band since a frequency at which the RedCap UE transmits the PUCCH is close to the frequency of Msg1 or Msg3.

Based on the foregoing embodiments, in the present embodiment, the possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

In the present embodiment, the formulas for hop1 and hop2 for the traditional second type of terminal (normal UE) are reused, where for the first type of terminal (reduced capability UE, RedCap UE), by designing $RB_{BWP}^{offset}$ in the formulas, an interval of frequency locations corresponding to hop1 and hop2 calculated according to the formula is less than or equal to the maximum bandwidth supported by the RedCap UE. For example, $RB_{BWP}^{offset}$ of the RedCap UE may meet the following conditions:

$$N_{BWP}^{size} - 2 * RB_{BWP}^{offset} \leq N_{RedCap}^{PUCCH}$$

that is: $RB_{BWP}^{offset} \geq \frac{N_{BWP}^{size} - N_{RedCap}^{PUCCH}}{2}$

in an embodiment, $RB_{BWP}^{offset} = \left\lceil \frac{N_{BWP}^{size} - N_{RedCap}^{PUCCH}}{2} \right\rceil$; and in another embodiment, $N_{RedCap}^{PUCCH} = N_{RedCap}^{size}$.

By the present method, the hop1 and hop2 in which the RedCap UE transmits the PUCCH are constrained within the central $N_{RedCap}^{PUCCH}$ bandwidth range of the BWP, and the RedCap UE can transmit the PUCCH normally. This method is especially suitable for time division duplexing (TDD) systems since the center frequency at which the RedCap UE transmits the PUCCH may also be the center frequency of the uplink BWP (such as UL initial BWP), where the center frequencies of the downlink BWP and the uplink BWP in the TDD system are the same. In addition, in case that the uplink and downlink are switched in the TDD system, retuning can be avoided in the method.

In an embodiment, the first indication information may indicate at least one of the above parameters: $N_{RedCap}^{PUCCH}$, $RB_{BWP}^{offset}$, $RB_{Redcap}^{offset}$ or $FH_{RedCap}^{PUCCH}$.

The present application is described below in detail through specific embodiments.

The present application is mainly applied to 5G NR systems, including network side device (such as base stations, gNBs) and a terminal (such as a UE), and the terminal especially includes reduced capability terminal (such as reduced capability UE, RedCap UE, namely the first type of terminal). The present application may also be applied to other systems, as long as the terminal needs to transmit the PUCCH to the network side device.

FIG. 4 is a schematic diagram of a use scenario for the present application according to an embodiment of the present application. Multiple UEs including UE1 and UE2 initiate random access to the gNB to apply for a radio network connection service; the gNB receives the random access request from at least one UE and provides radio services for it. Data interaction and transmission are performed among the gNB and UE1 and UE2 through radio communication.

For example, the solution of the present application is that the network side device transmits the first indication information to the reduced capability UE (RedCap UE), and the first indication information is used to indicate that a bandwidth range of the first resource used by the RedCap UE in transmitting the physical uplink control channel (PUCCH) in the uplink (UL) initial bandwidth part (BWP) is less than or equal to a maximum bandwidth supported by the RedCap UE. The solution according to the present application is explained and described below with reference to the accompanying drawings.

Embodiment 1:

In case that the network side device transmits the first indication information to the RedCap UE, where the first indication information is used to indicate that a bandwidth range of the first resource used by the RedCap UE in transmitting the physical uplink control channel (PUCCH) in the uplink (UL) initial bandwidth part (BWP) is less than or equal to a maximum bandwidth supported by the RedCap UE, it may indicate that the RedCap UE transmits the PUCCH without frequency hopping or with frequency hopping, and if the frequency hopping is used, a frequency interval between a first hop and a second hop is less than or equal to the maximum bandwidth supported by the RedCap UE. Whether to transmit the PUCCH with frequency hopping or without frequency hopping may be determined in a predefined mode, or a mode indicated by a network side device.

For example, the RedCap UE may determine whether to transmit the PUCCH with frequency hopping based on the following modes:

A, predefined mode
for example, it may be predefined directly through a protocol that the RedCap UE does not perform the PUCCH transmission with frequency hopping before obtaining user-specific RRC configuration; or that in case that the bandwidth of UL BWP (such as UL initial BWP) of the RedCap UE is larger than a threshold value (such as the maximum bandwidth supported by the RedCap UE), the PUCCH transmission with frequency hopping is not performed, otherwise, the PUCCH transmission with frequency hopping is performed.

As such, no any indication of the network side device is required in the predefined mode and the indication overhead can be saved.

B. A mode indicated by a network side device

For example, it may be determined whether to perform the PUCCH transmission with frequency hopping by receiving frequency hopping indication information transmitted by a gNB. For example, the frequency hopping indication information is used for indicating whether the RedCap UE transmits the PUCCH with frequency hopping and is carried in a system information block (SIB1) for being broadcasted and transmitted or may be carried in the downlink control information (DCI).

Although the mode indicated by the network side device is more flexible, downlink indication overhead is required.

C. Combination of both predefined mode and the mode indicated by the network side device

for example, in case that the bandwidth of UL BWP (such as UL initial BWP) of the RedCap UE is larger than a threshold value (such as the maximum bandwidth supported by the RedCap LTE), the PUCCH is not transmitted with frequency hopping; and in case that the bandwidth of LTL BWP of the RedCap UE is less than or equal to the threshold value, it is determined whether to perform the PUCCH transmission with frequency hopping based on the frequency hopping indication information from the gNB.

For example, the first resource for PUCCH transmission includes any one of the following items: (1) a resource for PUCCH transmission without frequency hopping, which means that in case of transmitting PUCCH, the PUCCH is transmitted without two hops; (2) a resource for PUCCH transmission with frequency hopping, where a frequency interval between a first hop and a second hop is less than or equal to the maximum bandwidth supported by the first type of terminal.

The manner of determining the first resource in case that the PUCCH is transmitted without frequency hopping is described below.

In an embodiment, the frequency location for PUCCH transmission without frequency hopping may be determined by the following schemes.

Scheme 1: the method for determining the frequency location corresponding to the first hop (hop1) or the second hop (hop2) in case that the second type of terminal transmits the PUCCH with frequency hopping may be reused to determine the frequency location at which the first type of terminal transmits the PUCCH without frequency hopping.

For example, it is agreed to determine the frequency location for the PUCCH transmission without frequency hopping corresponding to the first type of terminal using the same method as a method for determining a frequency location corresponding to the hop1 corresponding to the second type of terminal. For example, in case of $\left\lfloor \frac{r_{PUCCH}}{8} \right\rfloor = 0$, a first PRB index of the PUCCH transmission for the first type of terminal is $RB_{BWP}^{offset} + \left\lfloor \frac{r_{PUCCH}}{N_{CS}} \right\rfloor$; and in case of $\left\lfloor \frac{r_{PUCCH}}{8} \right\rfloor = 1$, a first PRB index of the PUCCH transmission for the first type of terminal is $N_{BWP}^{size} - 1 - RB_{BWP}^{offset} - \left\lfloor \frac{r_{PUCCH} - 8}{N_{CS}} \right\rfloor$. Refer to a schematic diagram of an example of PUCCH transmission without frequency hopping, as shown in FIG. 5.

For example, it is agreed to determine the frequency location for the first type of terminal to transmit the PUCCH using the same method as a method for determining a frequency location corresponding to the hop2 of the second type of terminal; or

the first PRB index of the PUCCH transmission for the first type of terminal is determined using $RB_{BWP}^{offset} + \left\lfloor \frac{r_{PUCCH}}{N_{CS}} \right\rfloor$ (or $N_{BWP}^{size} - 1 - RB_{BWP}^{offset} - \left\lfloor \frac{r_{PUCCH} - 8}{N_{CS}} \right\rfloor$) regardless of the value of $\left\lfloor \frac{r_{PUCCH}}{8} \right\rfloor$.

Through the above method, the resource location for the first type of terminal to transmit the PUCCH may be directly determined, the implementation is simple, and the indication for the $r_{PUCCH}$ by the traditional DCI is reused, which simplifies the indication by the base station.

In an embodiment, the first indication information indicates $r_{PUCCH}$.

In case that the first type of terminal (also known as RedCap UE below) and the second type of terminal (also known as traditional UE below) completely share the above formulas and the parameter $RB_{BWP}^{offset}$, the PUCCH resources used by the RedCap UE and the traditional UE are likely to interlace. On the basis of the above methods, the PUCCH resources used by the RedCap UE and the traditional UE may be not interlaced by any of the following methods.

(1) An offset $RB_{Redcap}^{offset}$ is introduced for determining the frequency location for the PUCCH transmitted by the RedCap UE, for example:

in case of $\left\lfloor \frac{r_{PUCCH}}{8} \right\rfloor = 0$, a first PRB index of the PUCCH transmission is $RB_{Redcap}^{offset} + RB_{BWP}^{offset} + \left\lfloor \frac{r_{PUCCH}}{N_{CS}} \right\rfloor$; and

in case of $\left\lfloor \frac{r_{PUCCH}}{8} \right\rfloor = 1$, a first PRB index of the PUCCH transmission is $N_{BWP}^{size} - 1 -$

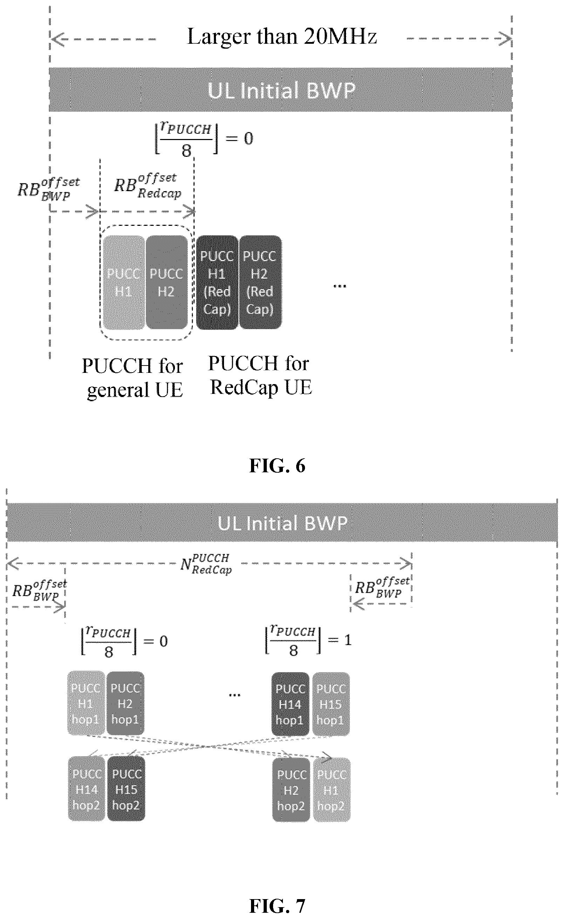

$$RB_{Redcap}^{offset} - RB_{BWP}^{offset} - \left\lfloor \frac{r_{PUCCH}-8}{N_{CS}} \right\rfloor$$ , one of the possible values of the $RB_{Redcap}^{offset}$ is $\left\lfloor \frac{8}{N_{CS}} \right\rfloor + 1$ . Refer to a schematic diagram of another example of PUCCH transmission without frequency hopping, as shown in FIG. 6.

(2) A value of the $RB_{BWP}^{offset}$ used by the RedCap UE is enabled to be different from a value of the $RB_{BWP}^{offset}$ used by the traditional UE through a predefinition and/or indication method (although the same formula such as $RB_{BWP}^{offset} + \left\lfloor \frac{r_{PUCCH}}{N_{CS}} \right\rfloor$ is still used), for example, the value is 8.

It should be noted that this method makes the PUCCH resources used by the RedCap UE and the PUCCH resources used by the traditional UE not interlaced, which helps reduce the impact of the RedCap UE on the traditional UE and ensures that both the RedCap UE and the traditional UE have sufficient PUCCH capacity.

Scheme 2: the frequency location for the RedCap UE to transmit the PUCCH is determined based on the frequency location of the corresponding received DCI.

After a DCI schedules a PDSCH reception for UE, the UE feeds back whether the PDSCH reception is correct in the PUCCH, and the frequency location of the PUCCH may be determined based on the frequency location of the scheduling DCI corresponding to the PDSCH to be fed back. For example:

a frequency location of the first PRB for the PUCCH is the same as a frequency domain starting location of a first CCE for the DCI; or
a frequency location of the L-th PRB for the PUCCH is the same as a frequency domain start position of the K-th CCE for the DCI; or
a frequency location of the L-th PRB for the PUCCH is a location determined based on a frequency domain starting location of the K-th CCE for the DCI plus a frequency offset, where the frequency offset may be predefined or transmitted (such as in SIB 1 or DCI) and indicated by the network side device; or
$RB_{BWP}^{offset}$ is determined based on a frequency domain starting location of the K-th CCE for the DCI and a frequency location of the first PRB for the PUCCH is then determined based on the formula $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ .

Scheme 3: a frequency location for the RedCap UE to transmit the PUCCH is determined based on a frequency location of other uplink channels transmitted by the RedCap UE.

Other uplink channels in the scheme 3 may be, for example, Msg1 or Msg3 (Msg1 is a first message and the first message is the random access request message or random access pilot signal, Msg3 is a third message and the third message is a connection establishment request message in a random access procedure). The frequency location for PUCCH transmission is determined based on the frequency location of Msg1 or Msg3. For example:

a frequency location of the first PRB for the PUCCH is the same as a frequency location of the first PRB for Msg1 or Msg3; or
a frequency location of the L-th PRB for the PUCCH is the same as a frequency location of the K-th PRB for Msg1 or Msg3; or
a frequency location of the L-th PRB for the PUCCH is a location determined based on a frequency location of the K-th PRB for Msg1 or Msg3 plus a frequency offset, where the frequency offset may be predefined or transmitted (such as in SIB 1 or DCI) and indicated by the network side device; or
$RB_{BWP}^{offset}$ is determined based on a frequency location of the K-th PRB for Msg1 or Msg3 and a frequency location of the first PRB for the PUCCH is then determined based on the formula $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ .

Scheme 4: a frequency location for the RedCap UE to transmit the PUCCH is indicated by the indication information carried in Msg4.

In the scheme 4, indication information for a frequency location of the PUCCH is transmitted by the gNB to the RedCap UE through Msg4 (also known as a contention resolution message) in the fourth step of the random access procedure and the RedCap UE can determine the frequency domain resource for the PUCCH based on the indication information carried in the Msg4. The indication information may directly indicate the frequency location where the first PRB for PUCCH is located.

The gNB may receive the PUCCH transmitted by the RedCap UE in the resource where the RedCap UE transmits the PUCCH.

A feasible implementation process is as follows:

(1) the RedCap UE receives downlink data transmitted by the network side device;
(2) the RedCap UE determines a resource for PUCCH transmission based on a predefined mode and/or the indication of the network side device, and transmits the PUCCH to feed back the downlink data; and
(3) the network side device receives the PUCCH in the resource where the PUCCH is located.

By the method according to the present embodiment, it may be ensured that the RedCap UE may always correctly transmit the PUCCH before obtaining the user-specific RRC configuration. In the present embodiment, the PUCCH is transmitted without frequency hopping, and the UE only needs to determine one resource location associated with the PUCCH to transmit the PUCCH, which is simple to implement.

Embodiment 2:

The present embodiment describes a method for determining a first resource in case that the PUCCH is transmitted with frequency hopping.

In the present embodiment, after it is determined to transmit the PUCCH with frequency hopping in a predefined mode and/or a mode indicated by a network side device, a resource for PUCCH transmission with frequency hopping may be determined in any of the following schemes.

Scheme 1: the calculation methods for the first hop (hop1) and the second hop (hop2) of the second type of terminal are reused, and a bandwidth parameter $N_{BWP}^{size}$ of BWP in the initial formula is replaced with a bandwidth parameter $N_{RedCap}^{PUCCH}$, where $N_{RedCap}^{PUCCH}$ is less than or equal to the maximum bandwidth $N_{RedCap}^{size}$ supported by the RedCap UE. For example, resources for hop 1 and hop2 are determined based on new bandwidth parameter:

in case of $\left\lfloor \frac{r_{PUCCH}}{8} \right\rfloor = 0$, a first PRB index in the hop1 is $RB_{BWP}^{offset} + \left\lfloor \frac{r_{PUCCH}}{N_{CS}} \right\rfloor$, and a first PRB index in the hop2 is $N_{RedCap}^{PUCCH} - 1 - RB_{BWP}^{offset} - \left\lfloor \frac{r_{PUCCH}}{N_{CS}} \right\rfloor$; and

in case of $\left\lfloor \frac{r_{PUCCH}}{8} \right\rfloor = 1$, a first PRB index in the hop1 is $N_{RedCap}^{PUCCH} - 1 - RB_{BWP}^{offset} - \left\lfloor \frac{r_{PUCCH}-8}{N_{CS}} \right\rfloor$, and a first PRB index in the hop2 is $RB_{BWP}^{offset} + \left\lfloor \frac{r_{PUCCH}-8}{N_{CS}} \right\rfloor$.

By the above scheme, the frequency interval between the first hop and the second hop when the RedCap UE transmits the PUCCH is within a bandwidth range of the RedCap UE and thus the RedCap UE can transmits the PUCCH normally.

In an embodiment, $N_{RedCap}^{PUCCH} = N_{RedCap}^{size}$, as such, the frequency interval for PUCCH transmission may be maximized while less than or equal to the bandwidth range of the RedCap UE, and then the frequency diversity gain can be obtained as much as possible.

In an embodiment, an offset $RB_{Redcap}^{offset}$ may be introduced to shift the frequency location for the PUCCH resource set of the RedCap UE in frequency (the shift amount is $RB_{Redcap}^{offset}$) for example, both hop1 and hop2 are shifted by $RB_{Redcap}^{offset}$ :

in case of $\left\lfloor \frac{r_{PUCCH}}{8} \right\rfloor = 0$ , a first PRB index in the hop1 is $RB_{Redcap}^{offset} + RB_{BWP}^{offset} + \left\lfloor \frac{r_{PUCCH}}{N_{CS}} \right\rfloor$ ; and a first

PRB index in the hop2 is $RB_{Redcap}^{offset} + N_{RedCap}^{PUCCH} - 1 - RB_{BWP}^{offset} - \left\lfloor \frac{r_{PUCCH}}{N_{CS}} \right\rfloor$ ; and

in case of $\left\lfloor \frac{r_{PUCCH}}{8} \right\rfloor = 1$ , a first PRB index in the hop1 is $RB_{Redcap}^{offset} + N_{RedCap}^{PUCCH} - 1 - RB_{BWP}^{offset} - \left\lfloor \frac{r_{PUCCH}-8}{N_{CS}} \right\rfloor$ , and a first PRB index in the hop2 is $RB_{Redcap}^{offset} + RB_{BWP}^{offset} + \left\lfloor \frac{r_{PUCCH}-8}{N_{CS}} \right\rfloor$ .

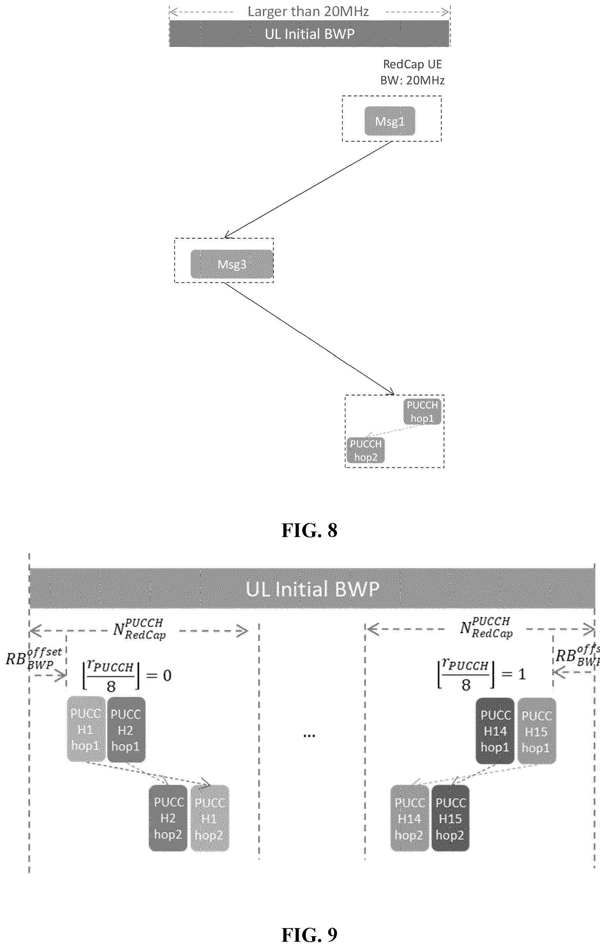

In the present embodiment, a possible value of $RB_{Redcap}^{offset}$ may be $\left\lfloor \frac{8}{N_{CS}} \right\rfloor + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msg1 or Msg3. Msg1 is a first message and the first message is the random access request message or random access pilot signal, Msg3 is a third message and the third message is a connection establishment request message in a random access procedure. This design is especially suitable for frequency division duplexing (FDD) systems, and no retuning is required when the PUCCH is transmitted over the uplink frequency band since a frequency at which the RedCap UE transmits the PUCCH is close to the frequency of Msg1 or Msg3. FIG. 8 is an example of a forced retuning between UL and UL on an uplink frequency band in a FDD system.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

Embodiment 3:

The present embodiment describes a method for determining a first resource in case that the PUCCH is transmitted with frequency hopping.

In the present embodiment, after it is determined to transmit the PUCCH with frequency hopping in a predefined mode and/or a mode indicated by a network side device, a resource for PUCCH transmission with frequency hopping may be determined in the following scheme: scheme 2: the calculation methods for the frequency locations corresponding to the hop1 and hop2 for the second type of terminal are reused and modulo operations are performed on the bandwidth parameter $N_{RedCap}^{PUCCH}$ during calculating frequency locations using the calculation formulas for the second type of terminal, where $N_{RedCap}^{PUCCH}$ is less than or equal to the maximum bandwidth supported by RedCap UE; that is:

in case of $\left\lfloor \frac{r_{PUCCH}}{8} \right\rfloor = 0$ , a first PRB index in the hop1 is $\left( RB_{BWP}^{offset} + \left\lfloor \frac{r_{PUCCH}}{N_{CS}} \right\rfloor \right) \bmod N_{RedCap}^{PUCCH}$ ; and a first PRB index in the hop2 is $\left( N_{BWP}^{size} - 1 - RB_{BWP}^{offset} - \left\lfloor \frac{r_{PUCCH}}{N_{CS}} \right\rfloor \right) \bmod N_{RedCap}^{PUCCH}$ ; and

in case of $\left\lfloor \frac{r_{PUCCH}}{8} \right\rfloor = 1$ , a first PRB index in the hop1 is $\left( N_{BWP}^{size} - 1 - RB_{BWP}^{offset} - \left\lfloor \frac{r_{PUCCH}-8}{N_{CS}} \right\rfloor \right) \bmod N_{RedCap}^{PUCCH}$ ; and a first PRB index in the hop2 is $\left( RB_{BWP}^{offset} + \right.$

$$\left\lfloor \frac{r_{PUCCH}-8}{N_{CS}} \right\rfloor \right) \bmod N_{RedCap}^{PUCCH}\; .$$

A Mod B is called modulo operation, and obtains a value in the range of 0 to (B-1) after A Mod B is performed regardless of the value of A. As such, the frequency location corresponding to the two hops of the PUCCH resource can always be within the range of $N_{RedCap}^{PUCCH}$ by this method. A specific example of the method is similar to FIG. 7 and the specific example is not repeated here.

In an embodiment, $N_{RedCap}^{PUCCH} = N_{RedCap}^{size}$ , as such, the frequency interval for PUCCH transmission may be maximized while less than or equal to the bandwidth range of the RedCap UE, and then the frequency diversity gain can be obtained as much as possible.

In an embodiment, an offset $RB_{Redcap}^{offset}$ may be introduced to shift the frequency location for the PUCCH resource set of the RedCap UE in frequency (the shift amount is $RB_{Redcap}^{offset}$ ) for example, both hop1 and hop2 are shifted by $RB_{Redcap}^{offset}$ :

in case of $\left\lfloor \frac{r_{PUCCH}}{8} \right\rfloor = 0$ , a first PRB index in the hop1 is $RB_{Redcap}^{offset} + \left[ \left( RB_{BWP}^{offset} + \left\lfloor \frac{r_{PUCCH}}{N_{CS}} \right\rfloor \right) \bmod N_{RedCap}^{PUCCH} \right]$ ; and a first PRB index in the hop2 is $RB_{Redcap}^{offset} + \left[ \left( N_{BWP}^{size} - 1 - RB_{BWP}^{offset} - \left\lfloor \frac{r_{PUCCH}}{N_{CS}} \right\rfloor \right) \bmod N_{RedCap}^{PUCCH} \right]$ ; and

in case of $\left\lfloor \frac{r_{PUCCH}}{8} \right\rfloor = 1$ , a first PRB index in the hop1 is $RB_{Redcap}^{offset} + \left[ \left( N_{BWP}^{size} - 1 - RB_{BWP}^{offset} - \left\lfloor \frac{r_{PUCCH}-8}{N_{CS}} \right\rfloor \right) \bmod N_{RedCap}^{PUCCH} \right]$ ; and a first PRB index in the hop2 is $RB_{Redcap}^{offset} + \left[ \left( RB_{BWP}^{offset} + \left\lfloor \frac{r_{PUCCH}-8}{N_{CS}} \right\rfloor \right) \bmod N_{RedCap}^{PUCCH} \right]$ .

In the present embodiment, a possible value of $RB_{Redcap}^{offset}$ may be $\left\lceil \frac{8}{N_{CS}} \right\rceil + 1$ , which may ensure that the PUCCH resources used by the RedCap UE and the general NR UE do not interlace. $RB_{Redcap}^{offset}$ may also be other values, for example, may be the frequency location of the first PRB or the frequency location of the center PRB of the resources occupied by Msg1 or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msg1 or Msg3.

By shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

Embodiment 4:

The present embodiment describes a method for determining a first resource in case that the PUCCH is transmitted with frequency hopping.

In the present embodiment, after it is determined to transmit the PUCCH with frequency hopping in a predefined mode and/or a mode indicated by a network side device, a resource for PUCCH transmission with frequency hopping may be determined in the following scheme 3:

Scheme 3: the calculation formulas for hop1 and hop2 for the second type of terminal are reused and the first bandwidth parameter is introduced, and the location of hop2 is adjusted based on the value of $\left\lfloor \frac{r_{PUCCH}}{8} \right\rfloor$, in case of $\left\lfloor \frac{r_{PUCCH}}{8} \right\rfloor = 0$, for hop1, the initial formula is still reused, that is, $RB_{BWP}^{offset} + \left\lfloor \frac{r_{PUCCH}}{N_{CS}} \right\rfloor$; and for hop2, $N_{BWP}^{size}$ is replaced with $N_{RedCap}^{PUCCH}$ in the initial formula, that is, $N_{RedCap}^{PUCCH} - 1 - RB_{BWP}^{offset} - \left\lfloor \frac{r_{PUCCH}}{N_{CS}} \right\rfloor$; and in case of $\left\lfloor \frac{r_{PUCCH}}{8} \right\rfloor = 1$, for hop1, the initial formula is still reused, that is, $N_{BWP}^{size} - 1 - RB_{BWP}^{offset} - \left\lfloor \frac{r_{PUCCH}-8}{N_{CS}} \right\rfloor$; and for hop2, a fourth frequency domain offset $(N_{BWP}^{size} - N_{RedCap}^{PUCCH})$ is added, that is, $(N_{BWP}^{size} - N_{RedCap}^{PUCCH}) + RB_{BWP}^{offset} + \left\lfloor \frac{r_{PUCCH}-8}{N_{CS}} \right\rfloor$; where maybe $N_{RedCap}^{PUCCH} = N_{RedCap}^{size}$.

RedCap RedCap-

In the method of present embodiment, based on that a value of $\left\lfloor \frac{r_{PUCCH}}{8} \right\rfloor$ is 0 or 1, PUCCH may concentrate in the low frequency or high frequency of the UL BWP, respectively. Refer to an example of PUCCH transmission with frequency hopping shown in FIG. 9. Compared with the previous method, one of its advantages is that the base station may distribute RedCap UEs by indicating the value of $r_{PUCCH}$ through DCI and the PUCCH transmission for different RedCap UEs is unnecessarily concentrated in an area with a frequency bandwidth of $N_{RedCap}^{PUCCH}$.

In an embodiment, an offset $RB_{Redcap}^{offset}$ may be introduced to shift the frequency location for the PUCCH resource set of the RedCap UE in frequency (the shift amount is $RB_{Redcap}^{offset}$). The difference from the previous is that hop 1 may be shifted by $RB_{Redcap}^{offset}$ and the hop2 may be shifted by $-RB_{Redcap}^{offset}$:

in case of $\left\lfloor \frac{r_{PUCCH}}{8} \right\rfloor = 0$, a first PRB index in the hop1 is $RB_{Redcap}^{offset} + RB_{BWP}^{offset} + \left\lfloor \frac{r_{PUCCH}}{N_{CS}} \right\rfloor$; and a first PRB index in the hop2 is $RB_{Redcap}^{offset} + N_{RedCap}^{PUCCH} - 1 - RB_{BWP}^{offset} - \left\lfloor \frac{r_{PUCCH}}{N_{CS}} \right\rfloor$; and

in case of $\left\lfloor \frac{r_{PUCCH}}{8} \right\rfloor = 1$, a first PRB index in the hop1 is $N_{BWP}^{size} - RB_{Redcap}^{offset} - 1 - RB_{BWP}^{offset} - \left\lfloor \frac{r_{PUCCH}-8}{N_{CS}} \right\rfloor$, and a first PRB index in the hop2 is $(N_{BWP}^{size} - N_{RedCap}^{PUCCH}) - RB_{Redcap}^{offset} + RB_{BWP}^{offset} + \left\lfloor \frac{r_{PUCCH}-8}{N_{CS}} \right\rfloor$.

In the present embodiment, a possible value of $RB_{Redcap}^{offset}$ may be $\left\lceil \frac{8}{N_{CS}} \right\rceil + 1$, which may ensure that the PUCCH resources used by the RedCap UE and the general NR UE do not interlace. $RB^{offset}_{Redcap}$ may also be other values, for example, may be the frequency location of the first PRB or the frequency location of the center PRB of the resources occupied by Msg1 or Msg3. This design is especially suitable for frequency division duplexing (FDD) systems, and no retuning is required when the PUCCH is transmitted over the uplink frequency band since a frequency at which the RedCap UE transmits the PUCCH is close to the frequency of Msg1 or Msg3.

In the present embodiment, by shifting the PUCCH resource set used by the RedCap UE in frequency, the PUCCH resource set used by the RedCap UE does not interlace with the PUCCH resource set used by the general NR UE, and the base station may configure different monitoring schemes for RedCap UEs and general NR UEs during PUCCH resource monitoring, which simplifies the implementation of the base station.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, the method can acquire frequency diversity gain, and better transmission performance is achieved. In addition, an effect of dividing the PUCCH of different RedCap UEs to different frequency ranges is achieved.

Embodiment 5:

The present embodiment describes a method for determining a first resource in case that the PUCCH is transmitted with frequency hopping.

In the present embodiment, after it is determined to transmit the PUCCH with frequency hopping in a predefined mode and/or a mode indicated by a network side device, a resource for PUCCH transmission with frequency hopping may be determined in the following scheme 4:

scheme 4: the formulas for hop1 and hop2 for the second type of terminal are completely reused, where for the RedCap UE, by designing $RB^{offset}_{BWP}$ in the formulas, an interval of frequency locations corresponding to hop1 and hop2 calculated according to the formulas is less than or equal to the maximum bandwidth supported by the RedCap UE. For example, $RB^{offset}_{BWP}$ of the RedCap UE may meet the following conditions:

$$N^{size}_{BWP} - 2 * RB^{offset}_{BWP} \leq N^{PUCCH}_{RedCap}$$

that is: $RB^{offset}_{BWP} \geq \frac{N^{size}_{BWP} - N^{PUCCH}_{RedCap}}{2}$

in an embodiment, $RB^{offset}_{BWP} = \left\lceil \frac{N^{size}_{BWP} - N^{PUCCH}_{RedCap}}{2} \right\rceil$ ; and in another embodiment, $N^{PUCCH}_{RedCap} = N^{size}_{RedCap}$ .

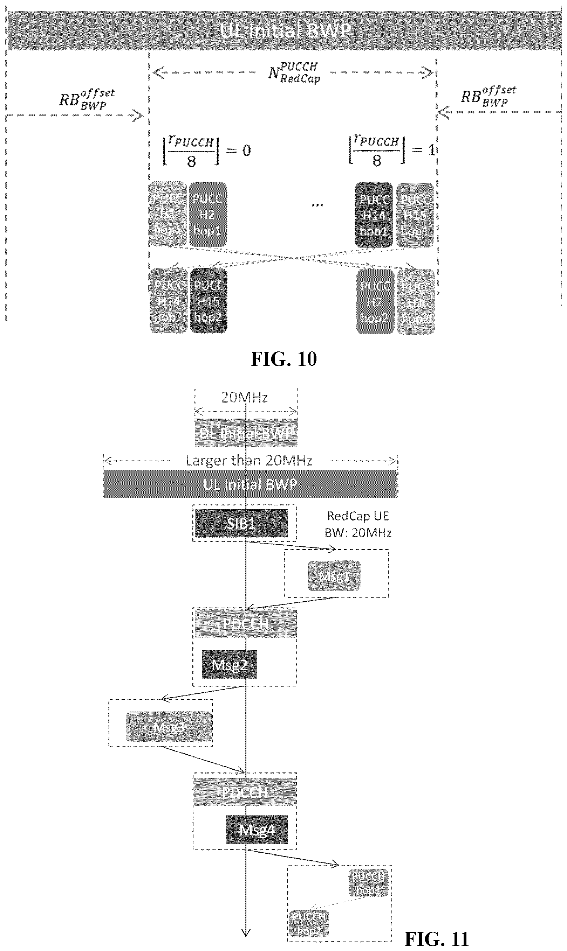

Refer to another example of PUCCH transmission with frequency hopping shown in FIG. 10. By the present method, the hop1 and hop2 in which the RedCap UE transmits the PUCCH are constrained within the central $N^{PUCCH}_{RedCap}$ bandwidth range of the BWP, and the RedCap UE can transmit the PUCCH normally. This method is especially suitable for time division duplexing (TDD) systems since the center frequency at which the RedCap UE transmits the PUCCH may also be the center frequency of the uplink BWP (such as UL initial BWP), where the center frequencies of the downlink BWP and the uplink BWP in the TDD system are the same. FIG. 11 is a schematic diagram of a forced retuning between DL and UL in a TDD system. In addition, in case that the uplink and downlink are switched in the TDD system, retuning can be avoided in the method according to the present embodiment.

Although the above method is illustrated in case that a value of $RB^{offset}_{BWP}$ used by the RedCap UE is different from the value of $RB^{offset}_{BWP}$ used by the traditional UE, the method may further be equivalent to a method in which $RB^{offset}_{BWP}$ used by the RedCap UE is a sum of $RB^{offset}_{BWP}$ used the traditional UE and an offset $RB^{offset}_{Redcap}$ . The two methods are substantially the same.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

Embodiment 6:

The present embodiment describes a method for determining a first resource in case that the PUCCH is transmitted with frequency hopping. In the present embodiment, after it is determined to transmit the PUCCH with frequency hopping in a predefined mode and/or a mode indicated by a network side device, a resource for PUCCH transmission with frequency hopping may be determined in the following scheme 5:
scheme 5:

step 1, any of the methods in the above embodiments is used to determine a frequency and the frequency is regarded as the frequency in hop1, for example, a frequency location of the first PRB in the hop1 is determined to be

$$RB_{Redcap}^{offset} + RB_{BWP}^{offset} + \left\lfloor \frac{r_{PUCCH}}{N_{CS}} \right\rfloor$$
; and

step 2, a frequency location corresponding to hop2 is determined based on the frequency location corresponding to the hop1 and a frequency offset $FH_{RedCap}^{PUCCH}$, for example, the frequency location of the first PRB in hop2 is determined to be $RB_{Redcap}^{offset} + RB_{BWP}^{offset} + \left\lfloor \frac{r_{PUCCH}}{N_{CS}} \right\rfloor + FH_{RedCap}^{PUCCH}$.

In an embodiment, the same $FH_{RedCap}^{PUCCH}$ may be used regardless of the value of $\left\lfloor \frac{r_{PUCCH}}{N_{CS}} \right\rfloor$;

in another embodiment, $FH_{RedCap}^{PUCCH}$ may be different base on that $\left\lfloor \frac{r_{PUCCH}}{N_{CS}} \right\rfloor$ is 0 or 1. For example, $FH_{RedCap}^{PUCCH}$ may be a positive value in case that $\left\lfloor \frac{r_{PUCCH}}{N_{CS}} \right\rfloor$ is 0 while $FH_{RedCap}^{PUCCH}$ may be a negative value in case that $\left\lfloor \frac{r_{PUCCH}}{N_{CS}} \right\rfloor$ is 1.

$FH_{RedCap}^{PUCCH}$ is a frequency offset, which represents the frequency difference between hop2 and hop1, and may be predefined, or indicated by the network side device. For example, it may be indicated through SIB1 or DCI.

In the method according to the embodiment of the present application, there is no need to design frequency locations for hop1 and hop2 respectively, and the frequency location corresponding to hop2 may always be determined based on the frequency location corresponding to hop1 and a frequency offset, which is simpler and more flexible. In an embodiment, $\left| FH_{RedCap}^{PUCCH} \right| \leq N_{RedCap}^{size}$, and thus the frequency difference between hop1 and hop2 is less than or equal to the maximum bandwidth supported by the RedCap UE.

In an embodiment, the first indication information indicates the frequency offset.

In an embodiment, the first indication information may indicate at least one of the above parameters: $N_{RedCap}^{PUCCH}$, $RB_{BWP}^{offset}$, $RB_{Redcap}^{offset}$ or $FH_{RedCap}^{PUCCH}$.

By the method according to the present embodiment, it can be ensured that the RedCap UE can always correctly transmit the PUCCH before obtaining the user-specific RRC configuration. In the present embodiment, the PUCCH is transmitted with frequency hopping, and compared with the method without frequency hopping, it can acquire frequency diversity gain, and better transmission performance is achieved.

In the present embodiment, a bandwidth range at which the RedCap UE transmits the PUCCH is within a maximum bandwidth supported by the RedCap UE.

In the present embodiment, by a predefined mode or a mode indicated by a network side device, the RedCap UE can transmit PUCCH without frequency hopping before obtaining the user-specific RRC configuration, or the interval between two hops can be guaranteed to be within the bandwidth range supported by the RedCap UE even if the RedCap UE transmit PUCCH with frequency hopping and thus the bandwidth range at which the RedCap UE transmits the PUCCH is within a maximum bandwidth supported by the RedCap UE, the first type of terminal can correctly transmit the PUCCH, which can solve the problem that the first type of terminal fails to transmit the PUCCH correctly in the UL initial BWP since a frequency interval between two hops for the PUCCH transmission is larger than the maximum bandwidth of the first type of terminal.

According to the above description, in case of without frequency hopping, the resource for PUCCH transmission can be determined by the following ways:

a frequency location of the PUCCH resource is determined based on the method for the frequency location corresponding to hop1 or hop2;
a frequency location of the PUCCH resource is determined based on a frequency location of scheduling DCI corresponding to a PDSCH that needs to be fed back in the PUCCH;
a frequency location of the PUCCH resource is determined based on a frequency location of Msg1 or Msg3; or
a frequency location of the PUCCH resource is determined based on indication information carried in Msg4 (suitable for the case where the PUCCH needs to be transmitted based on whether the Msg4 reception is successful or not during the random access procedure).

According to the above description, in case of frequency hopping, the resource for PUCCH transmission can be determined by the following ways:

for both hop1 and hop2, a bandwidth parameter $N_{BWP}^{size}$ of BWP in the initial formula is replaced with a bandwidth parameter $N_{RedCap}^{PUCCH}$, where $N_{RedCap}^{PUCCH}$ is less than or equal to the maximum bandwidth $N_{RedCap}^{size}$ supported by the RedCap UE. In an embodiment, $N_{RedCap}^{PUCCH} = N_{RedCap}^{size}$.

On this basis, an additional offset $RB_{Redcap}^{offset}$ may be added to the frequency locations of hop1 and hop2; for hop1 and hop2, modulo operation may be performed on the initial locations of hop1 and hop2 and $N_{RedCap}^{PUCCH}$, and modulo results may be regarded as transmission locations. In addition, on this basis, an additional offset $RB_{Redcap}^{offset}$ may be added to the modulo results.

In case that $\left\lfloor \frac{r_{PUCCH}}{8} \right\rfloor = 0$, for hop2, $N_{BWP}^{size}$ is replaced with $N_{RedCap}^{PUCCH}$ and in case that $\left\lfloor \frac{r_{PUCCH}}{8} \right\rfloor = 1$, for hop2, a frequency offset $(N_{BWP}^{size} - N_{RedCap}^{PUCCH})$ is added. In an embodiment, $N_{RedCap}^{PUCCH} = N_{RedCap}^{size}$.

It should be noted that $RB_{BWP}^{offset}$ used by the RedCap UE to transmit PUCCH makes the frequency interval between two hops for PUCCH transmission not larger than $N_{RedCap}^{size}$. For example, $N_{BWP}^{size} - 2 * RB_{BWP}^{offset} \leq N_{RedCap}^{size}$ is satisfied. In an embodiment, $RB_{BWP}^{offset} = \left\lceil \frac{N_{BWP}^{size} - N_{RedCap}^{size}}{2} \right\rceil$.

It should be noted that for hop2, it is not necessary to use the traditional formula for calculation. After the frequency location of hop1 is determined using traditional method or any one of methods for determining the frequency location of hop1 mentioned above, the frequency location of hop2 can be determined based on the "the frequency location of hop1" and the frequency offset $FH_{RedCap}^{PUCCH}$ between hop2 and hop1, where the frequency offset is determined in a predefined mode or a mode indicated by the network side device.

In a traditional solution, before the user-specific RRC configuration is obtained, it is a convention that the PUCCH is transmitted with frequency hopping, and the resources for the two hops are distributed on both sides of the UL initial BWP, which may cause the RedCap UE to fail to transmit PUCCH correctly in the UL initial BWP. The embodiments of the present application solve this problem, the bandwidth at which the RedCap UE transmits the PUCCH is within the maximum bandwidth supported by the RedCap UE, and the RedCap UE can correctly transmit the PUCCH.

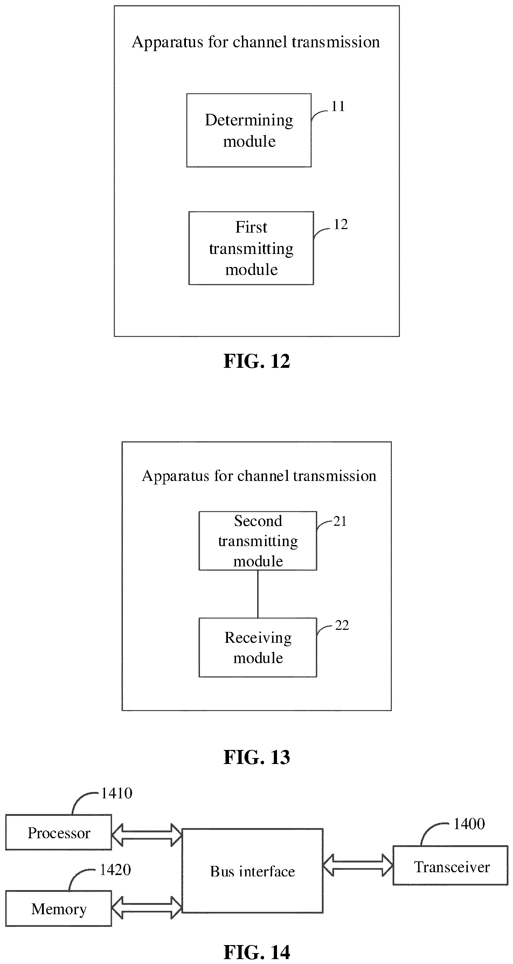

FIG. 12 is a schematic block diagram of an apparatus for channel transmission applied to a terminal according to an embodiment of the present application. The device is applied to the first type of terminal, and includes:

a determining module 11, used to determine a first resource for physical uplink control channel (PUCCH) transmission in case that the PUCCH is transmitted in an uplink (UL) initial bandwidth part (BWP), where a bandwidth range of the first resource is less than or equal to a maximum bandwidth supported by the first type of terminal, and the maximum bandwidth supported by the first type of terminal is less than or equal to a first preset value; and
a first transmitting module 12, used to transmit the PUCCH on the first resource.

The apparatus can implement all the steps in the embodiment of the method for channel transmission implemented at the terminal and can achieve the same effect, which is not repeated here.

FIG. 13 is a schematic block diagram of an apparatus for channel transmission applied to a network side device according to an embodiment of the present application. The device includes:

a second transmitting module 21, used to transmit first indication information to a first type of terminal, where the first indication information is used to indicate a first resource for physical uplink control channel (PUCCH) transmission in case that the first type of terminal transmits the PUCCH in an uplink (UL) initial bandwidth part (BWP) for the first type of terminal; and
a receiving module 22, used to receive the PUCCH transmitted by the first type of terminal on the first resource; where a bandwidth range of the first resource is less than or equal to a maximum bandwidth supported by the first type of terminal, and the maximum bandwidth supported by the first type of terminal is less than or equal to a first preset value.

The apparatus can implement all the steps in the embodiment of the method for channel transmission implemented at the network side device and can achieve the same effect, which is not repeated here.

FIG. 14 is a schematic structural diagram of a terminal according to an embodiment of the present application. The terminal includes a memory 1420, a transceiver 1400, and a processor 1410.

In FIG. 14, a bus architecture can include any number of interconnected buses and bridges, which are linked together through various circuits of one or more processors represented by processor 1410 and one or more memories represented by the memory 1420. The bus architecture can further link together various other circuits, such as peripherals, voltage regulators, and power management circuits. The bus interface provides an interface. Transceiver 1400 can include multiple elements, i.e., including a transmitter and a receiver, and the transceiver 1400 provides units for communicating with various other devices over transmission media including wireless channels, wired channels, fiber optic cables, and the like. The processor 1410 is responsible for managing the bus architecture and general processing, and the memory 1420 can store data used by the processor 1410 when performing operations.

The processor 1410 can be a central processing unit (CPU), an application specific integrated circuit (ASIC), a field-programmable gate array (FPGA), or a complex programmable logic device (CPLD), the processor can also use a multi-core architecture.

The memory 1420 is used to store a computer program; the transceiver 1400 is used to transmit and receive data under a control of the processor 1410; and the computer program, when executed by the processor 1410, causes the processor 1410 to perform the following operations of:

determining a first resource for physical uplink control channel (PUCCH) transmission in case that the PUCCH is transmitted in an uplink (UL) initial bandwidth part (BWP), where a bandwidth range of the first resource is less than or equal to a maximum bandwidth supported by the first type of terminal, and the maximum bandwidth supported by the first type of terminal is less than or equal to a first preset value; and
transmitting the PUCCH on the first resource.

Based on the foregoing embodiment, in the present embodiment, the first resource includes any one of the following items:

a resource for PUCCH transmission without frequency hopping; or
a resource for PUCCH transmission with frequency hopping, where a frequency interval between a first hop and a second hop is less than or equal to the maximum bandwidth supported by the first type of terminal.

Based on the foregoing embodiment, in the present embodiment, in case that the first resource is the resource for PUCCH transmission without frequency hopping, the determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;

determining the first resource for the first type of terminal to transmit the PUCCH based on a frequency location of a physical downlink shared channel (PDSCH) that is fed back by the first type of terminal in the PUCCH;

determining the first resource for the first type of terminal to transmit the PUCCH based on a frequency location of scheduling downlink control information (DCI) corresponding to a physical downlink shared channel (PDSCH) that is fed back by the first type of terminal in the PUCCH;

determining the first resource for the first type of terminal to transmit the PUCCH based on a frequency location of a given uplink channel transmitted by the first type of terminal;

determining the first resource for the first type of terminal to transmit the PUCCH based on indication information carried in a contention resolution message transmitted by a network side device during a random access procedure of the first type of terminal.

Based on the foregoing embodiment, in the present embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

Based on the foregoing embodiment, in the present embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a first physical resource block (PRB) for PUCCH transmission to be the same as a frequency domain starting location of a first control channel element (CCE) for the DCI;

enabling a frequency location of an L-th PRB for PUCCH transmission to be the same as a frequency domain starting location of a K-th CCE for the DCI, where L and K are integers larger than 0;

enabling the frequency location of the L-th PRB for PUCCH transmission to be a location determined based on the frequency domain starting location of the K-th CCE for the DCI and a second frequency offset, the second frequency offset being predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

Based on the foregoing embodiment, in the present embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is predefined and/or indicated by a network side device;

determining the first frequency offset $RB_{BWP}^{offset}$ based on the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$ ;

where $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

Based on the foregoing embodiment, in the present embodiment, in case that the first resource includes the resource for PUCCH transmission with frequency hopping, the determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;
determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$ , determining a frequency location corresponding to the second hop when the first type of terminal transmits PUCCH at $\left\lfloor \frac{r_{PUCCH}}{8} \right\rfloor = 0$ based on a replaced first sub-relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$ ;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$ .

Based on the foregoing embodiment, in the present embodiment, the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model includes:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model and a preset frequency offset.

In an embodiment, determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining frequency locations corresponding to the first hop and the second hop when the first type of terminal transmits PUCCH based on the modulo operation results and a preset frequency offset.

Based on the foregoing embodiment, in the present embodiment, the preset frequency offset is any one or more of the following items:

$\left\lceil \frac{8}{N_{CS}} \right\rceil + 1$ , where $N_{CS}$ represents a total number of initial cyclic shift indices; and

a frequency location of a first physical resource block (PRB) or a central PRB of a resource occupied by a first message or a third message,

where the first message is a random access request message or a random access pilot signal, and the third message is a connection establishment request message in the random access procedure.

Based on the foregoing embodiment, in the present embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

It should be noted here that the terminal according to the embodiments of the present application can implement all the steps in the embodiment of the method for channel transmission implemented at the terminal and can achieve the same effect, which is not repeated here.

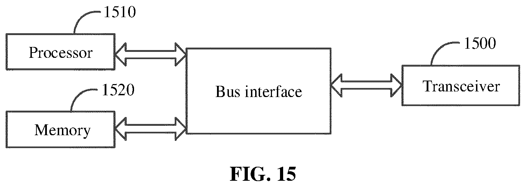

FIG. 15 is a schematic structural diagram of a network side device according to an embodiment of the present application. The network side device includes a memory 1520, a transceiver 1500, and a processor 1510.

In FIG. 15, a bus architecture can include any number of interconnected buses and bridges, which are linked together through various circuits of one or more processors represented by processor 1510 and one or more memories represented by the memory 1520. The bus architecture can further link together various other circuits, such as peripherals, voltage regulators, and power management circuits. The bus interface provides an interface. Transceiver 1500 can include multiple elements, i.e., including a transmitter and a receiver, and the transceiver 1500 provides units for communicating with various other devices over transmission media including wireless channels, wired channels, fiber optic cables, and the like. The processor 1510 is responsible for managing the bus architecture and general processing, and the memory 1520 can store data used by the processor 1510 when performing operations.

The processor 1510 can be a central processing unit (CPU), an application specific integrated circuit (ASIC), a field-programmable gate array (FPGA), or a complex programmable logic device (CPLD), the processor can also use a multi-core architecture.

The memory 1520 is used to store a computer program; the transceiver 1500 is used to transmit and receive data under a control of the processor 1510; and the computer program, when executed by the processor 1510, causes the processor 1510 to perform the following operations of:

transmitting first indication information to a first type of terminal, where the first indication information is used to indicate a first resource for physical uplink control channel (PUCCH) transmission in case that the first type of terminal transmits the PUCCH in an uplink (UL) initial bandwidth part (BWP); and
receiving the PUCCH transmitted by the first type of terminal on the first resource;
where a bandwidth range of the first resource is less than or equal to a maximum bandwidth supported by the first type of terminal, and the maximum bandwidth supported by the first type of terminal is less than or equal to a first preset value.

Based on the foregoing embodiment, in the present embodiment, the first indication information is used to indicate any one of the following resources:

a resource for PUCCH transmission without frequency hopping; or
a resource for PUCCH transmission with frequency hopping, where a frequency interval between a first hop and a second hop is less than or equal to the maximum bandwidth supported by the first type of terminal.

Based on the foregoing embodiment, in the present embodiment, in case that the first resource includes the resource for PUCCH transmission without frequency hopping, determining the first resource for PUCCH transmission includes any one or more of:

determining the first resource for the first type of terminal to transmit the PUCCH based on a frequency location corresponding to a first hop and/or a frequency location corresponding to a second hop when a second type of terminal transmits the PUCCH, where a maximum bandwidth supported by the second type of terminal is larger than the first preset value;
determining the first resource for the first type of terminal to transmit the PUCCH based on a frequency location of a physical downlink shared channel (PDSCH) that is fed back by the first type of terminal in the PUCCH;
determining the first resource for the first type of terminal to transmit the PUCCH based on a frequency location of scheduling downlink control information (DCI) corresponding to a physical downlink shared channel (PDSCH) that is fed back by the first type of terminal in the PUCCH;
determining the first resource for the first type of terminal to transmit the PUCCH based on a frequency location of a given uplink channel transmitted by the first type of terminal; and
determining the first resource for the first type of terminal to transmit the PUCCH based on indication information carried in a contention resolution message transmitted by a network side device during a random access procedure of the first type of terminal.

Based on the foregoing embodiment, in the present embodiment, in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission includes any one or more of:

determining a first frequency offset $RB_{BWP}^{offset}$ corresponding to the first type of terminal through a predefinition and/or indication method, where the first frequency offset $RB_{BWP}^{offset}$ corresponding to the first type of terminal is different from the first frequency offset $RB_{BWP}^{offset}$ corresponding to the second type of terminal;

determining the first resource for PUCCH transmission based on a preset frequency offset and the frequency location corresponding to the first hop and/or the frequency location corresponding to the second hop when the second type of terminal transmits the PUCCH through a predefinition and/or indication method, where the preset frequency offset is predefined and/or indicated by a network side device.

In an embodiment, in case of determining the first resource for the first type of terminal to transmit the PUCCH based on the frequency location of scheduling DCI corresponding to the PDSCH that needs to be fed back by the first type of terminal in the PUCCH, the determining the first resource for PUCCH transmission includes any one or more of:

enabling a frequency location of a first physical resource block (PRB) for PUCCH transmission to be the same as a frequency domain starting location of a first control channel element (CCE) for the DCI;

enabling a frequency location of an L-th PRB for PUCCH transmission to be the same as a frequency domain starting location of a K-th CCE for the DCI, where L and K are integers larger than 0;

enabling the frequency location of the L-th PRB for PUCCH transmission to be a location determined based on the frequency domain starting location of the K-th CCE for the DCI and a second frequency offset, the second frequency offset being predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$;

where $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of an UL initial BWP.

In an embodiment, in case of determining the first resource for the first type of terminal to transmit the PUCCH based on the frequency location of the given uplink channel transmitted by the first type of terminal, the determining the first resource for PUCCH transmission includes any one or more of:

enabling a frequency location of a first physical resource block (PRB) for PUCCH transmission to be the same as a frequency location of a first PRB for a first message or a third message, where the first message is a random access request message or a random access pilot signal, and the third message is a connection establishment request message in the random access procedure;

enabling a frequency location of an L-th PRB for PUCCH transmission to be the same as a frequency location of a K-th PRB for the first message or the third message, where the frequency location of the L-th PRB for PUCCH transmission is a location determined based on the frequency location of the K-th PRB for the first message or the third message and a third frequency offset, and the third frequency offset is a predefined and/or indicated by a network side device;

determining the first frequency offset $RB_{BWP}^{offset}$ through the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$;

where $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

Based on the foregoing embodiment, in the present embodiment, in case that the first resource includes the resource for PUCCH transmission with frequency hopping, determining the first resource for PUCCH transmission includes any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model, where the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$ , determining a frequency location corresponding to the second hop when the first type of terminal transmits PUCCH at $\left\lfloor \frac{r_{PUCCH}}{8} \right\rfloor = 0$ based on a replaced first sub-relationship model, and determining a frequency location corresponding to the second hop when the first type of terminal transmits PUCCH at $\left\lfloor \frac{r_{PUCCH}}{8} \right\rfloor = 1$ based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, where the possible value $RB_{BWP}^{offset}$ corresponding to the first type of terminal enables the frequency interval between the first hop and the second hop for PUCCH transmission to be less than or equal to $N_{RedCap}^{size}$ ; and

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, where the fifth frequency offset is predefined and/or indicated by a network side device, and an absolute value of the fifth frequency offset is less than or equal to $N_{RedCap}^{size}$ .

Based on the foregoing embodiment, in the present embodiment, the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model includes:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model and a preset frequency offset.

Based on the foregoing embodiment, in the present embodiment, the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining modulo operation results as frequency locations corresponding to the first hop and the second hop when the first type of terminal transmits PUCCH, includes:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on the initial frequency locations and the first bandwidth parameter $N_{RedCap}^{PUCCH}$ and determining frequency locations corresponding to the first hop and the second hop when the first type of terminal transmits PUCCH based on modulo operation results and a preset frequency offset.

Based on the foregoing embodiment, in the present embodiment, the preset frequency offset is any one or more of the following items:

$\left\lceil \dfrac{8}{N_{CS}} \right\rceil + 1$ , where $N_{CS}$ represents a total number of initial cyclic shift indices; and

a frequency location of a first physical resource block (PRB) or a central PRB of a resource occupied by a first message or a third message,

where the first message is a random access request message or a random access pilot signal, and the third message is a connection establishment request message in the random access procedure;

Based on the foregoing embodiment, in the present embodiment, a possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

The network side device according to the present embodiment can implement all the method steps of the embodiment of the method for channel transmission implemented at the network side device and can achieve the same effect, which is not repeated here.

It should be noted that the division of units in the embodiments of the present application is schematic, which is only a logical function division, and there can be another division method in the actual implementation. In addition, various functional units in various embodiments of the present application can be integrated in one processing unit, or can be physically independent units, or two or more units can be integrated in one unit. The above integrated unit can be implemented in the form of hardware or software functional unit.

When the integrated unit is implemented in the form of software functional unit and sold or used as an independent product, it can be stored in a processor readable storage medium. Based on such understanding, the solutions of the present application in essence or the part of the solutions that contributes to the related art or part of the solutions can be embodied in the form of a software product, and the computer software product is stored in a storage medium and includes several instructions to cause a computer device (which can be a personal computer, a server, or a network side device or the like) or a processor to perform all or part of the steps of the methods described in the various embodiments of the present application. The foregoing storage medium includes: USB flash memory, removable hard disk, read-only memory (ROM), random access memory (RAM), a magnetic disk or a compact disk and other mediums that can store program codes.

It should be noted that the above devices according to the embodiments of the present application can implement all the steps implemented by the above method embodiments and can achieve the same effect. The same part and beneficial effect of the device embodiments with the method embodiments are not be repeated in detail here.

An embodiment of the present application provides a non-transitory computer readable storage medium, storing computer programs, where the computer programs, when executed by the processor, cause the processor to perform the methods for channel transmission according to the embodiments.

The computer readable storage medium can be any available medium or data storage device that can be accessed by the processor, including but not limited to magnetic memory (such as floppy disk, hard disk, magnetic tape, magneto-compact disk (MO), etc.), optical memory (such as CD, DVD, BD, HVD, etc.), and semiconductor memory (such as ROM, EPROM, EEPROM, non-volatile memory (NAND FLASH), solid state disk (SSD)), etc.

From the embodiments above, the computer readable storage medium, storing computer programs, where the computer programs, when executed by the processor, cause the processor to perform the methods for channel transmission according to the embodiments.

Those skilled in the art should understand that embodiments of the present application can be provided as method, system, or computer program product. The present application can adopt the form of a complete hardware embodiment, a complete software embodiment, or an embodiment combining software and hardware aspects. Furthermore, the present application can adopt the form of a computer program product implemented on one or more computer usable storage media (including but not limited to disk memory, optical memory, etc.) including computer usable program codes.

The present application is described with reference to the flow chart and/or block diagram of the method, apparatus, device (system), and computer program product according to the embodiments of the present application. It shall be understood that each flow and/or block in the flow chart and/or block diagram and the combination of flow and/or block in the flow chart and/or block diagram can be implemented by computer executable instructions. These computer executable instructions can be provided to a processor of a general purpose computer, a special purpose computer, an embedded processor or other programmable data processing device to generate a machine such that instructions executed by a processor of a computer or other programmable data processing device generate a device for implementing functions specified in one or more flows in the flow charts and/or one or more blocks in the block diagrams.

These processor executable instructions can also be stored in a processor readable memory that can guide a computer or other programmable data processing device to operate in a specific way, so that the instructions stored in the processor readable memory generate a manufacture including an instruction device that implements the functions specified in one or more flows in the flow charts and/or one or more blocks in the block diagrams.

These processor executable instructions can also be loaded into a computer or other programmable data processing device to enable a series of operating steps to be executed on a computer or other programmable device to generate a computer implemented process, so that instructions executed on the computer or other programmable device provide steps for implementing functions specified in one or more flows in the flow charts and/or one or more blocks in the block diagrams.

It should be noted that those skilled in the art can make various changes and modifications to the present application without departing from the scope of the present application. If these changes and modifications on the present application are within the scope of the claims of the present application and their equivalent solutions, the present application is also intended to include these changes and modifications.

**Claims**

1. A method for channel transmission, implemented at a first type of terminal, comprising:

   determining a first resource for physical uplink control channel, PUCCH, transmission in case that the PUCCH is transmitted in an uplink, UL, initial bandwidth part, BWP, wherein a bandwidth range of the first resource is less than or equal to a maximum bandwidth supported by the first type of terminal, and the maximum bandwidth supported by the first type of terminal is less than or equal to a first preset value; and
   transmitting the PUCCH on the first resource.

2. The method of claim 1, wherein the first resource comprises any one of the following items:

   a resource for PUCCH transmission without frequency hopping; or
   a resource for PUCCH transmission with frequency hopping, wherein a frequency interval between a first hop and a second hop is less than or equal to the maximum bandwidth supported by the first type of terminal.

3. The method of claim 2, wherein in case that the first resource is the resource for PUCCH transmission without frequency hopping, the determining the first resource for PUCCH transmission comprises any one or more of:

determining the first resource for the first type of terminal to transmit the PUCCH based on a frequency location corresponding to a first hop and/or a frequency location corresponding to a second hop when a second type of terminal transmits the PUCCH, wherein a maximum bandwidth supported by the second type of terminal is larger than the first preset value;

determining the first resource for the first type of terminal to transmit the PUCCH based on a frequency location of a physical downlink shared channel, PDSCH, that is fed back by the first type of terminal in the PUCCH;

determining the first resource for the first type of terminal to transmit the PUCCH based on a frequency location of scheduling downlink control information, DCI, corresponding to a physical downlink shared channel, PDSCH, that is fed back by the first type of terminal in the PUCCH;

determining the first resource for the first type of terminal to transmit the PUCCH based on a frequency location of a given uplink channel transmitted by the first type of terminal; and

determining the first resource for the first type of terminal to transmit the PUCCH based on indication information carried in a contention resolution message transmitted by a network side device during a random access procedure of the first type of terminal.

4. The method of claim 3, wherein in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission comprises:

determining a first frequency offset $RB_{BWP}^{offset}$ corresponding to the first type of terminal through a predefinition and/or indication method, wherein the first frequency offset $RB_{BWP}^{offset}$ corresponding to the first type of terminal is different from the first frequency offset $RB_{BWP}^{offset}$ corresponding to the second type of terminal; or

determining the first resource for PUCCH transmission based on a preset frequency offset and the frequency location corresponding to the first hop and/or the frequency location corresponding to the second hop when the second type of terminal transmits the PUCCH through a predefinition and/or indication method, wherein the preset frequency offset is predefined and/or indicated by a network side device.

5. The method of claim 3, wherein in case of determining the first resource for the first type of terminal to transmit the PUCCH based on the frequency location of scheduling DCI corresponding to the PDSCH that is fed back by the first type of terminal in the PUCCH, the determining the first resource for PUCCH transmission comprises any one or more of:

enabling a frequency location of a first physical resource block, PRB, for PUCCH transmission to be the same as a frequency domain starting location of a first control channel element, CCE, for the DCI;

enabling a frequency location of an L-th PRB for PUCCH transmission to be the same as a frequency domain starting location of a K-th CCE for the DCI, wherein L and K are integers larger than 0;

enabling the frequency location of the L-th PRB for PUCCH transmission to be a location determined based on the frequency domain starting location of the K-th CCE for the DCI and a second frequency offset, wherein the second frequency offset is predefined and/or indicated by the network side device;

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH}-8}{N_{CS}} \right\rfloor$;

wherein $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

6. The method of claim 3, wherein in case of determining the first resource for the first type of terminal to transmit the PUCCH based on the frequency location of the given uplink channel transmitted by the first type of terminal, the determining the first resource for PUCCH transmission comprises any one or more of:

enabling a frequency location of a first physical resource block, PRB, for PUCCH transmission to be the same as a frequency location of a first PRB for a first message or a third message, wherein the first message is a random access request message or a random access pilot signal, and the third message is a connection establishment request message in a random access procedure;

enabling a frequency location of an L-th PRB for PUCCH transmission to be the same as a frequency location of a K-th PRB for the first message or the third message;

enabling the frequency location of the L-th PRB for PUCCH transmission to be a location determined based on the frequency location of the K-th PRB for the first message or the third message and a third frequency offset, wherein the third frequency offset is predefined and/or indicated by a network side device;

determining the first frequency offset $RB_{BWP}^{offset}$ based on the frequency location of the K-th PRB for the first message or the third message and determining the frequency location of the first PRB for PUCCH transmission based on a first relationship model $RB_{BWP}^{offset} + \left\lceil \frac{r_{PUCCH}}{N_{CS}} \right\rceil$ or $N_{BWP}^{size} - 1 - RB_{BWP}^{offset} - \left\lceil \frac{r_{PUCCH}-8}{N_{CS}} \right\rceil$ ;

wherein $RB_{BWP}^{offset}$ represents the first frequency offset, $r_{PUCCH}$ represents a PUCCH resource index, $N_{CS}$ represents a total number of initial cyclic shift indices, and $N_{BWP}^{size}$ represents the bandwidth of UL initial BWP.

7. The method of claim 2, wherein in case that the first resource is the resource for PUCCH transmission with frequency hopping, the determining the first resource for PUCCH transmission comprises any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model, wherein the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation for the first bandwidth parameter $N_{RedCap}^{PUCCH}$ on the initial frequency locations, and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding to $\left\lceil \frac{r_{PUCCH}}{8} \right\rceil = 0$ among relationship models used to determine a frequency location corresponding to the second hop when the second type of terminal transmits PUCCH with the first bandwidth parameter $N_{RedCap}^{PUCCH}$ , determining a frequency location corresponding to the second hop when the first type of terminal transmits PUCCH at $\left\lceil \frac{r_{PUCCH}}{8} \right\rceil = 0$ based on a replaced first sub-relationship model, and determining a frequency location corresponding to the second hop when the first type of terminal transmits PUCCH at $\left\lceil \frac{r_{PUCCH}}{8} \right\rceil = 1$ based on a fourth frequency offset and a second sub-relationship model corresponding to $\left\lceil \frac{r_{PUCCH}}{8} \right\rceil = 1$ among the relationship models used to determine the frequency location corresponding to the second hop when the second type of terminal transmits PUCCH;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, wherein the possible value $RB_{BWP}^{offset}$ corresponding to the first type of terminal enables the frequency interval between the first hop and the second hop for PUCCH transmission to be less than or equal to $N_{RedCap}^{size}$ ;

determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, wherein the fifth frequency offset is predefined and/or indicated by a network side device, and an absolute value of the fifth frequency offset is less than or equal to $N_{RedCap}^{size}$ .

8. The method of claim 7, wherein the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model comprises:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model and a preset frequency offset.

9. The method of claim 7, wherein the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation for the first bandwidth parameter $N_{RedCap}^{PUCCH}$ on the initial frequency locations and determining modulo operation results as frequency locations corresponding to the first hop and the second hop when the first type of terminal transmits PUCCH, comprises:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation for the first bandwidth parameter $N_{RedCap}^{PUCCH}$ on the initial frequency locations and determining frequency locations corresponding to the first hop and the second hop when the first type of terminal transmits PUCCH based on the modulo operation results and a preset frequency offset.

10. The method of claim 8 or 9, wherein the preset frequency offset is any one or more of the following items:

$\left\lceil \frac{8}{N_{CS}} \right\rceil + 1$ , wherein $N_{CS}$ represents a total number of initial cyclic shift indices; and

a frequency location of a first physical resource block, PRB, or a central PRB of a resource occupied by a first message or a third message,

wherein the first message is a random access request message or a random access pilot signal, and the third message is a connection establishment request message in a random access procedure.

11. The method of claim 7, wherein the possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

**12.** A method for channel transmission, comprising:

transmitting first indication information to a first type of terminal, wherein the first indication information is used to indicate a first resource for physical uplink control channel, PUCCH, transmission in case that the first type of terminal transmits the PUCCH in an uplink, UL, initial bandwidth part, BWP; and
receiving the PUCCH transmitted by the first type of terminal on the first resource;
wherein a bandwidth range of the first resource is less than or equal to a maximum bandwidth supported by the first type of terminal, and the maximum bandwidth supported by the first type of terminal is less than or equal to a first preset value.

**13.** The method of claim 12, wherein the first indication information is used to indicate any one of the following resources:

a resource for PUCCH transmission without frequency hopping; or
a resource for PUCCH transmission with frequency hopping, wherein a frequency interval between a first hop and a second hop is less than or equal to the maximum bandwidth supported by the first type of terminal.

**14.** The method of claim 13, wherein in case that the first resource is the resource for PUCCH transmission without frequency hopping, determining the first resource for PUCCH transmission comprises any one or more of:

determining the first resource for the first type of terminal to transmit the PUCCH based on a frequency location corresponding to a first hop and/or a frequency location corresponding to a second hop when a second type of terminal transmits the PUCCH, wherein a maximum bandwidth supported by the second type of terminal is larger than the first preset value;
determining the first resource for the first type of terminal to transmit the PUCCH based on a frequency location of a physical downlink shared channel, PDSCH, that is fed back by the first type of terminal in the PUCCH;
determining the first resource for the first type of terminal to transmit the PUCCH based on a frequency location of scheduling downlink control information, DCI, corresponding to a physical downlink shared channel, PDSCH, that is fed back by the first type of terminal in the PUCCH;
determining the first resource for the first type of terminal to transmit the PUCCH based on a frequency location of a given uplink channel transmitted by the first type of terminal; and
determining the first resource for the first type of terminal to transmit the PUCCH based on indication information carried in a contention resolution message transmitted by a network side device during a random access procedure of the first type of terminal.

**15.** The method of claim 14, wherein in case of determining the first resource for the first type of terminal to transmit the PUCCH based on the frequency location corresponding to the first hop and/or the frequency location corresponding to the second hop when the second type of terminal transmits the PUCCH, the determining the first resource for PUCCH transmission comprises:

determining a first frequency offset $RB_{BWP}^{offset}$ corresponding to the first type of terminal through a predefinition and/or indication method, wherein the first frequency offset $RB_{BWP}^{offset}$ corresponding to the first type of terminal is different from the first frequency offset $RB_{BWP}^{offset}$ corresponding to the second type of terminal; or
determining the first resource for PUCCH transmission based on a preset frequency offset and the frequency location corresponding to the first hop and/or the frequency location corresponding to the second hop when the second type of terminal transmits the PUCCH through a predefinition and/or indication method, wherein the preset frequency offset is predefined and/or indicated by a network side device.

**16.** The method of claim 14, wherein in case of determining the first resource for the first type of terminal to transmit the PUCCH based on the frequency location of scheduling DCI corresponding to the PDSCH that is fed back by the first type of terminal in the PUCCH, the determining the first resource for PUCCH transmission comprises:

enabling a frequency location of a first physical resource block, PRB, for PUCCH transmission to be the same as a frequency domain starting location of a first control channel element, CCE, for the DCI;
enabling a frequency location of an L-th PRB for PUCCH transmission to be the same as a frequency domain starting location of a K-th CCE for the DCI, wherein L and K are integers larger than 0,
enabling the frequency location of the L-th PRB for PUCCH transmission to be a location determined based on the frequency domain starting location of the K-th CCE for the DCI and a second frequency offset, wherein the second frequency offset is predefined and/or indicated by the network side device; or

determining the first frequency offset $RB_{BWP}^{offset}$ based on the frequency domain starting location of the K-th CCE for the DCI and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH-8}}{N_{CS}} \right\rfloor$ ;

wherein $RB_{BWP}^{offset}$ represents the first frequency offset, $r_{PUCCH}$ represents a PUCCH resource index, $N_{CS}$

represents a total number of initial cyclic shift indices, and $N_{BWP}^{size}$ represents the bandwidth of UL initial BWP.

**17.** The method of claim 14, wherein in case of determining the first resource for the first type of terminal to transmit the PUCCH based on the frequency location of the given uplink channel transmitted by the first type of terminal, the determining the first resource for PUCCH transmission comprises:

enabling a frequency location of a first physical resource block, PRB, for PUCCH transmission to be the same as a frequency location of a first PRB for a first message or a third message, wherein the first message is a random access request message or a random access pilot signal, and the third message is a connection establishment request message in a random access procedure;
enabling a frequency location of an L-th PRB for PUCCH transmission to be the same as a frequency location of a K-th PRB for the first message or the third message;
enabling the frequency location of the L-th PRB for PUCCH transmission to be a location determined based on the frequency location of the K-th PRB for the first message or the third message and a third frequency offset, wherein the third frequency offset is predefined and/or indicated by a network side device; or

determining the first frequency offset $RB_{BWP}^{offset}$ through the frequency location of the K-th PRB for the first message or the third message and determining the frequency location of the first PRB for PUCCH transmission based on a first relationship model $RB_{BWP}^{offset} + \left\lfloor \frac{r_{PUCCH}}{N_{CS}} \right\rfloor$ or $N_{BWP}^{size} - 1 - RB_{BWP}^{offset} - \left\lfloor \frac{r_{PUCCH-8}}{N_{CS}} \right\rfloor$ ;

wherein $RB_{BWP}^{offset}$ represents the first frequency offset, $r_{PUCCH}$ represents a PUCCH resource index, $N_{CS}$

represents a total number of initial cyclic shift indices, and $N_{BWP}^{size}$ represents the bandwidth of UL initial BWP.

**18.** The method of claim 13, wherein in case that the first resource is the resource for PUCCH transmission with frequency hopping, determining the first resource for PUCCH transmission comprises any one or more of:

replacing a bandwidth parameter $N_{BWP}^{size}$ of the UL initial BWP in a relationship model used to determine frequency locations corresponding to a first hop and a second hop when the second type of terminal transmits PUCCH with a first bandwidth parameter $N_{RedCap}^{PUCCH}$ , and determining frequency locations corresponding to a first hop and a second hop when the first type of terminal transmits PUCCH based on a replaced relationship model, wherein the $N_{RedCap}^{PUCCH}$ is less than or equal to the maximum bandwidth $N_{RedCap}^{SIZE}$ supported by the first type of terminal, and the maximum bandwidth supported by the second type of terminal is larger than the first preset value;

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation for the first bandwidth parameter $N_{RedCap}^{PUCCH}$ on the initial frequency locations and determining modulo operation results as frequency locations corresponding to the first hop and the second hop when the first type of terminal transmits PUCCH;

replacing a bandwidth parameter $N_{BWP}^{size}$ of the UL initial BWP in a first sub-relationship model corresponding

to $\left\lfloor \frac{r_{PUCCH}}{8} \right\rfloor = 0$ among relationship models used to determine a frequency location corresponding to the second hop when the second type of terminal transmits PUCCH with the first bandwidth parameter $N_{RedCap}^{PUCCH}$, determining a frequency location corresponding to the second hop when the first type of terminal transmits

PUCCH at $\left\lfloor \frac{r_{PUCCH}}{8} \right\rfloor = 0$ based on a replaced first sub-relationship model, and determining a frequency location corresponding to the second hop when the first type of terminal transmits PUCCH at $\left\lfloor \frac{r_{PUCCH}}{8} \right\rfloor = 1$

based on a fourth frequency offset and a second sub-relationship model corresponding to $\left\lfloor \frac{r_{PUCCH}}{8} \right\rfloor = 1$ among the relationship models used to determine the frequency location corresponding to the second hop when the second type of terminal transmits PUCCH;

determining a possible value of the first frequency offset $RB_{BWP}^{offset}$ in the relationship model used to determine frequency locations corresponding to the first hop and the second hop when the first type of terminal transmits PUCCH and a possible value of $RB_{BWP}^{offset}$ used by the second type of terminal to be different, wherein the possible value $RB_{BWP}^{offset}$ corresponding to the first type of terminal enables the frequency interval between the first hop and the second hop for PUCCH transmission to be less than or equal to $N_{RedCap}^{size}$ ;
determining a frequency location corresponding to the first hop for PUCCH transmission, and determining, based on the frequency location corresponding to the first hop and a fifth frequency offset between the first hop and the second hop, a frequency location corresponding to the second hop when the first type of terminal transmits PUCCH, wherein the fifth frequency offset is predefined and/or indicated by a network side device, and an absolute value of the fifth frequency offset is less than or equal to $N_{RedCap}^{size}$ .

**19.** The method of claim 18, wherein the replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$, and determining frequency locations corresponding to the first hop and the second hop when the first type of terminal transmits PUCCH based on the replaced relationship model comprises:

replacing the bandwidth parameter $N_{BWP}^{size}$ of the UL initial BWP in the relationship model used to determine frequency locations corresponding to the first hop and the second hop when the second type of terminal transmits PUCCH with the first bandwidth parameter $N_{RedCap}^{PUCCH}$ , and determining frequency locations corresponding to the first hop and the second hop when the first type of terminal transmits PUCCH based on the replaced relationship model and a preset frequency offset.

**20.** The method of claim 18, wherein the determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operation on the initial frequency locations and the first bandwidth parameter $N_{RedCap}^{PUCCH}$ and regarding modulo operation results as frequency locations corresponding to the first hop and the second hop when the first type of terminal transmits PUCCH, comprises:

determining initial frequency locations corresponding to the first hop and the second hop when the first type of terminal transmits PUCCH based on the relationship model used to determine frequency locations corresponding to the first hop and the second hop when the second type of terminal transmits PUCCH, performing modulo operations on initial frequency locations and the first bandwidth parameter $N_{RedCap}^{PUCCH}$ and determining frequency locations corresponding to the first hop and the second hop when the first type of terminal transmits PUCCH based on modulo operation results and a preset frequency offset.

**21.** The method of claim 19 or 20, wherein the preset frequency offset is any one or more of the following items:

$\left\lceil \dfrac{8}{N_{CS}} \right\rceil + 1$, wherein $N_{CS}$ represents a total number of initial cyclic shift indices; and

a frequency location of a first physical resource block, PRB, or a central PRB of a resource occupied by a first message or a third message, wherein the first message is a random access request message or a random access pilot signal, and the third message is a connection establishment request message in the random access procedure.

**22.** The method of claim 18, wherein the possible value of the first frequency offset $RB_{BWP}^{offset}$ in the relationship model used to determine frequency locations corresponding to the first hop and the second hop when the first type of terminal transmits PUCCH meets the following relationship:

$$RB_{BWP}^{offset} \geq \frac{N_{BWP}^{size} - N_{RedCap}^{PUCCH}}{2}.$$

**23.** An apparatus for channel transmission, applied to a first type of terminal, comprising:

a determining module, used to determine a first resource for physical uplink control channel, PUCCH, transmission in case that the PUCCH is transmitted in an uplink, UL, initial bandwidth part, BWP, wherein a bandwidth range of the first resource is less than or equal to a maximum bandwidth supported by the first type of terminal, and the maximum bandwidth supported by the first type of terminal is less than or equal to a first preset value; and
a first transmitting module, used to transmit the PUCCH on the first resource.

**24.** An apparatus for channel transmission, comprising:

a second transmitting module, used to transmit first indication information to a first type of terminal, wherein the first indication information is used to indicate a first resource for physical uplink control channel, PUCCH, transmission in case that the first type of terminal transmits the PUCCH in an uplink, UL, initial bandwidth part, BWP; and
a receiving module, used to receive the PUCCH transmitted by the first type of terminal on the first resource;
wherein a bandwidth range of the first resource is less than or equal to a maximum bandwidth supported by the first type of terminal, and the maximum bandwidth supported by the first type of terminal is less than or equal to a first preset value.

**25.** A terminal, comprising:

a processor,
a memory for storing a computer program, wherein the computer program, when executed by the processor, causes the processor to perform the method of any one of claims 1 to 11.

**26.** A network side device, comprising:

a processor,
a memory for storing a computer program, wherein the computer program, when executed by the processor, causes the processor to perform the method of any one of claims 12 to 22.

27. A non-transitory computer-readable storage medium, storing a computer program, wherein the computer program, when executed by a processor, causes the processor to perform the method of any one of claims 1 to 11 or any one of claims 12 to 22.

**Larger than 20MHz**

UL Initial BWP

$$\left\lfloor \frac{r_{PUCCH}}{8} \right\rfloor = 0 \qquad \left\lfloor \frac{r_{PUCCH}}{8} \right\rfloor = 1$$

PUCCH1 hop1  PUCCH2 hop1  ...  PUCCH14 hop1  PUCCH15 hop1

PUCCH14 hop2  PUCCH15 hop2  PUCCH2 hop2  PUCCH1 hop2

**FIG. 1**

| Determining a first resource for a physical uplink control channel (PUCCH) transmission in case that the PUCCH is transmitted in an uplink (UL) initial bandwidth part (BWP), where a bandwidth range of the first resource is less than or equal to a maximum bandwidth supported by a first type of terminal, and the maximum bandwidth supported by the first type of terminal is less than or equal to a first preset value | ⌐101 |

| Transmitting the PUCCH on the first resource | ⌐102 |

**FIG. 2**

Transmitting first indication information to a first type of terminal, where the first indication information is used to indicate a first resource for physical uplink control channel (PUCCH) transmission in case that the first type of terminal transmits the PUCCH in an uplink (UL) initial bandwidth part (BWP) ⌐201

Receiving the PUCCH transmitted by the first type of terminal on the first resource ⌐202

**FIG. 3**

gNB

UE1

UE2

**FIG. 4**

$\Longleftarrow$ — — — — — Larger than 20MHz — — — — — $\Longrightarrow$

UL Initial BWP

$\left\lfloor \dfrac{r_{PUCCH}}{8} \right\rfloor = 0$

$\left\lfloor \dfrac{r_{PUCCH}}{8} \right\rfloor = 1$

PUCCH1  PUCCH2   ...   PUCCH14  PUCCH15

**FIG. 5**

Larger than 20MHz

UL Initial BWP

$$\left\lfloor \frac{r_{PUCCH}}{8} \right\rfloor = 0$$

$RB_{BWP}^{offset}$    $RB_{Redcap}^{offset}$

PUCC H1 | PUCC H2 | PUCC H1 (Red Cap) | PUCC H2 (Red Cap) | ...

PUCCH for general UE    PUCCH for RedCap UE

**FIG. 6**

UL Initial BWP

$N_{RedCap}^{PUCCH}$

$RB_{BWP}^{offset}$    $RB_{BWP}^{offset}$

$$\left\lfloor \frac{r_{PUCCH}}{8} \right\rfloor = 0$$    $$\left\lfloor \frac{r_{PUCCH}}{8} \right\rfloor = 1$$

PUCC H1 hop1 | PUCC H2 hop1 | ... | PUCC H14 hop1 | PUCC H15 hop1

PUCC H14 hop2 | PUCC H15 hop2 | PUCC H2 hop2 | PUCC H1 hop2

**FIG. 7**

**FIG. 8**

**FIG. 9**

**FIG. 10**

**FIG. 11**

Apparatus for channel transmission

Determining module `11`

First transmitting module `12`

**FIG. 12**

Apparatus for channel transmission

Second transmitting module `21`

Receiving module `22`

**FIG. 13**

Processor `1410`

Memory `1420`

Bus interface

Transceiver `1400`

`1400`

**FIG. 14**

Processor — 1510

Memory — 1520

Bus interface

Transceiver — 1500

**FIG. 15**

## INTERNATIONAL SEARCH REPORT

| | | International application No. |
|---|---|---|
| | | **PCT/CN2021/125881** |

| | | |
|---|---|---|
| **A.** | **CLASSIFICATION OF SUBJECT MATTER** | |
| | H04W 72/04(2009.01)i | |
| | According to International Patent Classification (IPC) or to both national classification and IPC | |

| | | |
|---|---|---|
| **B.** | **FIELDS SEARCHED** | |

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

USTXT; VEN; WOTXT; EPTXT; 3GPP; CNABS; CNTXT; CNKI: physical uplink control channel, PUCCH, bandwidth part, BWP, initial, greater than, less than, equal to, gap, space, offset 物理上行控制信道, 带宽部分, 宽带部分, 初始, 大于, 小于, 等于, 间隙, 间隔, 偏移, 位移, 跳频

| **C.** | **DOCUMENTS CONSIDERED TO BE RELEVANT** | |
|---|---|---|
| Category* | Citation of document, with indication, where appropriate, of the relevant passages | Relevant to claim No. |
| X | CN 109600833 A (RESEARCH INSTITUTE OF CHINA MOBILE COMMUNICATIONS CORPORATION et al.) 09 April 2019 (2019-04-09) claims 29, 30, description paragraphs [0089]-[0107], and figures 4, 5 | 1, 2, 12, 13, 23-27 |
| Y | CN 109600833 A (RESEARCH INSTITUTE OF CHINA MOBILE COMMUNICATIONS CORPORATION et al.) 09 April 2019 (2019-04-09) claims 29, 30, description paragraphs [0089]-[0107], and figures 4, 5 | 3-6, 14-17 |
| Y | WO 2020208679 A1 (NTT DOCOMO INC.) 15 October 2020 (2020-10-15) description, paragraphs [0013]-[0040] and figure 2 | 3-6, 14-17 |
| A | WO 2020059721 A1 (SHARP K. K.) 26 March 2020 (2020-03-26) entire document | 1-27 |
| A | CN 109474375 A (VIVO COMMUNICATION TECHNOLOGY CO., LTD.) 15 March 2019 (2019-03-15) entire document | 1-27 |
| A | US 2019261353 A1 (QUALCOMM INCORPORATED) 22 August 2019 (2019-08-22) entire document | 1-27 |

| ☐ Further documents are listed in the continuation of Box C. | ☑ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2021** | **10 January 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/125881**

| Patent document cited in search report | | | Publication date (day/month/year) | Patent family member(s) | | | Publication date (day/month/year) |
|---|---|---|---|---|---|---|---|
| CN | 109600833 | A | 09 April 2019 | None | | | |
| WO | 2020208679 | A1 | 15 October 2020 | None | | | |
| WO | 2020059721 | A1 | 26 March 2020 | JP | 2020048155 | A | 26 March 2020 |
| | | | | CN | 112673694 | A | 16 April 2021 |
| CN | 109474375 | A | 15 March 2019 | None | | | |
| US | 2019261353 | A1 | 22 August 2019 | US | 10849110 | B2 | 24 November 2020 |
| | | | | TW | 201937888 | A | 16 September 2019 |
| | | | | WO | 2019160974 | A1 | 22 August 2019 |

Form PCT/ISA/210 (patent family annex) (January 2015)

**EP 4 240 080 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020112049917